(19) Europäisches Patentamt
European Patent Office
Office européen des brevets

(11) EP 2 202 000 A1

(12) **EUROPEAN PATENT APPLICATION**
published in accordance with Art. 153(4) EPC

(43) Date of publication:
**30.06.2010 Bulletin 2010/26**

(21) Application number: **08840097.3**

(22) Date of filing: **16.10.2008**

(51) Int Cl.:
***B01J 35/02*** *(2006.01)* ***B01J 21/06*** *(2006.01)*
***B01J 37/10*** *(2006.01)*

(86) International application number:
**PCT/JP2008/069174**

(87) International publication number:
**WO 2009/051271 (23.04.2009 Gazette 2009/17)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **16.10.2007 JP 2007269518**
**04.02.2008 JP 2008024479**
**09.07.2008 JP 2008178845**

(71) Applicant: **UBE Nitto Kasei Co., Ltd.**
**Tokyo 103-0006 (JP)**

(72) Inventors:
- **TANAKA, Naoki**
**Tokyo 103-0004 (JP)**
- **KITAGAWA, Takeshi**
**Tokyo 103-0004 (JP)**
- **SUEMATSU, Daisuke**
**Tokyo 103-0004 (JP)**
- **TAKAMI, Kazuyuki**
**Tokyo 103-0004 (JP)**

(74) Representative: **Albrecht, Thomas**
**Kraus & Weisert**
**Patent- und Rechtsanwälte**
**Thomas-Wimmer-Ring 15**
**80539 München (DE)**

# (54) PHOTOCATALYTIC FILM, METHOD FOR PRODUCTION OF PHOTOCATALYTIC FILM, ARTICLE, AND HYDROPHILIZATION METHOD

(57) A photocatalyst film of which at least one main surface contains photo-semiconductor particles, said main surface being a surface that becomes hydrophilic by irradiation with light, wherein the hydrophilization speed thereof when it is irradiated with light having a half-value width of 15 nm or less after kept in a dark place is less than 2 (l/deg/min/$10^5$) in an irradiated-light wavelength region of 370 nm or more and is 2 (l/deg/min/$10^5$) or more at least partly in an irradiated-light wavelength region of 300 to 360 nm.

## Description

Technical Field

This invention relates to a photocatalyst film, a process for producing a photocatalyst film, an article and a method of hydrophilization. More specifically, this invention relates to a novel photocatalyst film that exhibits optically excited super-hydrophilicity under the irradiation with sunlight without applying any special treatment to a titanium oxide surface but that exhibits almost no decomposing activity, a process for efficiently producing the above photocatalyst film, an article having the above photocatalyst film on its surface and a method for hydrophilization with the above article.

Technical Background

When a photocatalyst is irradiated with energy of its band gap or higher, generally, it is excited to generate electrons in a conduction band, and holes are generated in a valence band. And, it is known that the electrons generated by the exciting reduce surface oxygen to generate super oxide anions ($\cdot O^{2-}$), that the holes oxidize surface hydroxyl groups to generate hydroxy radicals ($\cdot OH$), and that these reactive activated oxygen species exhibit a strong oxidation-decomposing function and highly efficiently decompose organic substances adhering to the photocatalyst film surface.
It has come under review to apply the above functions of the photocatalyst, for example, to deodorization, antifouling, antibacterial protection and sterilization and further to decomposition and removal of those various substances in waste water or waste gas which are problems to cause environmental pollution.
As another function of the photocatalyst, further, it is also known that a photocatalyst film surface exhibits super-hydrophilicity in which the contact angle thereof to water is 10˚ or less when the photocatalyst is optically excited, as is disclosed, for example, in International Patent Publication No. 96/29375. It has come under review to use a photocatalyst film as films on sound insulation walls along an expressway, road reflector mirrors, various reflectors, street lamps, body coatings, side-view mirrors or windshields of vehicles including automobiles, construction materials including windows, road traffic signs, roadside advertizing displays, freezing/cold storage showcases, various lenses, sensors, etc., for the purpose of imparting them, for example, with an anti-fogging property, a drip-proof property, an anti-fouling property, a frost-preventing property or a snow-sliding property by utilizing the above super-hydrophilicity of the photocatalyst.
As described above, many photocatalysts are so far known, and titanium oxide is one of their typical examples. Besides an amorphous type, titanium oxide has three typical crystal systems of anatase, rutile and brookite types, and it exhibits photocatalytic activity when it has any one these three crystal systems. It is well known that it exhibits not only a capability to decompose organic materials but also super-hyrophilicity. It is generally known that an anatase type exhibits the highest activity.
Generally, the above anatase type titanium oxide can be obtained through the heat treatment of a hydrolysis condensate obtained by a sol-gel method using, as a starting material, an organic titanium compound such as titanium alkoxide, etc., or amorphous titanium obtained from an oxide hydrate, etc., of an inorganic titanium compound salt such as titanium tetrachloride, titanyl sulfate, etc. Since, however, it generally requires heat-treatment at a high temperature of 400˚C or higher, a high cost is inevitable, and it involves many problems that it is difficult to form a film on a substrate having poor heat resistance, and the like.
Therefore, various methods for obtaining highly active anatase type titanium oxide at relatively low temperatures have been attempted and disclosed so far.
For example, there has been proposed a method in which, when a titanium oxide film is generated on a substrate by a physical film-forming means such as sputtering, vacuum vapor deposition, etc., water vapor is introduced to have many hydroxyl groups contained in amorphous titanium oxide, whereby the mobility of atoms in the titanium oxide structure is increased and the crystallization by subsequent heat treatment is facilitated (e.g., see JP 2000-345320A). By this method, the crystallization temperatures can be decreased to approximately 200˚C.
Further, there has been proposed a method in which a gel film containing a composite metal oxide or hydroxide containing a titanium compound and silicon alkoxide at a predetermined molar ratio is formed from a solution containing silicon alkoxide and a hydrolyzable titanium compound, and then it is brought into contact with hot water at 100˚C or lower to precipitate a titania microcrystal having a crystal diameter of approximately several 10 to 100 nm and coming under anatase (e.g., see JP 2002-97013A).
According to the above method, it can be thought that anatase type titanium oxide can be formed by forming an amorphous titanium oxide film directly on a material having low heat resistance such as a plastic substrate and then carrying out the subsequent low-temperatures heat-treatment step. As clearly described in the gazette thereof, however, the anatase type titanium oxide obtained by the above method not only exhibits the optically excited super hydrophilicity but also exhibits the optically excited high activity of decomposing an organic substance like a general anatase type titanium oxide. When it is formed directly on a plastic substrate, etc., therefore, the substrate is corroded in a short period

of time due to its high activity of decomposing an organic substance, and it is easily assumed that the substrate is degraded in properties and that the photocatalytic function decreases since the photocatalyst film comes off. The above methods hence require the formation of a separate activity-blocking layer together with the anatase type titanium oxide film, and when they are compared, for example, with the method of applying a photocatalyst coating agent that is prepared by dispersing anatase type titanium oxide fine particles in an inorganic binder and that is curable at room temperature, no definite advantage has been found.

For a method of applying anatase type titanium oxide directly on an organic substrate such as a plastic substrate, for example, there is known a self-alignment photocatalyst coating agent that is obtained by modifying an anatase type titanium oxide surface with a fluorine-containing silane coupling agent and thereby decreasing the surface energy of anatase type titanium oxide fine particles to decrease the interaction thereof with a binder component so that they are caused to float up (be locally deposited) on a coating film surface (see JP 2005-131640A). Further, there has been also proposed a photocatalyst material having the form of a muskmelon obtained by the procedures of coating a titanium oxide surface with an inorganic material inert as a photocatalyst and providing it with numerous pores (see Japanese Patent No. 3484470).

It is thought that since these can be kept from directly coming into contact with an organic substrate, they can be applied directly to an organic substrate. However, all of these require complicated surface treatment for preventing the high oxidizing power of anatase type titanium oxide from exerting an influence on a substrate. Further, these involve many restrictions that a thickness of a micron order is required due to the local deposition of titanium oxide on a surface, and that titanium oxide fine particles per se have to be only those having a diameter of several microns for preparation of a coating film.

Disclosure of the Invention

Problems to be Solved by the Invention

Under the circumstances, it is an object of this invention to provide a novel photocatalyst film that requires no special treatment of a titanium oxide surface or no special intermediate layer to be formed between a substrate and itself, and that exhibits optically excited super-hydrophilicity under the irradiation with sunlight but has the suppressed activity of decomposing an organic material. Further, it is another object of this invention to provide a process for efficiently producing the above photocatalyst film, an article having the above photocatalyst film on its surface and a method of hydrophilization with the above article.

Means to Solve the Problems

For achieving the above object, the present inventors have made diligent studies, and as a result, it has been found that it is not true that the oxidation-decomposing function and optically excited super-hydrophilic phenomenon of the photocatalyst are phenomena common to all of photo-semiconductors, but that there are necessary individual conditions that are to be satisfied for each.

That is, for a photocatalyst film's having an oxidation-decomposing function, a valence band is required to have oxidizing power sufficient for decomposing an organic substance, and at the same time a conduction band is required to have reducing power sufficient for reducing air, water, etc. For having the above oxidizing and reducing powers, a photocatalyst constituting a film is required to have a proper band gap (Due to a difference in this band gap, the oxidation-decomposing properties of titanium oxide are that an anatase type has high activity and that a rutile type has low activity).

On the other hand, the reason for the optically excited super-hydrophilicity of a photocatalyst film is not necessarily clear, while it is thinkable that holes generated by optical absorption are trapped in lattice oxygen so that they break a bond between a metal atom and an oxygen atom and attract the coordination of a hydroxyl group. For that purpose, the valence band is not only required to be formed of an electron orbit of an oxygen atom, but is also required to have an energy level having oxidizing power sufficient for decomposing air, water or some organic material, and the conduction band is required to have sufficient reducing power with which air, water, etc., can be reduced. For attaining the above oxidizing and reducing powers, it is also thought that a photocatalyst constituting a film is required to have a proper band gap.

Having had these findings, the present inventors have made further studies, and it has been found that the oxidation-decomposing capability of a photocatalyst film improves in proportion to the quantity of light (number of photons), but that the optically induced super-hydrophilicity is materialized under the irradiation with predetermined quantity or more of light (number of photons).

On the basis of these findings, the present inventors have made still further studies, and as a result, they have come to have an idea that when a wavelength region having light quantity in which optically excited super-hydrophilicity is exhibited but the activity of decomposing an organic material is suppressed is selected from the wavelength region

of sunlight, and when there is used a photocatalyst having a band gap of which the energy value is in agreement with the energy value of light having the largest wavelength in the selected wavelength region, there can be obtained a novel photocatalyst film that exhibits optically excited super-hydrophilicity under the irradiation with sunlight but is suppressed in the activity of decomposing an organic material.

The present inventors have found that a photocatalyst film of which at least one main surface contains photo-semiconductor particles, said main surface having a hydrophilization speed of less than 2 ($1/deg/min/10^5$) in an irradiated-light wavelength region of 370 nm or more and 2 ($1/deg/min/10^5$) or more at least partly in an irradiated-light wavelength region of 300 to 360 nm when it is irradiated with light having a half-value width of 15 nm or less after held in a dark place, a photocatalyst film of which at least one main surface contains, as a photo-semiconductor crystallization product, crystalline titanium oxide having a crystal diameter in the range of 1 to 10 nm, or a photocatalyst film of which at least one main surface contains, as a photo-semiconductor crystallization product, photo-semiconductor nano-tubes having a tube thickness in the range of 1 to 10 nm exhibits optically excited super-hydrophilicity under the irradiation with sunlight, but exhibits almost no activity of decomposing an organic material, and on the basis of this finding, this invention has been completed.

That is, this invention provides

(1) a photocatalyst film of which at least one main surface contains photo-semiconductor crystallization product, said main surface being to become hydrophilic by irradiation with light,
wherein the hydrophilization speed thereof when it is irradiated with light having a half-value width of 15 nm or less after held in a dark place is less than 2 ($1/deg/min/10^5$) in an irradiated-light wavelength region of 370 nm or more and is 2 ($1/deg/min/10^5$) or more at least partly in an irradiated-light wavelength region of 300 to 360 nm (to be referred to as "photocatalyst film I of this invention" hereinafter),
(2) a photocatalyst film of which at least one main surface contains, as a photo-semiconductor crystallization product, photo-semiconductor particles having a crystal diameter in the range of 1 to 10 nm (to be referred to as "photocatalyst film II of this invention" hereinafter),
(3) a photocatalyst film as recited in the above (1) or (2), wherein said photo-semiconductor crystallization product contains crystalline titanium oxide,
(4) a photocatalyst film as recited in the above (3),
wherein the content of the crystalline titanium oxide having a crystal diameter in the range of 1 to 10 nm in the total crystalline titanium oxide is 90 % or more,
(5) a photocatalyst film as recited in the above (3) or (4), wherein the content of the crystalline titanium oxide having a crystal diameter in the range of 1 to 10 nm in the total crystalline titanium oxide is 100 %,
(6) a photocatalyst film as recited in any one of the above (3) to (5), wherein the content of the crystalline titanium oxide having a crystal diameter in the range of 1 to 10 nm in the at least one main surface is 3 % or more,
(7) a photocatalyst film as recited in any one of the above (3) to (5), wherein the content of the crystalline titanium oxide having a crystal diameter in the range of 1 to 10 nm in the at least one main surface is 5 % or more,
(8) a photocatalyst film as recited in any one of the above (3) to (7), which has a portion where at least five crystal grains exist when its cross section in the range of 50 nm x 50 nm is observed through a transmission electron microscope,
(9) a photocatalyst film as recited in any one of the above (3) to (8), wherein the at least one main surface contains crystalline titanium oxide and amorphous titanium oxide which exist together,
(10) a photocatalyst film as recited in any one of the above (3) to (9), wherein said crystalline titanium oxide is dispersed in the amorphous titanium oxide,
(11) a photocatalyst film as recited in any one of the above (3) to (10), which has a thickness of 1 μm or less,
(12) a photocatalyst film as recited in any one of the above (1) to (11), wherein said main surface has a contact angle of less than 20 degrees to water when the photocatalyst film is irradiated with sunlight,
(13) a photocatalyst film as recited in any one of the above (1) to (12), wherein a decomposing speed of methylene blue under the irradiation with artificial sunshine of 3 $mW/cm^2$ is 0.1 or less in terms of an absorbance-decreasing speed $\Delta$ABS/min at a maximum absorption wavelength of the methylene blue applied thereon,
(14) a photocatalyst film as recited in any one of the above (1) to (13), wherein said photo-semiconductor crystallization product is present in a hydrolysis condensate of titanium alkoxide, and said titanium alkoxide has the form of a composite in which the titanium alkoxide forms a hydrolysis condensate with an organic polymer compound and the content thereof is continuously changed in the depth direction from a surface.
(15) a photocatalyst film as recited in any one of the above (1) to (14), which further contains fine particles of a metal compound other than the photo-semiconductor crystallization product,
(16) a photocatalyst film as recited in the above (15),
wherein the fine particles of a metal compound other than the photo-semiconductor crystallization product are silica fine particles,

(17) a photocatalyst film as recited in any one of the above (1) to (16), which further contains at least one metal compound selected from an inorganic metal salt, an organic metal salt and an alkoxide of metal other than titanium and silicon,
(18) a photocatalyst film as recited in the above (17),
wherein the metal compound is aluminum nitrate,
(19) a process for producing a photocatalyst film recited in any one of the above (3) to (18), which comprises heat-treating an amorphous titanium oxide film at a temperatures of 100°C or lower in the presence of water,
(20) a process as recited in the above (19), wherein said amorphous titanium oxide film is formed by applying only once a coating agent containing a composite that is a hydrolysis condensation product of titanium alkoxide and an organic polymer compound, whereby the content of the hydrolysis condensation product of titanium alkoxide is continuously changed in the depth direction from a surface,
(21) a photocatalyst film of which at least one main surface contains, as a photo-semiconductor crystallization product, photo-semiconductor nano-tubes having a tube thickness in the range of 1 to 10 nm (to be referred to as "photocatalyst film II of this invention" hereinafter),
(22) a photocatalyst film as recited in the above (1) or (21), wherein said photo-semiconductor crystallization product contains crystalline titanium oxide nano-tubes,
(23) a photocatalyst film as recited in the above (21) or (22), which further contains a binder component,
(24) an article having a photocatalyst film recited in any one of the above (1) to (18) and (21) to (23) or a photocatalyst film obtained by a process recited in any one of the above (19) and (20) on a surface of a substrate,
(25) an article as recited in the above (24), wherein said substrate is an organic substrate,
(26) an article as recited in the above (24) or (25), which further has an functional film having a thickness of 500 nm or less on a surface thereof,
(27) an article as recited in the above (26), wherein said functional film contains silica, and
(28) a method of hydrophilization, which comprises using an article recited in any one of the above (24) to (27) under irradiation with sunlight.

Effect of the Invention

According to this invention, there can be provided a photocatalyst film that requires no special treatment of a titanium oxide surface or a special intermediate layer to be formed between a substrate and itself, and that exhibits optically excited super-hydrophilicity under the irradiation with sunlight but has the suppressed activity of decomposing an organic material, a process for efficiently producing the above photocatalyst film, an article having the above photocatalyst film on its surface and a method of hydrophilization with the above article.

Brief Explanation of Drawings

Fig. 1 shows power-function approximate lines between hydrophilization speeds obtained by measuring photocatalyst films by irradiation with light having a wavelength of 300 nm or more and main wavelengths of the irradiation light.
Fig. 2 shows a transmission electron microscope photograph of a sample obtained in Example 1 and a selected area diffraction image.
Fig. 3 is a graph showing hydrophilization behaviors of a sample obtained in Example 1 under irradiation with ultraviolet rays.
Fig. 4 is a graph showing hydrophilization behaviors of a sample obtained in Example 1 under irradiation with ultraviolet rays.
Fig. 5 is a graph showing hydrophilization behaviors of a sample obtained in Example 1 under irradiation with ultraviolet rays.
Fig. 6 is a graph showing hydrophilization behaviors of a sample obtained in Example 1 under irradiation with ultraviolet rays.
Fig. 7 is a graph showing hydrophilization behaviors of a sample obtained in Example 1 under irradiation with ultraviolet rays.
Fig. 8 shows a transmission electron microscope photograph of a sample obtained in Example 2 and a selected area diffraction image.
Fig. 9 is a graph showing hydrophilization behaviors of a sample obtained in Example 2 under irradiation with ultraviolet rays.
Fig. 10 is a graph showing hydrophilization behaviors of a sample obtained in Example 2 under irradiation with ultraviolet rays.

Fig. 11 is a graph showing hydrophilization behaviors of a sample obtained in Example 2 under irradiation with ultraviolet rays.

Fig. 12 is a graph showing hydrophilization behaviors of a sample obtained in Example 2 under irradiation with ultraviolet rays.

Fig. 13 shows a transmission electron microscope photograph of a sample obtained in Example 3 and a selected area diffraction image.

Fig. 14 is a graph showing hydrophilization behaviors of a sample obtained in Example 3 under irradiation with ultraviolet rays.

Fig. 15 shows a transmission electron microscope photograph of a sample obtained in Example 4 and a selected area diffraction image.

Fig. 16 is a graph showing hydrophilization behaviors of a sample obtained in Comparative Example 1 under irradiation with ultraviolet rays.

Fig. 17 is a graph showing hydrophilization behaviors of a sample obtained in Comparative Example 1 under irradiation with ultraviolet rays.

Fig. 18 is a graph showing hydrophilization behaviors of a sample obtained in Example 4 under irradiation with ultraviolet rays.

Fig. 19 is a graph showing hydrophilization behaviors of a sample obtained in Example 4 under irradiation with ultraviolet rays.

Fig. 20 shows a transmission electron microscope photograph of a sample obtained in Example 5 and a selected area diffraction image.

Fig. 21 is a graph showing hydrophilization behaviors of a sample obtained in Example 5 under irradiation with ultraviolet rays.

Fig. 22 is a graph showing hydrophilization behaviors of a sample obtained in Example 5 under irradiation with ultraviolet rays.

Fig. 23 is a graph showing hydrophilization behaviors of a sample obtained in Example 5 under irradiation with ultraviolet rays.

Fig. 24 is a graph showing XPS depth profile results obtained in Example 5.

Fig. 25 is a graph showing hydrophilization behaviors of a sample obtained in Comparative Example 2 under irradiation with ultraviolet rays.

Fig. 26 is a graph showing hydrophilization behaviors of a sample obtained in Comparative Example 2 under irradiation with ultraviolet rays.

Fig. 27 is a graph showing hydrophilization behaviors of a sample obtained in Comparative Example 3 under irradiation with ultraviolet rays.

Fig. 28 is a graph showing a change of a contact angle to pure water with time under irradiation with artificial sunshine with respect to a thin film obtained in Example 6.

Preferred Embodiments of the Invention

The photocatalyst film I of this invention will be explained first.

The photocatalyst film of this invention is a photocatalyst film of which at least one main surface contains a photo-semiconductor crystallization product, said main surface being to become hydrophilic by irradiation with light, wherein the hydrophilization speed thereof when it is irradiated with light having a half-value width of 15 nm or less is less than 2 ($1/deg/min/10^5$) in an irradiated-light wavelength region of 370 nm or more and is 2 ($1/deg/min/10^5$) or more at least partly in an irradiated-light wavelength region of 300 to 360 nm.

The photocatalyst film of this invention is a photocatalyst film of which at least one main surface contains a photo-semiconductor crystallization product,
wherein the above main surface becomes hydrophilic by irradiation with light. And, it is characteristically designed to exhibit the hydrophilization by responding to only wavelengths in a specific region out of sunlight that reaches the ground, which specific region is on a short-wavelength end in which the radiation illuminance relative to the entire sunlight is small.

The photo-semiconductor crystallization product that constitutes the photocatalyst film of this invention is preferably a photo-semiconductor crystallization product of which the above hydrophilization speed is less than 2 ($1/deg/min/10^5$) in a region of 370 nm or more, more preferably a photo-semiconductor crystallization product of which the above hydrophilization speed is less than 2 ($1/deg/min/10^5$) in a region of 365 nm or more. Further, a photo-semiconductor crystallization product of which the above hydrophilization speed is 2 ($1/deg/min/10^5$) or more in a region of 300 to 360 nm is preferred, and a photo-semiconductor crystallization product of which the above hydrophilization speed is 2 ($1/deg/min/10^5$) or more in a region of 300 to 355 nm is more preferred.

The above hydrophilization speed refers to a value obtained by irradiation with any light having a specific wavelength of a half-value width of 15 nm or less such that an illuminance of $3.7 \times 10^{15}$ ($quanta/cm^2/s$) calculated as

the number of photons of applied main wavelength (maximum radiation wavelength) is attained.

In the photo-semiconductor particles for constituting the photocatalyst film of this invention, the above hydrophilization speed is less than 2 (1/deg/min/$10^5$) in a region of irradiation light wavelength of 370 nm or more, and it has low responsiveness to light having a wavelength of 370 nm or more, so that its activity of decomposing an organic substance can be inhibited. Further, the hydrophilization speed is 2 (1/deg/min/$10^5$) or more at least partly in a region of irradiation light wavelength of 300 to 360 nm, and it has high responsiveness to light having a wavelength of 300 to 360 nm, so that it can effectively catch wavelength that exhibits the hydrophilization out of sunlight (300 nm or more) that reaches the ground.

In the photo-semiconductor crystallization product contained in the photocatalyst film of this invention, the activity of decomposing an organic substance at a wavelength of 300 to 360 nm is as small as no practical problem is caused, and the degree of the decomposing activity tends to decrease as the upper limit of the above wavelength region comes near to a short wavelength side, while the hydrophilization speed similarly decreases. The upper-limit wavelength responsive to light is preferably so designed as to be an optimum wavelength as required depending upon a use, etc.

As shown in Fig. 1, when wavelengths at which the hydrophilization speed became 2 (1/deg/min/$10^5$) were determined in power-function approximate lines between hydrophilization speeds obtained by measuring photocatalyst films by irradiation with light having a wavelength of 300 nm or more and main wavelengths of the irradiation light, the above wavelengths with regard to a photocatalyst film containing a commercially available anatase type titanium oxide (corresponding to a photocatalyst film obtained in Comparative Example 2 to be described later) and a photocatalyst film containing a rutile type titanium oxide (corresponding to a photocatalyst film obtained in Comparative Example 3 to be described later) were in the vicinity of 376 nm and 405 nm, respectively. These are nearly in agreement with generally known absorption edges.

On the other hand, as shown in Fig. 1, in a photocatalyst film indicated by A in Fig. 1 (corresponding to a photocatalyst film of SWM900h obtained in Example 5 to be described later) and a photocatalyst film indicated by B in Fig. 1 (corresponding to a photocatalyst film of SWM900h obtained in Example 2 to be described later) corresponding to the photocatalyst film of this invention, the wavelengths at which the above hydrophilization speed become 2 (1/deg/min/$10^5$) are 341 nm and 365 nm, respectively, and the absorption (response) to light having a wavelength of 370 nm or more is nil or very small, so that it can be understood that they do not exhibit the activity of decomposing an organic material in this region which activity is one of photocatalytic performances. Further, since these photocatalyst films have a region in which the hydrophilization speed becomes 2 (1/deg/min/$10^5$) or more at a wavelength of 300 to 360 nm, it can be understood that they exhibit sufficient hydrophilicity.

It is thought that the commercially available anatase type titanium oxide and rutile type titanium oxide easily exhibit photo decomposition properties together with hydrophilicity since the wavelength region of 370 nm or more at which they exhibit photo-absorption as described above has high relative radiation illuminance and ensures that a wide light wavelength region of sunlight can be used as compared with the region of less than 370 nm. Since, however, the photocatalyst film of this invention exhibits almost no photo-absorption in a region of 370 nm or more and has a hydrophilization speed of 2 (1/deg/min/$10^5$) or more in the region of 300 to 360 nm, it is thought that its activity of decomposing an organic material is inhibited under sunlight (300 nm or more) that reaches the ground while it exhibits optically excited super hydrophilicity.

The photocatalyst film I of this invention preferably has the properties of the photocatalyst film II, photocatalyst film III or photocatalyst film IV to be explained below.

The photocatalyst film II of this invention is characteristically a photocatalyst film of which one main surface contains, as a photo-semiconductor crystallization product, photo-semiconductor particles having a crystal diameter in the range of 1 to 10 nm.

The photo-semiconductor material used therefor is preferably a photo-semiconductor that has a band gap of 3.4 eV or less and that is included in a semiconductor in which in particular the valance band is formed of an electron orbit of oxygen and the conduction band of the band gap has sufficient reducing power for reducing air, water, etc., while it is at an energy level at which oxidizing power sufficient for decomposing air, water or some organic material, such as titanium oxide, tungsten oxide, zinc oxide, etc. Of these photo-semiconductors, titanium oxide is the most preferred photo-semiconductor material.

The crystalline titania contained in the photocatalyst film II of this invention has a crystal diameter in the range of 1 to 10 nm, and in particular crystalline titania having a crystal diameter in the range of 3 to 10 nm is preferred.

Conventionally, titanium oxide having an average particle diameter of about 20 nm is known as a photo-semiconductor of which the average particle diameter is mall, and it is known that a photo-semiconductor formed of such titanium oxide is excellent in decomposition/removal of various substances and supper-hydrophilicity. As described above, however, these general photo-semiconductors have had a technical problem that since they are excellent in decomposition capability under irradiation with sunlight, they also corrode an organic substrate when they are applied directly to them.

The present inventors have made diligent studies for overcoming the above technical problem, and have found

that a photocatalyst film of which at least one main surface contains crystalline titanium oxide having a crystal diameter in the range of 1 to 10 nm exhibits optically excited super hydrophilicity but does not almost exhibit the above decomposition capability under irradiation with sunlight, and this invention has been accordingly completed.

According to studies made by the present inventors, it has been confirmed that crystalline titanium oxide having a smaller crystal diameter responds to ultraviolet rays on a shorter wavelength side, and it has been found that for obtaining a response on a wavelength region shorter than that at which the above conventional titanium oxide responds, it is sufficient to use crystalline titanium oxide having a crystal diameter of 10 nm or less.

Further, the wavelength of ultraviolet ray of sunlight that reaches the ground is approximately 300 nm or more. Studies of a use under irradiation with sunlight such as outdoor use have been hence made, and as a result, it has been found that the lower limit of crystal diameter of crystalline titanium oxide that can respond to ultraviolet ray in a short wavelength region of 300 nm or more is 1 nm.

Meanwhile, the optically excited super hydrophilicity is a phenomenon that takes place in an outermost surface layer of a photo-semiconductor, and besides this, it is thought to take place in a manner in which holes generated by optical absorption are trapped in lattice oxygen of a photo-semiconductor surface so that they break a bond between Ti and O and attract the coordination of a hydroxyl group.

Since the optically excited super hydrophilicity is a phenomenon that is exhibited by adsorption of a plurality of layers of water in air to a modified portion of a photo-semiconductor surface so long as light exists in such a quantity sufficient for modifying only the photo-semiconductor surface, the present inventors have had an idea that the quantity of light can be smaller than that required for the exhibition of decomposing activity.

That is, having recognized that a slight quantity of light is sufficient for super-hydrophilization, the present inventors have arrived at an idea in this invention that a photocatalyst substance that does not exhibit decomposing activity but exhibits only super-hydrophilicity under irradiation with sunlight can be obtained by using a photo-semiconductor that responds only in a wavelength region of slight light of sunlight that shines on the ground rather than in the absorption region of generally employed photocatalyst substances that respond to ultraviolet ray.

On the basis of a combination with the above finding of a relationship between the crystal diameter and the wavelength of optical response, the photocatalyst film II of this invention has been arrived at.

The photocatalyst film II of this invention is preferably a photocatalyst film having the properties of the photocatalyst film II of this invention as well.

The photocatalyst film II of this invention is preferably a photocatalyst film of which the photo-semiconductor crystallization product contains crystalline titanium oxide.

The crystalline titanium oxide may be crystalline titanium oxide of any one of anatase, rutile and brookite types, or may be the above crystalline titanium oxide containing a crystal defect or a crystal strain. Otherwise, it may be a combination of two or more of these crystalline titanium oxides.

In the photocatalyst film II of this invention, the content of crystalline titanium oxide having a crystal diameter in the range of 1 to 10 nm in the total crystalline titanium oxides is preferably 90 % or more, more preferably 100 %.

In the photocatalyst film II of this invention, the crystal diameter refers to a maximum length of crystal streaks of crystal grains when a cross section of crystalline titanium oxide is observed through a transmission electron microscope. The content of crystalline titanium oxide having a crystal diameter in the range of 1 to 10 nm is determined by calculating a ratio of the number of crystals having a crystal diameter in the range of 1 to 10 nm to the total number of crystals when a cross section of a photocatalyst film is observed through a transmission electron microscope.

In the photocatalyst film II of this invention, further, the content of crystalline titanium oxide having a crystal diameter in the range of 1 to 10 nm in at least one main surface is preferably 3 % or more, more preferably 5 % or more.

When a cross section of the photocatalyst film II of this invention is observed through a transmission electron microscope, the number of crystal grains per a 50 nm x 50 nm area is preferably 5 or more, more preferably 10 or more. When the number of crystal grains in the above observation area is 5 or more, a photocatalyst film obtained has the function of imparting with super hydrophilicity and has decomposing activity suppressed.

The photocatalyst film II of this invention is preferably a photocatalyst film in which crystalline titanium oxide is dispersed in amorphous titanium oxide. In this case, it is preferably a photocatalyst film in which islands of crystalline titanium oxide are dotted in the sea of amorphous titanium oxide, for example, when observed through a transmission electron microscope.

In the photocatalyst film II of this invention, both of the main surfaces thereof may contain crystalline titanium oxide as a main component, or one main surface thereof may contain crystalline titanium oxide as a main component.

In this case, when the photocatalyst film II is used in a manner that the surface containing crystalline titanium oxide as a main component is exposed to an outside, it can be used as a photocatalyst film.

The photocatalyst film II of this invention is preferably a film that contains amorphous titanium oxide in which crystalline titanium oxide is dispersed and that has the components-gradient property which is a change of the amorphous titanium oxide content in the film thickness direction when the film undergoes cracking due to a difference between the linear expansion coefficient of an organic substrate and that of the film or poor adhesion when a material for the film is

applied to the substrate. In this case, the photocatalyst film II is used in a manner that the surface containing crystalline titanium oxide as a main component is exposed to an outside, and the main surface on the opposite side is caused to contain an organic component as a main component, whereby not only the adhesion to various organic substrates can be improved, but also a strain that takes place in the film due to a difference in linear expansion coefficient can be alleviated, and a film that is stable for a long term can be formed even on each organic substrate.

Although not specially limited, the thickness of the photocatalyst film II is preferably 1 μm or less, more preferably 0.01 to 1 μm, still more preferably 0.03 to 0.5 μm, particularly preferably 0.05 to 0.3 μm.

In the photocatalyst film II of this invention, its water contact angle under irradiation with sunlight is preferably 20 degrees or less, more preferably 10 degrees or less.

In the photocatalyst film II of this invention, further, its speed of decomposing methylene blue under irradiation with artificial sunshine of 3 $mW/cm^2$, as an absorbance decreasing speed (decomposing activity) ΔABS/min at a maximum absorption wavelength of applied methylene blue, is preferably 0.1 or less, more preferably 0.05 or less, still more preferably 0.01 or less, yet more preferably 0.0015 or less.

The above water contact angle and decomposition speed of methylene blue can be controlled, for example, by adjusting the crystal diameter and content of crystalline titanium oxide.

The methods for evaluations of the above contact angle with water and the activity of decomposing methylene blue will be described in detail later.

The photocatalyst film II of this invention is preferably a film in which the above photo-semiconductor crystallization product is present in a hydrolysis condensate of titanium alkoxide, and said titanium alkoxide have undergone a hydrolysis condensation together with an organic polymer compound to form a composite in which the content thereof is continuously changed in the direction from a surface to a depth.

Specific examples of the titanium alkoxide include titanium tetraalkoxides to be described later, and specific examples of the organic compound includes hydrolyzable metal-containing-group-possessing organic polymer compounds to be described later.

Further, the photocatalyst film II of this invention is preferably a photocatalyst film that further contains fine particles of a metal compound other than the photo-semiconductor crystallization product, and specific examples of the fine particles of a metal compound other than the photo-semiconductor fine particles are as will be described later, while silica fine particles are particularly preferred.

The photocatalyst film II of this invention is preferably a photocatalyst film that further contains at least one metal compound selected from an inorganic metal salt, an organic metal salt and an alkoxide of a metal other than titanium and silicon, and specific examples of the above metal compound are as described later, while aluminum nitrate is particularly preferred.

Preferably, the photocatalyst film II of this invention is produced by a process for producing a photocatalyst film, provided by this invention.

The production process of the photocatalyst film II of this invention will be explained below.

The process for producing a photocatalyst film, provided by this invention, comprises heat-treating an amorphous titanium oxide film at a temperature of 100˚C or lower in the presence of water.

In the production process of this invention, preferably, a photocatalyst is produced under an environment having a temperature of 100˚C or lower and a relative humidity of 5 % or more.

In the process for producing the photocatalyst film II of this invention, preferably, the photocatalyst film II is produced under the above environment and further in the presence of light having wavelength in an arbitrary region selected from a wavelength region of 250 to 1,200 nm and containing ultraviolet light. In this case, as one of optimum production conditions, the above temperature is adjusted to 30 to 60˚C and the above relative humidity is adjusted to 50 to 80 % under irradiation with light having a radiation illuminance of 5 to 400 $W/m^2$.

The light having wavelength in an arbitrary region selected from a wavelength region of 250 to 1,200 nm and containing ultraviolet light is preferably light containing light in wavelength regions of 250 to 260 nm, 290 to 315 nm and 350 to 1,200 nm, and more preferably, it is applied under conditions including a radiation illuminance of 200 to 400 $W/m^2$.

In the process for producing the photocatalyst film II of this invention, preferably, water is sprayed at least once. A system or an appliance for use in the production process of this invention is not specially limited, while typical examples thereof not only include various systems that provide a constant-temperature constant-humidity environment, but also include a carbon arc type sunshine weather meter, a xenon weather meter, a metalling weather meter, a dewpanel weather meter, etc.

The titanium oxide compound in this invention can be also produced by exposure under an outdoor environment that provides conditions equivalent to the above conditions.

In the production process of this invention, the process for producing the photocatalyst film II of this invention includes

(I) a process of forming a film from a coating agent containing (A) titania sol obtained by hydrolysis-condensation

of titanium tetraalkoxide and treating the formed film under the above production conditions,

(II) a process of drying (A) titania sol obtained by hydrolysis-condensation of titanium tetraalkoxide to solidness to form a powder of amorphous titanium oxide, then kneading the powder with inorganic and/or organic binder(s) thereby to form a film and treating the thus-formed film under the above production conditions,

(III) a process of drying (A) titania sol obtained by hydrolysis-condensation of titanium tetraalkoxide to solidness to form a powder of amorphous titanium oxide, then treating the powder under the above production conditions to form a powder containing crystalline titanium oxide in this invention, and then kneading the powder with inorganic and/or organic binder(s) thereby to form a film, and the like.

In the preparation of titania sol obtained by hydrolysis-condensation of titanium tetraalkoxide as a component (A), titanium tetraalkoxide of which the alkoxyl groups have approximately 1 to 4 carbon atoms is used as a raw material. In the titanium tetraalkoxide, the four alkoxyl groups may be the same as, or may be different from, one another, while tetraalkoxide of which the alkoxyl groups are the same is preferably used from the viewpoint of easy availability. The above titanium tetraalkoxide includes titanium tetramethoxide, titanium tetraethoxide, titanium-n-propoxide, titanium tetraisopropoxide, titanium tetra-n-butoxide, titanium tetraisobutoxide, titanium tetra-sec-butoxide, titanium tetra-tert-butoxide, etc. These may be used singly or may be used in combination of two or more of them.

The above titanium tetraalkoxide is subjected to hydrolysis-condensation to prepare a titania sol solution. The above hydrolysis-condensing reaction of the titanium tetraalkoxide is preferably carried out by causing water to act on the titanium tetraalkoxide in an alcohol having 3 or more carbon atoms and having an ether oxygen as a solvent in the presence of an acidic catalyst.

The alcohol having 3 or more carbon atoms and having an ether oxygen includes solvents having interactions with titanium tetraalkoxide, such as cellosolve solvents including ethylene glycol monomethyl ether, ethylene glycol monoethyl ether, ethylene glycol monopropyl ether, ethylene glycol monobutyl ether, ethylene glycol mono-tert-butyl ether, etc., diethylene glycol monomethyl ether, diethylene glycol monoethyl ether, diethylene glycol monopropyl ether, diethylene glycol monobutyl ether, propylene glycol monomethyl ether, propylene glycol monoethyl ether, propylene glycol monopropyl ether, propylene glycol monobutyl ether, etc. Of these, cellosolve solvents having a strong interaction with titanium tetraalkoxide are preferred. These solvents may be used singly or may be used in combination with two or more of them.

When the above solvent having an interaction with titanium tetraalkoxide is used as a solvent, a titania sol obtained by hydrolysis-condensing reaction of titanium tetraalkoxide can be stabilized, and even when the condensing reaction is proceeded with, almost no gelation or formation of particles takes place.

The hydrolysis-condensing reaction of titanium tetraalkoxide is carried out by the use of the above alcohol in a molar amount 4 to 20 times, preferably 5 to 12 times, as large as that of titanium tetraalkoxide and water in a molar amount 0.5 times or more but less than 4 times, preferably 1 to 3.0 times, as large as that of titanium tetraalkoxide, in the presence of an acidic catalyst such as hydrochloric acid, sulfuric acid, nitric acid, etc., generally at a temperature in the range of 0 to 70˚C, preferably 20 to 50˚C. The acidic catalyst is used generally in a molar amount of 0.1 to 1.0 times, preferably 0.2 to 0.7 times, as large as that of titanium tetraalkoxide.

In the production process of this invention, the above amorphous titanium oxide film may be a film that is obtained from a coating agent containing titanium tetraalkoxide and an organic polymer compound and that has a components-gradient structure in which the above titanium tetraalkoxide has undergone hydrolysis-condensation with the organic polymer compound and the content thereof is continuously changed in the thickness direction from a film surface.

Further, the above amorphous titanium oxide film may be a film in which the content of a hydrolysis condensate of titanium alkoxide is continuously changed in the depth direction from a surface by only once applying a coating agent containing a composite material obtained by hydrolysis-condensation of titanium alkoxide and an organic polymer compound.

When the above amorphous titanium oxide film having a components-gradient structure is used, there can be obtained a photocatalyst film of which one main surface alone contains crystalline titanium oxide as a main component.

The above amorphous titanium oxide film having components-gradient structure can be formed, for example, from a coating agent containing (A) the above titania sol obtained by hydrolysis-condensation of titanium tetraalkoxide and (B) an organic polymer compound having in its molecule a metal-containing group capable of bonding to titanium oxide by hydrolysis (to be sometimes referred to as "hydrolyzable metal-containing group").

The above organic polymer compound having a hydrolyzable metal-containing group as a component (B) can be obtained, for example, by copolymerizing (a) an ethylenically unsaturated monomer having a hydrolyzable metal-containing group and (b) an ethylenically unsaturated monomer containing no metal.

The above ethylenically unsaturated monomer having a hydrolyzable metal-containing group as a component (B)(a) can be a monomer of the general formula (I),

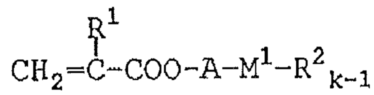 ...(I)

wherein $R^1$ is a hydrogen atom or methyl, A is an alkylene group, preferably an alkylene group having 1 to 4 carbon atoms, $R^2$ represents hydrolyzable groups or non-hydrolyzable groups provided that at least one of them is required to be a hydrolyzable group capable of chemically bonding to the component (A), and that when a plurality of $R^2$s are present, each $R^2$ may be the same as, or different from, other(s), $M^1$ is a metal atom including silicon, titanium, zirconium, indium, tin, aluminum, etc., and k is a valence of the metal atom represented by $M^1$.

In the above general formula (I), with respect to $R^2$, the hydrolyzable group capable of chemically bonding to the (A) component by hydrolysis includes, for example, alkoxyl, an isocyanate group, halogen atoms such as a chlorine atom, etc., an oxyhalogen group, an acethylacetonate group, hydroxyl, etc., and the non-hydrolyzable group that does not chemically bond to the (A) component preferably includes, for example, a lower alkyl group, etc.

The metal-containing group represented by $-M^1R^2_{k-1}$ in the general formula (I) includes, for example, trimethoxysilyl, triethoxysilyl, tri-n-propoxysillyl, triisopropoxysilyl, tri-n-butoxysilyl, triisobutoxysilyl, tri-sec-butoxysilyl, tri-tert-butoxysilyl, trichlorosilyl, dimethylmethoxysilyl, methyldimethoxysilyl, dimethylchlorosilyl, methyldichlorosilyl, triisocyanatosilyl, methyldiisocyanatosilyl, etc.; a trimethoxytitanium group, a triethoxytitanium group, a tri-n-propoxytitanium group, triisopropxytitanium group, tri-n-butoxytitanium group, a triisobutoxytitanium group, a tri-sec-butoxytitanium group, a tri-tert-butoxytitanium group, a trichlorotitanium group; a trimethoxyzirconium group, a triethoxyzirconium group, a tri-n-propoxyzirconium group, a triisopropoxyzirconium group, a tri-n-butroxyziroconium group, a triisobutoxyziroconium group, a tri-sec-butoxyzirconium group, a tri-tert-butoxyzirconium group, a trichlorozirconium group; a dimethoxyaluminum group, a diethoxyaluminum group, a di-n-propoxyaluminum group, a diisopropoxyaluminum group, a di-n-butoxyaluminum group, a diisobutoxyaluminum group, a di-sec-butoxyaluminum group, a di-tert-butoxyaluminum group, a trichloroaluminum group, etc.

These ethylenically unsaturated monomers included in the component (a) may be used singly or may be used in combination of two or more of them.

The ethylenically unsaturated monomer containing no metal as the above component (b) can be, for example, an ethylenically unsaturated monomer of the general formula (II),

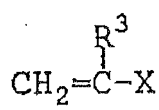 ...(II).

wherein $R^3$ is a hydrogen atom or methyl, and X is a monovalent organic group, preferably, an ethylenically unsaturated monomer of the general formula (II-a),

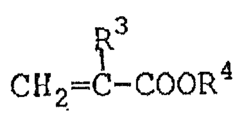 ...(II-a)

wherein $R^3$ is as defined above, and $R^4$ is a hydrocarbon group, or a mixture of an ethylenically unsaturated monomer of the general formula (II-a) with an optional ethylenically unsaturated monomer of the general formula (II-b) as an adhesion-improving agent,

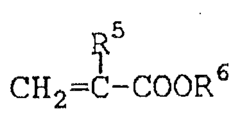 ...(II-b)

wherein $R^5$ is a hydrogen atom or methyl, and $R^6$ is a hydrocarbon group having an epoxy group, a halogen atom or

an ether bond.

In the ethylenically unsaturated monomer of the above general formula (II-a), the hydrocarbon group represented by $R^4$ preferably includes a linear or branched alkyl group having 1 to 10 carbon atoms, a cycloalkyl group having 3 to 10 carbon atoms, an aryl group having 6 to 10 carbon atoms and an aralkyl group having 7 to 10 carbon atoms. Examples of the alkyl group having 1 to 10 carbon atoms include methyl, ethyl, n-propyl, isopropyl, various butyls, pentyl, hexyl, octyl, decyl, etc. Examples of the cycloalkyl group having 3 to 10 carbon atoms include cyclopentyl, cyclohexyl, methylcyclohexyl, cyclooctyl, etc., examples of the aryl group having 6 to 10 carbon atoms include phenyl, tolyl, xylyl, naphthyl, methylnaphthyl, etc., and examples of the aralkyl group having 7 to 10 carbon atoms include benzyl, methylbenzyl, phenethyl, naphthylmethyl, etc.

Examples of the ethylenically unsaturated monomer of the above general formula (II-a) include methyl (meth) acrylate, ethyl (meth)acrylate, propyl (meth)acrylate, butyl (meth)acrylate, hexyl (meth)acrylate, 2-ethylhexyl (meth) acrylate, cyclohexyl (meth)acrylate, phenyl (meth)acrylate, benzyl (meth)acrylate, etc. These may be used singly or may be used in combination of two or more of them.

In the ethylenically unsaturated monomer of the above general formula (II-b), the hydrocarbon group having an epoxy group, a halogen atom or an ether bond, represented by $R^6$ preferably includes a linear or branched alkyl group having 1 to 10 carbon atoms, a cycloalkyl group having 3 to 10 carbon atoms, an aryl group having 6 to 10 carbon atoms and an aralkyl group having 7 to 10 carbon atoms.

The halogen atom as the above substituent is preferably a chlorine atom or a bromine atom. Specific examples of the above hydrocarbon group include those which are described as examples in the explanation of $R^4$ in the general formula (II-a).

Examples of the ethylenically unsaturated monomer of the above general formula (II-b) preferably include glycidyl (meth)acrylate, 3-glycidoxypropyl (meth)acrylate, 2-(3,4-epoxycyclohexyl)ethyl (meth)acrylate, 2-chloroethyl (meth)acrylate, 2-bromoethyl (meth)acrylate, etc.

As the ethylenically unsaturated monomer of the above general formula (II), besides these, there may be also used styrene, $\alpha$-methylstyrene, $\alpha$-acetoxystyrene, m-, o- or p-bromostyrene, m-, o- or p-chlorostyrene, m-, o- or p-vinylphenol, 1- or 2-vinylnaphthalene, etc., and there may be further used stabilizers having an ethylenically unsaturated group for polymerizable polymers, such as an antioxidant, an ultraviolet absorbent, a photostabilizer, etc., which have ethylenically unsaturated groups. These may be used singly or may be used in combination of two or more of them.

Further, when the ethylenically unsaturated monomer of the general formula (II-a) and the ethylenically unsaturated monomer of the general formula (II-b) are used in combination, preferably, the latter ethylenically unsaturated monomer is used in an amount of 1 to 100 mol% based on the former ethylenically unsaturated monomer.

The above ethylenically unsaturated monomer having a hydrolyzable metal-containing group, as a component (a), and the ethylenically unsaturated monomer containing no metal, as a component (b), are radical-copolymerized in the presence of a radical polymerization initiator, whereby an organic polymer compound having a hydrolyzable metal-containing group, as a component (B), is obtained.

In the production process of this invention, a coating liquid can be obtained by adjusting the thus-obtained titania sol solution as a component (A) or a mixture of the titania sol solution as a component (A) with a solution of the organic polymer compound having a hydrolyzable metal-containing group, as a component (B), in a proper polar solvent to a viscosity suitable for application. In this case, water and/or an acidic catalyst may be added to the above coating liquid as required.

When the above amorphous titanium oxide film has a components-gradient structure, metal compound fine particles other than the photo-semiconductor particles, preferably silica fine particles, may be incorporated into a coating agent for forming the film.

When the above components-gradient film contains silica fine particles, the resultant photocatalyst film not only has the function of improving the strength and hardness of the film, but also produces the effect of adjusting a refractive index and the effect of maintaining super-hydrophilicity performance when the film is stored in a dark place. Colloidal silica is preferred as the above silica fine particles.

The above colloidal silica is a product obtained by dispersing high-purity silicon dioxide ($SiO_2$) in water or an alcohol solvent and adjusting the dispersion to the form of colloid, and its average particle diameter is generally 1 to 200 nm, preferably in the range of 5 to 50 nm. In a hydrolysis condensate of silicon alkoxide, its reaction has not come to an end, so that it is easily eluted with water, and a photocatalyst film containing it is poor in water resistance. On the other hand, colloidal silica is fine particles whose reaction has come to an end, so that it is not easily eluted with water, and a photocatalyst film containing it is excellent in water resistance.

The coating agent to be used for forming a non-crystalline titanium oxide film having the above components-gradient structure may contain, as a substance for adjusting the crystal formation of the amorphous titanium oxide, at least one metal compound selected from an inorganic metal salt, an organic metal salt and an alkoxide of a metal other than titanium and silicon. Specific examples thereof include salts such as aluminum nitrate, aluminum acetate, aluminum sulfate, aluminum chloride, zirconium nitrate, zirconium acetate, zirconium sulfate, zirconium chloride, etc., hydrates of

these inorganic salts, aluminum chelates such as aluminum triacetylacetonate, etc., metal alkoxides such as tetra-n-propoxyzirconium, tetraethoxysilane, phenyltrimethoxysilane, etc., and hydrolysis products or condensates of these compounds. Of these, aluminum nitrate and hydrate thereof are particularly preferred. The above crystal formation adjusting substances may be used singly or may be used in combination of two or more of them.

When the above crystal formation adjusting substance is incorporated into the coating agent, the microcrystallite-forming behavior (e.g., crystal-forming speed, crystal growing speed, etc.) of titanium oxide in a photocatalyst film to be formed can be adjusted. Further, the time period up to the exhibition of super-hydrophilicity can be controlled depending upon an environment of use and performances demanded, and it further helps adjust the stability of a film such as the inhibition of a cracking caused by contracting.

In the production process of this invention, preferably, the coating film is formed by applying the above-obtained coating liquid on an organic substrate to obtain a dry coating film having a thickness of, generally, 0.01 to 1 μm, preferably 0.03 to 0.3 μm, by a known method such as a dip coating method, a spin coating method, a spray coating method, a bar coating method, a knife coating method, an roll coating method, a blade coating method, a die coating method, a gravure coating method, etc., and volatilizing a solvent.

Examples of the above organic substrate include substrates formed of an acrylic resin such as polymethyl methacrylate, etc., a styrene resin such as polystyrene, an ABS resin, etc., an olefin resin such as polyethylene, polypropylene, etc., a polyester resin such as polyethylene terephthalate, polyethylene naphthalate, etc., a polyamide resin such as 6-nylon, 6,6-nylon, etc., a polyvinyl chloride resin, a polycarbonate resin, a polyphenylene sulfide resin, a polyphenylene ether resin, a polyimide resin, a cellulose resin such as cellulose acetate, etc., and the like.

These organic substrates may be surface-treated by an oxidation method, a surface roughening method, etc., as required for further improving their adhesion to the components-gradient film of this invention. The above oxidation method includes, for example, corona discharge treatment, chromic acid treatment (wet method), flame treatment, hot air treatment, ozone/ultraviolet irradiation treatment, etc. Further, the surface roughening method includes, for example, a sand blasting method, a solvent treatment method, etc. These surface treatment methods are selected as required depending upon kinds of the substrates.

In this invention, further, the organic substrate includes substrates formed of materials other than an organic material, such as substrates formed of a metal material, a glass or ceramic material and other inorganic or metal material, each substrate having an organic coating film on the surface thereof.

In the production process of this invention, preferably, the thus-formed coating film is heat-treated generally at a temperature of 0 to 200°C, preferably 15 to 150°C, to form the amorphous titanium oxide film thereon.

When the amorphous titanium oxide film having a components-gradient structure is produced, for example, the formed film surface is cut by sputtering, and the content ratio of carbon atoms and titanium atoms in the film surface is measured by X-ray photoelectron spectroscopy, whereby the structure can be confirmed.

The photocatalyst film III of this invention will be explained below.

The photocatalyst film III of this invention is a photocatalyst film of which at least one main surface contains, as a photo-semiconductor crystallization product, photo-semiconductor nano-tubes having a tube thickness in the range of 1 to 10 nm.

The photo-semiconductor nano-tubes contained in the photocatalyst film III of this invention refer to nano-size tubular materials formed of a photo-semiconductor material, and as such nano-tubes, for example, titanium oxide nano-tubes described in JP 10-152323A, etc., are known.

The photo-semiconductor nano-tubes contained in the photocatalyst film III of this invention have a tube thickness in the range of 1 to 10 nm, and preferably have a tube thickness in the range of 3 to 6 nm. The tube diameter (diameter of cross-section of a tube including a hollow portion) and the tube length (length of a tube in the longitudinal direction) are not specially limited, while the tube diameter is preferably 5 to 80 nm, and the tube length is preferably approximately 5 to 1,000 nm.

In this invention, the tube thickness, the tube diameter and the tube length refer to a thickness, a diameter and a length found when photo-semiconductor nano-tubes are observed through a transmission electron microscope.

The material constituting the photo-semiconductor nano-tubes is preferably a photo-semiconductor that has a band gap of 3.4 eV or less and that is included in a semiconductor in which in particular the valance band of the band gap is formed of an electron orbit of oxygen and the conduction band of the band gap has sufficient reducing power for reducing air, water, etc., while it is at an energy level at which oxidizing power sufficient for decomposing air, water or some organic material.

The above photo-semiconductor material includes materials containing crystalline titanium oxide, crystalline tungsten oxide, crystalline zinc oxide, etc., and of these, a material containing crystalline titanium oxide is preferred.

The crystalline titanium oxide may be crystalline titanium oxide of any one of anatase, rutile and brookite types, or may be the above crystalline titanium oxide containing a crystal defect or a crystal strain. Otherwise, it may be a combination of two or more of these crystalline titanium oxides.

As an atomic arrangement, the titanium oxide nano-tubes have in principle a periodic structure similar to that

of anatase type, and they have an atomic layer thickness of being 3 to 5 atoms thick each (approximately 3 to 5 nm) or a fine size equivalent, although in one direction alone, to a particle diameter of less than 5 nm that the photocatalyst film II of this invention has.

The present inventors have therefore closely studied the nano-tubes with regard to dependency of a hydrophilization behavior on wavelengths by means of a spectral optical method, and it has been found that the material surprisingly exhibits the property of hydrophilization equivalent to that of a fine titanium oxide crystal having a diameter of approximately 5 nm, which constitutes the photocatalyst film II of this invention.

That is, it has been found that when a fine structure having a size 1 to 10 nm in every direction of a crystal like the photo-semiconductor particles contained in the photocatalyst film II is not required, but that so long as they have a fine-size structure having a size of 10 nm or less even partly (tube thickness) only, they exhibit the property of desired hydrophilization even if other sizes (diameter of each tube and length thereof in a longitudinal direction) are large. On the basis of this finding, the photocatalyst III of this invention has been accordingly completed.

In the photocatalyst film III of this invention, the content of photo-semiconductor nano-tubes having a tube thickness in the range of 1 to 10 nm in at least one main surface is preferably 3 % or more, more preferably 5 % or more.

The photocatalyst film III of this invention may further contain a binder component, and specifically when a liquid containing the photocatalyst is applied to an organic substrate, it is preferred to form a film from its mixture with a binder having excellent weatherability.

Examples of the binder having excellent weatherability include an acrylic resin, an acryl silicone resin, a partial hydrolysis-polycondensation product of an alkyl metal alkoxide, etc. There may be also used various organic or inorganic binders that are improved in weatherability by incorporating an UV absorbent, a radical capturing agent, etc.

In the photocatalyst film III of this invention, both of its main surfaces may contain the photo-semiconductor nano-tubes as a main component, or only one main surface may contain the photo-semiconductor nano-tubes as a main component. In the latter case, the surface containing the photo-semiconductor nano-tubes as a main component is used as a surface exposed to an outside, whereby it is used as a photocatalyst film.

The photocatalyst film III of this invention may further contain fine particles of a metal compound other than the photo-semiconductor crystallization product, and silica fine particles are preferred as fine particles of a metal compound other than the photo-semiconductor crystallization product. When the photocatalyst film III of this invention contains silica fine particles, suitably, they not only function to improve the strength and hardness of the film, but also produce effects that the refractive index is adjusted and that the super-hydrophilicity is maintained during the storage thereof in a dark place.

Colloidal silica is preferred as silica fine particles, and the colloidal silica is a product obtained by dispersing high-purity silicon dioxide ($SiO_2$) in water or an alcohol solvent and adjusting the dispersion to the form of colloid, and its average particle diameter is generally 1 to 200 nm, preferably in the range of 5 to 50 nm.

The thickness of the photocatalyst film III is not specially limited, while it is preferably 50 nm or more, more preferably 100 nm or more, still more preferably 100 nm to 10 $\mu$m or less.

The photocatalyst film III of this invention preferably has the properties of the photocatalyst film I of this invention.

In the photocatalyst film III of this invention, the critical water contact angle under irradiation with sunlight is preferably less than 20 degrees, more preferably 10 degrees or less.

In the photocatalyst film of this invention, further, its speed of decomposing methylene blue under irradiation with artificial sunshine of 3 mW/cm$^2$, as an absorbance decreasing speed (decomposing activity) $\Delta$ABS/min at a maximum absorption wavelength of applied methylene blue, is preferably 0.1 or less, more preferably 0.05 or less, still more preferably 0.01 or less, yet more preferably 0.0015 or less.

The above water contact angle and the speed of decomposing methylene blue can be controlled, for example, by adjusting the length and content of a photo-semiconductor nano-tube crystal formed of crystalline titanium oxide, etc.

The methods for evaluating the above water contact angle and the activity of decomposing methylene blue are the same as those in the photocatalyst film II, and details of the methods will be described in detail later.

The process for producing the photocatalyst film III of this invention will be explained below.

The method for producing photo-semiconductor nano-tubes for constituting the photocatalyst film III of this invention can be a production method in which a crystalline titanium oxide powder is alkali-treated at a high temperature under a high pressure for a predetermined time period.

The crystalline titanium oxide constituting the crystalline titanium oxide powder used as a raw material may be crystalline titanium oxide of any one of anatase, rutile and brookite types, or may be a mixed phase containing at least two of these. For efficiently producing a small-diameter tube structure, a mixed phase containing a rutile type crystal and an anatase type crystal is preferred as a crystalline titanium oxide powder. The mixed phase containing a rutile type crystal and an anatase type crystal preferably has a volume ratio (rutile type/anatase type) in the range of 20/80 to 80/20.

The particle diameter of the crystalline titanium oxide powder is preferably 20 nm or more. Although it differs depending upon a production method, it is difficult to form photo-semiconductor nano-tubes having a suitable tube form when the particle diameter is less than 20 nm.

The alkali-treatment of the crystalline titanium oxide powder is preferably carried out in a state of keeping it in a hermetically closed container for a predetermined time period while it is heated to a temperature of 100˚C to approximately 180˚C.

An NaOH aqueous solution, etc., can be used as an alkali solution for the treatment. When an NaOH aqueous solution is used as an alkali solution, the concentration thereof is preferably 1N to approximately 20N.

When the heating temperature is over 180˚C, titanium oxide having the form of nano-rods having no hollow portion is sometimes formed, and titanium oxide having the form of nano-rods have a band gap of less than 3.4 eV, so that the property of the desired hydrophilization can be no longer obtained. Further, when the heating temperature is lower than 100˚C, there is caused a problem that the efficiency of generation of photo-semiconductor nano-tubes is deteriorated, and that it is required to adjust the heating time period properly.

The heating time period cannot be uniformly defined since it changes depending upon a raw material and a heating temperature. For example, when the treatment is carried out at 180˚C, the heating time period preferably exceeds 20 hours to a great extent.

Preferably, a reaction liquid after the above alkali treatment is then neutralized with an acid, and it is subjected to fiber-opening treatment by further exposing it in an acidic region, and neutralized again together with a dispersing agent.

The above dispersing agent is not specially limited with regard to a suitable agent, while it can be tetra(n-butyl) ammonium hydroxide. Further, preferably, the tube length is properly adjusted for easier fiber-opening.

In the above manner, photo-semiconductor nano-tubes for constituting the photocatalyst film III of this invention can be obtained. The tube diameter and tube length of the photo-semiconductor nano-tubes to be obtained can be adjusted on the basis of a raw material and a treatment method. Further, the tube length can be decreased by ultrasonic treatment.

The ultrasonic treatment is preferably carried out after the alkali treatment step but before the fiber-opening treatment.

In the method for producing the photocatalyst film III of this invention, a dispersion of the thus-obtained photo-semiconductor nano-tubes is mixed with a binder having excellent weatherability, and the mixture is adjusted to have a viscosity suitable for coating, whereby a coating liquid can be obtained.

Examples of the binder having excellent weatherability include an acrylic resin, an acryl silicone resin, a partial hydrolysis-polycondensation product of an alkyl metal alkoxide, etc. There may be also used various organic or inorganic binders that are improved in weatherability by incorporating an UV absorbent, a radical capturing agent, etc.

The above coating liquid may contain various additives, fillers, pigments, etc. The above additives can be, for example, fine particles of metal compounds. As fine particles of a metal compound, silica fine particles are preferred. When the coating liquid contains silica fine particles, they not only function to improve the strength and hardness of a photocatalyst film to be obtained, but also produce effects that the refractive index is adjusted and that the super-hydrophilicity is maintained during the storage thereof in a dark place. As the above silica fine particles, colloidal silica is preferred.

The above colloidal silica is a product obtained by dispersing high-purity silicon dioxide ($SiO_2$) in water or an alcohol solvent and adjusting the dispersion to the form of colloid, and its average particle diameter is generally 1 to 200 nm, preferably in the range of 5 to 50 nm. As silica fine particles, it is thinkable to employ a hydrolysis condensate of silicon alkoxide, while a reaction of the silicon alkoxide has sometimes not come to an end, and in this case, it is easily eluted with water, and a photocatalyst film containing it is poor in water resistance. On the other hand, colloidal silica is fine particles whose reaction has come to an end, so that it is not easily eluted with water, and a photocatalyst film containing it is excellent in water resistance.

In the method for producing the photocatalyst film III of this invention, preferably, the thus-obtained coating liquid is coated on a substrate, and the solvent is volatilized to form a coating film.

The substrate on which the coating liquid is coated includes an organic substrate, an inorganic substrate formed of glass, a ceramic material, etc., a metal substrate, etc.

Examples of the organic substrate include substrates formed of an acrylic resin such as polymethyl methacrylate, etc., a styrene resin such as polystyrene, an ABS resin, etc., an olefin resin such as polyethylene, polypropylene, etc., a polyester resin such as polyethylene terephthalate, polyethylene naphthalate, etc., a polyamide resin such as 6-nylon, 6,6-nylon, etc., a polyvinyl chloride resin, a polycarbonate resin, a polyphenylene sulfide resin, a polyphenylene ether resin, a polyimide resin, a cellulose resin such as cellulose acetate, etc., and the like. The inorganic substrate includes substrates formed of a silica glass material, a ceramic material, tile, other metal oxide sintered material, etc. Further, the metal substrate includes substrates formed of aluminum, silver, copper, a steel material, an alloy material such as stainless steel, etc., and the like.

These organic substrates, inorganic substrates and metal substrates may be surface-treated beforehand by an oxidation method, a surface roughening method, etc., as required for further improving their adhesion to the photocatalyst film of this invention. The above oxidation method includes, for example, corona discharge treatment, chromic acid treatment (wet method), flame treatment, hot air treatment, ozone/ultraviolet irradiation treatment, etc. Further, the surface roughening method includes, for example, a sand blasting method, a solvent treatment method, etc. These

surface treatment methods are selected as required depending upon kinds of the substrates.

The method for coating the coating liquid on the substrate includes a dip coating method, a spin coating method, a spray coating method, a bar coating method, a knife coating method, an roll coating method, a blade coating method, a die coating method, a gravure coating method, a flow coating, brushing, etc.,

The coating liquid is preferably coated to give a dry coating film having a thickness of 50 nm or more, more preferably, to give a dry coating film having a thickness of 100 nm or more, still more preferably, to give a dry coating film having a thickness of 100 nm to 10 μm.

The drying condition for volatilizing the solvent after the application of the coating liquid is not specially limited, while the drying is carried out by heat treatment at room temperature to 500˚C for 10 seconds to several days.

When the thus-formed coating film is further surface-treated by an oxidation method, it produces an effect that the performance of maintaining super-hydrophilicity is maintained during the holding of the film in a dark place. The above oxidation method includes, for example, corona discharge treatment, chromic acid treatment (wet method), flame treatment, hot air treatment, ozone-ultraviolet ray irradiation treatment, etc. These surface treatment methods are selected as required depending upon kinds of substrates. In particular, when a partial hydrolysis-polycondensation product of an alkyl silicon alkoxide is selected as a binder, the above surface treatment also produces an effect that the high performance of maintaining super-hydrophilicity is maintained during the holding of the film in a dark place like colloidal silica is added.

Another embodiment (to be referred to as "photocatalyst film IV" hereinafter) of the photocatalyst film of this invention will be explained below.

The photocatalyst film IV of this invention has a characteristic feature in that at least one main surface thereof contains, as a photo-semiconductor crystallization product, an metal ion- or metal complex-supporting photo-semiconductor nano-sheet having a sheet thickness in the range of 0.5 to 2.0 nm.

In the photocatalyst film IV, the photo-semiconductor nano-sheet for constituting the metal ion- or metal complex-supporting photo-semiconductor nano-sheet refers to a nano-size-thickness sheet-shaped material formed of a photo-semiconductor material, and as this photo-semiconductor nano-sheet, for example, there is known a titanium oxide nano-sheet described in JP2001-270022A, etc. The metal ion- or metal complex-supporting photo-semiconductor nano-sheet is obtained by causing the above photo-semiconductor nano-sheet to support metal ion or metal complex, and preferably has a sheet thickness in the range of 0.5 to 2.0 nm.

In this invention, the sheet thickness refers to an average value of thickness of a crystal portion when a photo-semiconductor nano-sheet is observed through a transmission electron microscope.

The photo-semiconductor for constituting the metal ion-or metal complex-supporting photo-semiconductor nano-sheet is preferably a photo-semiconductor that is a photo-semiconductor in which the valance band of the band gap is formed of an electron orbit of oxigan and the band gap on an energy level capable of having oxidizing power for decomposing air, water or some organic material is 3.5 eV or more, that supports a metal ion or metal complex on the surface thereof to cause the metal ion or metal complex to work as a reducing site, and that is a photo-semiconductor in which a difference between the energy level of upper end of the valence band and the energy level relating to the reduction of water or air by the metal ion or metal complex is adjusted to 3.4 to 3.5 eV and the level of oxidation-reduction is in a site close to the conduction band rather than to the valence band of the photo-semiconductor.

The above photo-semiconductor material includes materials containing crystalline titanium oxide, crystalline tungsten oxide, crystalline zinc oxide, etc., and of these, a photo-semiconductor material containing crystalline titanium oxide is preferred. The crystalline titanium oxide may be crystalline titanium oxide of any one of anatase, rutile and brookite types, or may be the above crystalline titanium oxide containing a crystal defect or a crystal strain. Otherwise, it may be a combination of two or more of these crystalline titanium oxides.

The metal ion or metal complex to be supported on the photo-semiconductor nano-sheet can be copper ion, etc.

As an atomic arrangement, the titanium oxide nano-sheet has in principle a periodic structure similar to that of the anatase type, and it has a sheet thickness of being 1 atom (approximately 1 nm) layer thick or a nano size like the particle diameter of the photocatalyst film II or the tube thickness of the photocatalyst film III.

However, the present inventors have closely studied the nano-sheets with regard to dependency of their hydrophilization behavior on wavelengths by means of a spectral optical method, and the result is that the titanium oxide nano-sheet exhibits the property of optically excited hydrophilization under irradiation with a bactericidal lamp (about 254 nm) since it has a small sheet thickness as small as approximately 1 nm, but that it cannot be necessarily said that it exhibits sufficient optically excited super-hydrophilicity under irradiation with sunlight (300 nm or more).

The present inventors have therefore made studies in various ways with regard to the above photo-semiconductor nano-sheet for obtaining a novel photocatalyst film that has the absorption wavelength shifted to a long wavelength side (red shifting), that exhibits the optically excited super-hydrophilicity under irradiation with sunlight but that has the organic-material-decomposing activity inhibited. It has been hence found that when metal ion or metal complex having its oxidation-reduction level in a site close to the conduction band of crystalline titanium oxide rather than to the valence band thereof is supported on the photo-semiconductor nano-sheet by doping the photo-semiconductor nano-sheet with

the metal ion or metal complex, there can be provided a novel photocatalyst film IV that exhibits optically excited super-hydrophilicity in a desired sunlight wavelength region but has its organic-material-decomposing activity inhibited.

As a method for the above red-shifting, for example, it is thinkable to employ a method of doping the oxygen site of crystalline titanium oxide with nitrogen or sulfur. In this method, however, the uppermost portion of valance band of the band gap is formed of electron orbit of the element other oxygen, the property of optical response is hence decreased, and moreover, a crystalline titanium oxide nano-sheet grows huge because of its production. Further, the method of supporting Pt complex on crystalline titanium oxide is thinkable. However, presumably, the oxidation-reduction potential of Pt complex is in a site close to the valence band of crystalline titanium oxide rather than to the conduction band, crystalline titanium oxide supporting Pt complex comes to exhibit an optically exciting mechanism in which electrons are excited from an optically excited Pt complex to the conduction band of the crystalline titanium oxide, and the valence band of the band gap is not formed of the electron orbit of oxygen, so that the optically excited super-hydrophilicity does not easily take place.

In the photocatalyst film IV, the content of the metal ion- or metal complex-supporting photo-semiconductor nano-sheet is preferably 3 % or more, more preferably 5 % or more.

The photocatalyst film IV of this invention may further contain a binder component. Specifically, when a liquid containing the photocatalyst is applied to an organic substrate, preferably, a film is formed from a mixture of it with a binder having excellent weatherability.

Examples of the binder having excellent weatherability include an acrylic resin, an acryl silicone resin, a partial hydrolysis-polycondensation product of an alkyl metal alkoxide, etc. Further, there may be also used various organic or inorganic binders that are improved in weatherability by incorporating an UV absorbent, a radical capturing agent, etc.

In the photocatalyst film IV, both main surfaces of the film contain may contain, as a main component, a photo-semiconductor nano-sheet supporting a metal ion, or only one main surface may contain, as a main component, a photo-semiconductor nano-sheet supporting a metal ion. In this case, the surface containing, as a main component, the photo-semiconductor nano-sheet supporting metal ion is used as a surface exposed to an outside, whereby it is used as a photocatalyst film.

The photocatalyst film IV may contain various additives, fillers, pigments, etc., as required so long as they do not impair the object of this invention. The additives include, for example, metal fine particles, and as fine particles of a metal compound, silica fine particles are preferred. When the photocatalyst film IV contains silica fine particles, the fine particles are suitable, since they not only function to improve the strength and hardness of a coating film, but also produce effects that the refractive index is adjusted and that the super-hydrophilicity is maintained during the storage thereof in a dark place. As the silica fine particles, colloidal silica is preferred.

The colloidal silica is a product obtained by dispersing high-purity silicon dioxide ($SiO_2$) in water or an alcohol solvent and adjusting the dispersion to the form of colloid, and its average particle diameter is generally 1 to 200 nm, preferably in the range of 5 to 50 nm.

The thickness of the photocatalyst film IV is not specially limited, while it is preferably 50 nm or more, more preferably 100 nm or more, still more preferably 100 nm to 10 $\mu$m.

Preferably, the photocatalyst film IV has the properties of the photocatalyst film I of this invention.

In the photocatalyst film IV, the critical water contact angle under irradiation with sunlight is preferably less than 20 degrees, more preferably 10 degrees or less.

In the photocatalyst film IV, further, its speed of decomposing methylene blue under irradiation with artificial sunshine of 3 mW/cm$^2$, as an absorbance decreasing speed (decomposing activity) $\Delta$ABS/min at a maximum absorption wavelength of applied methylene blue, is preferably 0.1 or less, more preferably 0.05 or less, still more preferably 0.01 or less, yet more preferably 0.0015 or less.

The above water contact angle and the speed of decomposing methylene blue can be controlled, for example, by adjusting the length and content of a photo-semiconductor nano-sheet crystal formed of crystalline titanium oxide, etc.

The methods for evaluating the above water contact angle and the activity of decomposing methylene blue are the same as those in the photocatalyst film II, and details of the methods will be described in detail later.

The article of this invention will be explained below.

The article of this invention has a characteristic feature in that the surface of a substrate has the photocatalyst film of this invention or a photocatalyst film obtained by the process of this invention.

Further, the article of this invention may further have a functional film having a thickness of 500 nm or less on the above surface of the photocatalyst film so long as it does not impair the functions of the photocatalyst film of this invention.

The function of the above functional film includes the property of maintaining hydrophilicity in a dark place, electric conductivity, an electrostatic property, the property of being hard coat, the inhibition of an reflection property, the control of a refractive index, etc. The specific component for constituting the above functional film includes compounds of metal oxides such as silica, alumina, zirconia, ITO, zinc oxide, etc. In particular, it is preferably a functional film containing silica for the purpose of maintaining hydrophilicity during nighttime hours when the article is exposed to no

sunlight.

The photocatalyst film of the present invention to be formed on a surface has the function of imparting with super-hydrophilicity under irradiation with sunlight, but has an organic-material-decomposing-activity inhibited, so that it can be formed directly on an organic substrate without an activity-blocking layer that has been conventionally required.

The article of this invention includes those obtained by forming the photocatalyst film of this invention on substrates formed, for example, of an acrylic resin such as polymethyl methacrylate, etc., a styrene resin such as polystyrene, an ABS resin, etc., an olefin resin such as polyethylene, polypropylene, etc., a polyester resin such as polyethylene terephthalate, polyethylene naphthalate, etc., a polyamide resin such as 6-nylon, 6,6-nylon, etc., a polyvinyl chloride resin, a polycarbonate resin, a polyphenylene sulfide resin, a polyphenylene ether resin, a polyimide resin, a cellulose resin such as cellulose acetate, etc., and the like, for the purpose, for example, of an anti-fogging property, a drip-proof property, an antifouling property, a frost-preventing property or a snow-sliding property.

These organic substrates may be surface-treated by an oxidation method, a surface roughening method, etc., as required for further improving their adhesion to the film of this invention. The above oxidation method includes, for example, corona discharge treatment, chromic acid treatment (wet method), flame treatment, hot air treatment, ozone/ultraviolet irradiation treatment, etc. Further, the surface roughening method includes, for example, a sand blasting method, a solvent treatment method, etc. These surface treatment methods are selected as required depending upon kinds of the substrates.

In this invention, further, the organic substrate includes substrates formed of materials other than an organic material, such as substrates formed of a metal material, a glass or ceramic material and other inorganic or metal material, each substrate having an organic coating film on the surface thereof.

Naturally, the photocatalyst film of this invention can be formed on substrates formed of materials other than the organic material, such as a metal material, a glass or ceramic material and other various inorganic or metal materials.

Specifically, the article includes sound insulation walls along an expressway, road reflector mirrors, various reflectors, street lamps, body coatings, side-view mirrors or windshields of vehicles including automobiles, construction materials including windows, road traffic signs, roadside advertizing displays, freezing/cold storage showcases, various lenses, sensors, etc.

Further, the article of this invention also includes a film for agriculture. In recent years, the film for agriculture has come to be actively used for plastic greenhouse culture or plastic tunnel culture. In these cultures, when a film for agriculture has been set up and used, a drip-proof agent (anti-fogging agent) has been sprayed on its internal surface for preventing the fogging caused by adherence of water drops after the setting up of the film, while the drip-proof effect of the drip-proof agent (anti-fogging agent) has been lost in a short period of time. The film of this invention for agriculture, the film having the photocatalyst film of this invention on its surface, can maintain hydrophilicity for a long term, so that it permits the continuation of agricultural work without spraying an agent again.

The method for hydrophilization in this invention will be explained below.

The method for hydrophilization in this invention comprises using the article of this invention under irradiation with sunlight.

The article of this invention has the function of imparting with super-hydrophilicity as described already, while it has the photocatalyst film of which the decomposing activity is inhibited, so that it can impart the surface of other article with hydrophilicity without corroding an organic substrate.

## Examples

This invention will be explained further in detail with reference to Examples, while this invention shall not be limited by these Examples.

Methods for various evaluations and measurements are as follows.

(1) Carbon arc type sunshine weather meter (SWM) conditions

Apparatus name: "Sunshine Weather Meter S300" supplied by Suga Test Instruments Co., Ltd.
Condition settings: Illuminance 255 ±55 $W/m^2$, Wavelength region of irradiation light 250 - 1,200 nm
Cycle: One cycle of two hours consisting of irradiation for 102 minutes and irradiation + rain fall for 18 minutes.
Black panel temperature: 63 ±3˚C
Relative humidity: 55 ±5 % RH

(2) Constant-temperature constant-humidity treatment

Apparatus: "IG-42M" supplied by Yamato Scientific Co., Ltd.

(3) Transmission electron microscope (TEM) observation

(i) Preparation of sample (case of a resin substrate):

A sample having a proper size was taken and embedded in a resin, and an ultrathin section of a cross section was cut out with a microtome using a diamond knife and placed on a Cu mesh with a micro grid, to prepare a TEM sample.
Apparatus used: Microtome: "Ultramicrotome URTRACUT UCT" supplied by Leica Microsystems Japan.
Knife: "Diamond knife" supplied by DiATONE Ltd.

(ii) Preparation of sample (case of a glass substrate):

A sample was taken, and bonded to a dummy substrate and a reinforcing ring with an epoxy resin, followed by polishing and dimpling. Finally, Ar ion milling was carried out to prepare a TEM sample.
TEM: "Transmission electron microscope, JEM-2010" supplied by JEOL Ltd., acceleration voltage 200 kV

(4) Number and amount ratio of crystals having a diameter in the range of 1 to 10 nm

<Number of crystals>

The number of crystals having a diameter in the range of 1 to 10 nm in a TEM photograph (magnification: 4 million magnifications, observation area: 2,500 $nm^2$) of a cross section was calculated.

<Amount ratio>

An amount ratio of the number of crystals having a diameter in the range of 1 to 10 nm to the total number of crystals observed in a TEM photograph (magnification: 4 million magnifications, observation area: 2,500 $nm^2$) of a cross section was calculated.

(5) Measurement for content of crystalline titanium oxide having a crystal diameter in the range of 1 to 10 nm in a surface
The ratio of cross-sectional area of crystalline titanium oxide having a crystal diameter in the range of 1 to 10 nm in a TEM photograph (magnification: 4 million magnifications, observation area: 2,500 $nm^2$) of a cross section was calculated.
(6) Selected area diffraction (SAD) measurement
Measured with TEM ("transmission electron microscope, JEM-2010" supplied by JEOL Ltd., acceleration voltage 200 kV) with a camera length of 50 cm and an analysis region of 65 to 150 nmϕ.
(7) Property of hydrophilization and how to determine a wavelength at which a hydrophilization speed of 2 (1/deg/min/$10^5$) is reached
A sample that was fully rendered hydrophobic under the holding of it in a dark place was irradiated with ultraviolet ray having a predetermined wavelength by means of various light sources, and the change of contact angle to pure water with time was monitored with a contact angle meter ("G-1-1000" supplied by ERMA INC). The hydrophilization speed was determined by plotting reverse numbers of water contact angle values relative to irradiation time periods (min) and taking an inclination of their linear approximate line.

A bactericidal lamp and a mercury lamp of which the irradiation spectrum had a half-value width of 15 nm or less each were used, and ultraviolet ray having a predetermined wavelength was taken through a proper band pass filter. Further, from a xenon light source, ultraviolet ray having a predetermined wavelength having a half-value width of 15 nm or less was taken by interposing various band path filters having a half-value width of 15 nm or less were.
Each illuminance was set such that the numbers of photons of irradiation main wavelength became approximately the same ($3.7 \times 10^{15}$ quanta/$cm^2$/s).
Kinds of light sources and wavelengths used for irradiation with ultraviolet rays of wavelengths (some were used in combination with a band pass filter) and illuminances of them:
The following Table 1 shows kinds of the light sources and wavelengths used for irradiation with ultraviolet rays of each wavelength (some were used in combination with a band pass filter) and illuminances of them.
A power function approximate line was determined on the basis of the relationship between the hydrophilization speed obtained by irradiation with ultraviolet ray that was included in the ultraviolet rays having a predetermined wavelength taken out in the above manner and that had a wavelength of 300 nm or more and the main irradiation wavelength,

and a wavelength at which a hydrophilization speed of 2(1/deg/min/$10^5$) was reached was determined on the above approximate line. The hydrophilization speed of 2 (1/deg/min/$10^5$) is a value that has been determined to be a lower-limit value at which the change of a decrease in contact angle with time is clearly recognized, on the basis of various measurement results. Further, the effective figure of value of the hydrophilization speed employed for determining the above wavelength was determined to be a figure of six digits, and a value smaller than that was rounded off.

Table 1

(1) Combination of bactericidal lamp, mercury lamp and artificial sunshine lamp

| Kind of light sources | Main wave-length of irradiation (nm) | Band pass filter content | Illuminance (mW/$cm^2$) |
|---|---|---|---|
| Bacteri-cidal lamp (*1) | 254 | Nil | 2.8 (*7) |
| Mercury lamp (*2) | 313 | Center 308 nm, half value width 20 nm (*4) | 2.4 (*8) |
| | 334 | Center 345 nm, half value width 20 nm (*5) | 2.2 (*8) |
| | 365 | Center 374 nm, half value width 20 nm (*6) | 2.0 (*9) |
| | 405 | Center 390 nm, use of combination of band pass filter having half value width of 70 nm and short wavelength cut filter having cut-off wavelength of 380 nm | 1.8 (*10) |
| Artificial sunshine lamp (*3) | >300 | Nil | 3.0 (*9) |

(*1) "GL-20" supplied by Toshiba Lighting & Technology Corporation
(*2) "LA-200UV" supplied by HAYASHI WATCH-WORKS Cc., Ltd.
(*3) "XC-100BSS" supplied by SERIC., Ltd.
(*4) "KUVB-30-1" supplied by HAYASHI WATCH-WORKS Cc., Ltd.
(*5) "KUVB-32-1" supplied by HAYASHI WATCH-WORKS Cc., Ltd.
(*6) "KUVB-37-1" supplied by HAYASHI WATCH-WORKS Cc., Ltd.
(*7) measured with illuminance meter "UVR-2/UD-25" supplied by TOPCON CORPORATION.
(*8) Value calculated from a spectral intensity ratio of wavelengths radiated from a lamp and a transmittance ratio of a band pass filter using, as a reference, a measured illuminance when the main wavelength of irradiation = 365 nm.
(*9) measured with illuminance meter "UVR-2/UD-36" supplied by TOPCON CORPORATION.
(*10) measured with illuminance meter "UVR-2/UD-40" supplied by TOPCON CORPORATION.

Table 1 (continued)

(2) Combination of xenon light source and artificial sunshine lamp

| Kind of light sources | Main wave-length of irradiation (nm) | Band pass filter content | Illuminance ($mW/cm^2$) |
|---|---|---|---|
| Xenon light Source (*1) | 310 | Center 310 nm, half value width 11 nm (*3) | 2.4 (*8) |
| | 320 | Center 320 nm, half value width 11 nm (*4) | 2.3 (*8) |
| | 334 | Center 334 nm, half value width 9 nm (*5) | 2.2 (*8) |
| | 350 | Center 350 nm, half value width 10 nm (*6) | 2.1 (*8) |
| | 365 | Center 365 nm, half value width 10 nm (*7) | 2.0 (*9) |
| | 380 | Center 380 nm, half value width 10 nm (*10) | 1.9 (*8) |
| Artificial sunshine lamp (*2) | >300 | Nil | 3.0 (*9) |

(*1) "MAX-302" supplied by Asahi Spectra Co., Ltd.
(*2) "XC-100BSS" supplied by SERIC., Ltd.
(*3) "HQBP-310-UV" supplied by Asahi Spectra Co., Ltd.
(*4) "HQBP-320-UV" supplied by Asahi Spectra Co., Ltd.
(*5) "HQBP-334-UV" supplied by Asahi Spectra Co., Ltd.
(*6) "HQBP-350-UV" supplied by Asahi Spectra Co., Ltd.
(*7) "HQBP-365-UV" supplied by Asahi Spectra Co., Ltd.
(*8) Value calculated from a spectral intensity ratio of wavelengths radiated from a lamp and a transmittance ratio of a band pass filter using, as a reference, a measured illuminance when the main wavelength of irradiation = 365 nm.
(*9) measured with illuminance meter "UVR-2/UD-36" supplied by TOPCON CORPORATION.
(*10) "HQBP-380-UV" supplied by Asahi Spectra Co., Ltd.

(8) Evaluation of methylene blue decomposing activity

<Preparation of sample>

A sample is immersed in a methylene blue aqueous solution prepared at a methylene blue/pure water amount ratio of 0.1267 g/100 mL for 1 hour. In this case, for causing methylene blue to uniformly adhere to the sample surface, it is desirable to render the sample surface hydrophilic to approximately 10° or less.

When it is not rendered hydrophilic, it can be rendered super-hydrophilic by irradiation with ultraviolet ray using a proper light source such as BLB, a bactericidal lamp, etc. Then, the sample is swiftly taken up on Kimtowel, and after the sample surface is dried, methylene blue adhering to the reverse surface is cleanly wiped off using water and methanol (The above procedures are preferably carried out while it is protected from light as much as possible).

Then, the sample is vacuum-dried for 2 hours while it is protected from light.

<Evaluation method>

(a) The sample with methylene blue adsorbed is set in a ultraviolet visible light spectrophotometer, and measured for absorption spectrum before irradiated with light. In this case, it is arranged that the absorbance at peak top (normally 585 to 615 nm) of absorption spectrum of methylene blue shows a value nearly equal to about 0.15 $\pm$0.10.
(b) Then, the sample is irradiated with light containing ultraviolet ray for 30 seconds using an artificial sunshine illumination lamp under such conditions that the illuminance measured with an illuminance meter "UVR-2/UD-36" supplied by TOPCON Corporation shows a value of 3 $mW/cm^2$.
(c) The procedure of (b) is repeated each time in 1 minute, 2 minutes, 3 minutes, 5 minutes, 7 minutes, 10 minutes, 15 minutes and 20 minutes as accumulated time periods after the irradiation with ultraviolet ray.
(d) An absorbance at a peak top (normally 585 to 615 nm) of absorption spectrum in each measurement point is read out.
(e) A difference ($\Delta_T$ABS) between the absorbance at the peak top in each measurement point and an absorbance before the irradiation with light is determined, and a sample (blank) in which crystalline titanium oxide is not generated is prepared in advance. The deterioration ($\Delta_{BL}$ABS) of ABS of the blank is regarded as natural color deterioration, and a value $\Delta$ABS obtained by deducting the above $\Delta_{BL}$ABS from the $\Delta_T$ABS of the sample in which crystalline titanium oxide is generated is taken as decomposition of MB by a net photocatalytic reaction.

Net $\Delta$ABS in each measurement point is plotted relative to the irradiation time period, and an inclination in a range where plotted points linearly change is taken and regarded as a methylene blue decomposition speed.

<Ultraviolet visible light spectrophotometer> "UV-2100" supplied by Shimadzu Corporation

<Measurement conditions> Photometric mode: Absorbance: 500 nm

**[0204]** - 700 nm, Scanning speed: Fast, Slit width: 2nm, Sampling pitch: 2 nm, Base line: Air

(9) AFM measurement

Apparatus used: Nano-scale hybrid microscope "VN-8010" supplied by KEYENCE Corporation
Measurement conditions: Tapping mode (DMF), Scan size 30 x 30 $\mu$m, Sampling number 512
Specific explanations of parameters for surface roughness measured are as follows.
Average roughness Ra: Average roughness relative to an average surface
Surface area S: 30 $\mu$m square visual field (an apparent surface area is 900 $\mu m^2$)
Specific surface area Sr: S/900
It is generally reported that the water contact angle on a rough surface is apparently small as is shown in the following Wentzel equation.

$$COS\theta = Sr \times COS\theta_0$$

wherein $\theta_0$ is a water contact angle on a flat smooth surface, and Sr is a ratio of an actual surface area S to the surface area So of a theoretical flat smooth surface.

Further, since the photocatalytic reaction is a surface reaction, a larger surface area generally works more effectively for decomposing activity.

It is thought that the hydrophilization phenomenon and decomposing activity observed in a photocatalyst film having a flat smooth surface (Sr = approximately 1.1 or less) give values that exhibit performances of the photocatalyst film itself.

(10) Evaluation of gradient
A film was scraped by carrying out argon sputtering (4 kV) at intervals of 3 minutes with an XPS apparatus "PHI-5600" supplied by ULVAC-PHI Incorporated, and the contents of carbon atoms and metal atoms in the film surface were measured by X-ray photoelectron spectroscopy.

Synthesis Example 1

Synthesis of hydrolysis condensation liquid of titanium alkoxide

75.7 Grams of titanium tetrapropoxide (trade name: A-1, supplied by Nippon Soda Co., Ltd.) was dropwise added to 149 g of ethyl cellosolve with stirring, to give a solution (A). To the solution (A) was dropwise added a mixture of 58.3 g of ethyl cellosolve, 4.55 g of distilled water and 12.6 g of 60 mass% concentrated nitric acid with stirring, to give a solution (B). The solution (B) was then stirred at 30˚C for 4 hours to give a hydrolysis condensation liquid (C) of titanium alkoxide.

Synthesis Example 2

Preparation of PET film with climate-resistant primer

An ethyl acetate solution containing a mixture of 100 g of an ultraviolet-absorbing coating agent hybridized with hindered-amine photostabilizer (HALS) (UW series UV-G301, supplied by Nippon Shokubai Co., Ltd.) and 12 g of an isocyanate curing agent (Desmodur N3200, supplied by Sumitomo-Bayer Urethane K.K.) was applied to one surface of a polyethylene terephthalate (PET film) having an ultraviolet absorbent kneaded thereinto (HB-3 supplied by Teijin Dupont Films Japan Limited, thickness 50 μm) with a wire bar, so as to give a 6 μm thick dry film. Then, the applied film was thermally crosslinked to prepare a PET film (E) with a climate-resistant primer.

Example 1 (Thin film (film thickness 50 nm) formed from hydrolysis product of titanium alkoxide)

(1) The hydrolysis condensation liquid (C) of titanium alkoxide obtained in Synthesis Example 1 was diluted double by a mass ratio with ethyl cellosolve, to give a hydrolysis condensation liquid (L) of titanium alkoxide.
The hydrolysis condensation liquid (L) of titanium alkoxide was applied onto a 3 mm thick sodium lime glass fully degreased and cleaned with acetone and methanol, and it was applied with a spin coater such that it had a dry thickness of 50 nm, to give a test sample. In this case, it is theoretically calculated that the hydrolysis condensation product of titanium alkoxide is applied in an amount of 0.13 g per $m^2$ (calculated on condition that the hydrolysis condensation product has a specific gravity of 2.6).
(2) Then, exposure under the carbon arc type sunshine weather meter (SWM) conditions was repeated 60 cycles (120 hours). Fig. 2 shows a transmission electron microscope photograph.
In Fig. 2, fine crystals having a diameter of 2-3 nm (crystalline titanium oxide particles) were observed in amorphous titanium oxide in the film. In a selected area diffraction image, they were indexable with essential lattice planes (101, 200) of anatase type titanium oxide. In this case, the number of fine crystals in the observed plane (50 nm x 50 nm = 2,500 $nm^2$) was 24. Further, the ratio of the number of crystals having a diameter in the range of 1 to 10 nm to the total crystalline titanium oxide number in the observed plane was 100 %. Further, the content of crystalline titanium oxide having a crystal diameter in the range of 1 to 10 nm in the main surface of the photocatalyst film was 4 %.
(3) The hydrophilization behavior of the exposed sample caused by irradiation with ultraviolet ray was monitored using various light sources. As shown in Fig. 3, when the main wavelengths for the irradiation were 254 nm and 313 nm, the water contact angle gradually decreased, while almost no change was observed when they were 334 nm and 365 nm. The sample was measured for hydrophilization speed to show that the speeds from the short wavelength side were 0.00176, 0.00005, 0.00000 and 0.00000 (1/degree)/min.
The relationship between the hydrophilization speed and the main wavelength of irradiation in the irradiation with ultraviolet ray of 300 nm or more was obtained only in one point, so that no wavelength at which the hydrophilization speed became 2 (l/deg/min/$10^5$) was determinable. However, it was assumable from the measurement results that it was 330 nm or less.
Further, when the same sample was rendered hydrophobic by storing it in a dark place and then irradiated with an artificial sunshine lamp, the water contact angle was gradually decreased by the irradiation. When measured, the hydrophilization speed was 0.00020 (1/degree)/min.
Further, the same sample was measured for a methylene blue decomposing speed using an artificial sunshine lamp, to show a ΔABS/min of 0.00020.
According to the AFM measurement, the surface roughness (Ra) and surface area ($\mu m^2$) of the above sample were 0.34 nm and 900.080 $\mu m^2$, and its specific surface area Sr was 1.00009. Table 2 shows these physical property values.
(4) The same test samples as that obtained in the above (1) were exposed by repeating 150 cycles (300 hours),

450 cycles (900 hours) and 750 cycles (1,500 hours) with SWM in (2), and transmission electron microscope photographs of these samples were taken, according to which fine crystals (crystalline titanium oxide particles) having a diameter of 2-3 nm (150 cycles), 2-5 nm (450 cycles) and 2-8 nm (750 cycles) were observed. Table 2 shows lattice planes that were indexable, the number of fine crystal particles in an observed plane (50 nm x 50 nm = 2,500 $nm^2$) and a ratio of number of crystals having a crystal diameter in the range to 1 to 10 nm to the total number of crystals in the observed plane.

Further, Table 2 shows a wavelength at which the hydrophilization speed became 2 ($1/deg/min/10^5$) determined in the same manner as above with regard to the exposed sample. Further, Figs. 4 to 7 show hydrophilization behavior of each sample when light sources and irradiation time periods were changed in the same manner as in the above (3), and Table 2 shows measurement results of the hydrophilization speeds (1/degree)/h, methylene blue decomposing speeds (ΔABS/minute), surface roughness (Ra) and specific surface areas Sr.

As described above, it is clear that the crystalline titanium oxide of this invention responds on a short wavelength side as compared with general anatase type titanium oxide in Comparative Example 1 to be described later, and it is clear that the crystalline titanium oxide is a photocatalyst material that exhibits optically excited super-hydrophilicity under irradiation with sunlight without requiring any special treatment of the titanium oxide surface and that has an organic-material-decomposing activity inhibited.

Example 2 (Thin film (film thickness 200 nm) formed from hydrolysis decomposition product of titanium alkoxide)

A test sample was obtained in the same treatment manner as in Example 1(1) except that a thin film formed from a hydrolysis product of titanium alkoxide had a dry thickness of 200 nm. In this case, it is theoretically calculated that the hydrolysis condensation product of titanium alkoxide is applied in an amount of 0.52 g per $m^2$ (calculated on condition that the hydrolysis condensation product has a specific gravity of 2.6).

(2) Then, exposure with SWM was repeated 150 cycles
(300 hours). Fig. 8 shows a transmission electron microscope photograph. In Fig. 8, fine crystals having a diameter of 2 to 5 nm (crystalline titanium oxide particles) were observed in amorphous titanium oxide. In a selected area diffraction image, further, they were indexable with essential lattice planes (101, 004, 200, 211) of anatase type titanium oxide. In this case, the number of fine crystals in the observed plane (2,500 $nm^2$) was 65, and the ratio of the number of crystals having a diameter in the range of 1 to 10 nm to the total crystalline titanium oxide number in the observed plane was 100 %. Further, the content of crystalline titanium oxide having a crystal diameter in the range of 1 to 10 nm in the main surface of the photocatalyst film was 33 %.

(3) The hydrophilization behavior of the exposed sample caused by irradiation with ultraviolet ray was monitored using various light sources. As shown in Fig. 9, when the main wavelengths for the irradiation were 254 nm and 313 nm, the water contact angle gradually decreased, while almost no change was observed when they were 334 nm and 365 nm. The sample was measured for hydrophilization speed to show that the speeds from the short wavelength side were 0.00078, 0.00018, 0.00001 and 0.00000 (1/degree)/min.

When the wavelength at which the hydrophilization speed became 2 ($l/deg/min/10^5$) was determined on the basis of the relationship between the hydrophilization speed and the main wavelength of irradiation in the irradiation with ultraviolet ray at 300 nm or more, it was 328 nm. Further, the hydrophilization speed was 2 ($l/deg/min/10^5$) or more in all the wavelength region of 300 to 328 nm.

Further, when the same sample was rendered hydrophobic by storing it in a dark place and then irradiated with an artificial sunshine lamp, the water contact angle was gradually decreased by the irradiation as shown Fig 10. When measured, the hydrophilization speed was 0.00045 (1/degree)/min.

Further, the same sample was measured for a methylene blue decomposing speed using an artificial sunshine lamp, to show a ΔABS/min of 0.00331.

According to the AFM measurement, the surface roughness (Ra) and surface area ($\mu m^2$) of the above sample were 0.27 nm and 900.049 $\mu m^2$, and its specific surface area Sr was 1.00005. Table 2 shows these physical property values.

(4) The same test samples as that obtained in the above (1) were exposed by repeating 450 cycles (900 hours) and 750 cycles (1,500 hours) with SWM in (2), and transmission electron microscope photographs of these samples were taken, according to which fine crystals (crystalline titanium oxide particles) having a diameter of 2-8 nm were observed. Table 2 shows lattice planes that were indexable, the number of fine crystal particles in an observed plane (50 nm x 50 nm = 2,500 $nm^2$) and a ratio of number of crystals having a crystal diameter in the range to 1 to 10 nm to the total number of crystals in the observed plane.

Further, Table 2 shows a wavelength at which the hydrophilization speed became 2 ($1/deg/min/10^5$) determined in the same manner as above with regard to the exposed sample. These samples had a hydrophilization speed of 2

(l/deg/min/$10^5$) or more at least partly at a wavelength of 300 to 360 nm.

Further, Figs. 10 to 12 show hydrophilization behavior of each sample when light sources and irradiation time periods were changed in the same manner as in the above (3), and Table 2 shows measurement results of the hydrophilization speeds (1/degree)/h, methylene blue decomposing speeds (ΔABS/minute), surface roughness (Ra) and specific surface areas Sr.

Example 3 (Thin film (film thickness 50 nm) formed from hydrolysis decomposition product of titanium alkoxide)

A test sample was obtained in the same treatment manner as in Example 1(1) except that a thin film of a hydrolysis product of titanium alkoxide was formed on the PET film with a climate-resistant primer obtained in Synthesis Example 2. In this case, it is theoretically calculated that the hydrolysis condensation product of titanium alkoxide is applied in an amount of 0.13 g per $m^2$ (calculated on condition that the hydrolysis condensation product has a specific gravity of 2.6).

(2) Then, exposure with SWM was repeated 150 cycles (300 hours). Fig. 13 shows a transmission electron microscope photograph. In Fig. 13, fine crystals having a diameter of 2 - 3 nm (crystalline titanium oxide particles) were observed in amorphous titanium oxide. In a selected area diffraction image, further, they were indexable with essential lattice planes (101, 200) of anatase type titanium oxide. In this case, the number of fine crystals in the observed plane (50 nm x 50 nm = 2,500 $nm^2$) was 23, and the ratio of the number of crystals having a diameter in the range of 1 to 10 nm to the total crystalline titanium oxide number in the observed plane was 100 %. Further, the content of the total crystalline titanium oxide in the main surface of the photocatalyst film was 4 %.

(3) When the exposed sample was rendered hydrophobic by storing it in a dark place and then irradiated with an artificial sunshine lamp, the water contact angle was gradually decreased by the irradiation as shown in Fig. 14. When measured, the hydrophilization speed was 0.00019 (1/degree)/min.

Further, the same sample was measured for a methylene blue decomposing speed using an artificial sunshine lamp, to show a ΔABS/min of 0.00026.

According to the AFM measurement, the surface roughness (Ra) and surface area ($\mu m^2$) of the above sample were 3.55 nm and 901.294 $\mu m^2$, and its specific surface area Sr was 1.00144. Table 2 shows these physical property values.

As described above, it is clear that the crystalline titanium oxide of this invention responds on a short wavelength side owing to its crystal diameter as compared with general anatase type titanium oxide in Comparative Example 1 to be described later, and it is clear that the crystalline titanium oxide is a photocatalyst material that exhibits optically excited super-hydrophilicity under irradiation with sunlight without requiring any special treatment of the titanium oxide surface and that has an organic-material-decomposing activity inhibited.

Example 4 (Thin film (film thickness 50 nm) formed from hydrolysis decomposition product of titanium alkoxide)

(1) The hydrolysis condensation liquid (C) of titanium alkoxide obtained in Synthesis Example 1 was diluted double by mass ratio with ethyl cellosolve to give a hydrolysis condensation liquid (L) of titanium alkoxide.

The hydrolysis condensation liquid (L) of titanium alkoxide was applied onto a 3 mm thick sodium lime glass fully degreased and cleaned with acetone and methanol, and it was applied with a spin coater such that it had a dry thickness of 50 nm, to give a test sample. In this case, it is theoretically calculated that the hydrolysis condensation product of titanium alkoxide is applied in an amount of 0.13 g per $m^2$ (calculated on condition that the hydrolysis condensation product has a specific gravity of 2.6).

(2) Then, the test sample was treated in a constant-temperature constant-humidity chamber under constant-temperature constant-humidity treatment conditions of 43°C and 50 %RH for 120 hours, and Fig. 15 shows a transmission electron microscope thereof. In Fig. 15, fine crystals (crystalline titanium oxide particles) having a diameter of 2 to 6 nm were observed in the amorphous titanium oxide. In a selected area diffraction image, further, they were indexable with essential lattice planes (101, 004, 200, 211) of anatase type titanium oxide. In this case, the number of fine crystals in the observed plane (2,500 $nm^2$) was 47, and the ratio of the number of crystals having a diameter in the range of 1 to 10 nm to the total crystalline titanium oxide number in the observed plane was 100 %. Further, the content of crystalline titanium oxide having a crystal diameter in the range of 1 to 10 nm in the main surface of the photocatalyst film was 24 %.

After the above constant-temperature constant-humidity treatment, the hydrophilization behavior of the test sample

caused by irradiation with ultraviolet ray was monitored using various light sources. As shown in Fig. 16, when the main wavelengths for the irradiation were 254 nm and 313 nm, the water contact angle gradually decreased, while almost no change was observed when they were 334 nm and 365 nm. The test sample was measured for hydrophilization speed to show that the speeds from the short wavelength side were 0.00159, 0.00031, 0.00006 and 0.00001 (1/degree)/min.

When the wavelength at which the hydrophilization speed became 2 (l/deg/min/$10^5$) was determined on the basis of the relationship between the hydrophilization speed and the main wavelength of irradiation in the irradiation with ultraviolet ray of 300 nm or more, it was 352 nm. Further, the hydrophilization speed was 2 (l/deg/min/$10^5$) or more in all the wavelength region of 300 to 352 nm.

(3) When the treated sample was rendered hydrophobic by storing it in a dark place and then irradiated with an artificial sunshine lamp, the water contact angle was gradually decreased by the irradiation as shown in Fig. 17. When measured, the hydrophilization speed was 0.00033 (1/degree)/min.

Further, the same sample was measured for a methylene blue decomposing speed using an artificial sunshine lamp, to show a ΔABS/min of 0.00140.

It is clear from these results that a titanium oxide compound which responds on a shorter wavelength side than that of general anatase type titanium oxide has been also generated by humidification-heat treatment like Examples 1 to 3.

(4) According to the AFM measurement, the surface roughness (Ra) and surface area (μ$m^2$) of the above sample were 0.20 nm and 900.55 μ$m^2$, and its specific surface area Sr was 1.00006. Table 2 shows these physical property values. Comparative Example 1 Preparation Example of anatase-type-titanium-oxide-containing photocatalyst film

(1) 16.9 Grams of the partial hydrolysis condensation liquid (C) obtained in Synthesis Example 1 was added to a mixture of 168.3 g of ethyl cellosolve and 180.0 g of n-propanol, and then a mixture liquid of 11.25 g of pure water and 0.48 g of 60 mass% nitric acid was dropwise added thereto.

Then, 23.19 g of an anatase type titanium oxide dispersion ("PC-201", supplied by Titan Kogyo, Ltd., TEM particle diameter: 20 nm, concentration: 20.7 mass%) was dropwise added, and then the mixture was stirred at 30°C for 1.5 hours to prepare an anatase-type-titanium-oxide-containing coating liquid (M). Table 3 shows mass ratios and volume percentages of solid contents in the coating liquid (M). It was premised that the hydrolysis partial condensation product of titanium alkoxide had a specific gravity of 2.6 and that the anatase type titanium oxide had a specific gravity of 3.9.

The coating liquid (M) was applied onto a 3 mm thick quartz glass fully degreased and cleaned with acetone and methanol, and the it was applied with a spin coater such that it had a dry thickness of 45 nm, to give an anatase-type-titanium-oxide-containing film. In this case, it is theoretically calculated that the hydrolysis condensation product of titanium alkoxide is applied in an amount of 0.13 g per $m^2$

(2) The thus-formed film was once brought into a super-hydrophilicity state with a black light lamp, and then rendered hydrophobic by storing it in a dark place, and then its hydrophilization behavior caused by irradiation with ultraviolet ray was monitored using various light sources. As shown in Fig. 18, even when the main wavelengths of irradiation were 334 nm and 365 nm, the water contact angle gradually decreased. When the main wavelength of irradiation was 405 nm, almost no response was observed. When measured, the hydrophilization speeds from the short wavelength side were 0.00238, 0.00030 and 0.00001 (1/degree)/min.

When the wavelength at which the hydrophilization speed became 2 (l/deg/min/$10^5$) was determined on the basis of the relationship between the hydrophilization speed and the main wavelength of irradiation in the irradiation with ultraviolet ray of 300 nm or more, it was 386 nm.

Further, when the same sample was rendered hydrophobic by storing it in a dark place and then irradiated with an artificial sunshine lamp, the water contact angle was gradually decreased by the irradiation as shown in Fig. 19. When measured, the hydrophilization speed was 0.00507 (1/degree)/min.

Further, the same sample was measured for a methylene blue decomposing speed using an artificial sunshine lamp to show a ΔABS/min of 0.01007.

According to the AFM measurement, the surface roughness (Ra) and surface area (μ$m^2$) of the above sample were 1.78 nm and 900.49 μ$m^2$, and its specific surface area Sr was 1.00054. Table 2 shows these physical property values.

Table 2 shows a summary of the physical property values in the above Examples 1 to 4 and Comparative Example 1.

Table 2

| | Treatment conditions (treatment time period) | Lattice planes indexable | Wavelength at which hydrophilization speed becomes 2 (1/deg/min/$10^5$) | Crystal diameter (nm) of crystalline titanium oxide | Ratio (%) of crystalline titanium oxide having a crystal diameter in the range of 1 to 10 nm to total crystalline titanium oxide | Number of crystalline titanium oxide having a crystal diameter in the range of 1 to 10 nm (/2500 $nm^2$) | Content (%) of crystalline titanium oxide having a crystal diameter in the range of 1 to 10 nm in photocatalyst film surface | Mass ($g/m^2$) of titanium oxide compound | Hydrophilization speed (1/degree/h/105) | | Hydrophilization speed (1/degree/h/$10^5$) (*1) | Decomposing activity (ΔABS/min/$10^5$) (*1) | Ra (nm) | Sr |
|---|---|---|---|---|---|---|---|---|---|---|---|---|---|---|
| | | | | | | | | | Main wavelength of irradiation (nm) | | | | | |
| Example 1 | SWM60cycles (120h) | 101<br>–<br>200<br>– | (≦330) (*3) | 2~3 | 100 | 24 | 4 | 0.13 | 254<br>313<br>334<br>365 | 176<br>5<br>0<br>0 | 20 | 20 | 0.34 | 1.00009 |
| | SWM150cycles (300h) | 101<br>–<br>200<br>– | (≦330) (*3) | 2~3 | 100 | 26 | 7 | | 254<br>313<br>334<br>365 | 242<br>3<br>0<br>0 | 32 | 11 | 0.26 | 1.00009 |
| | SWM450cycles (900h) | 101<br>004<br>200<br>211 | (≦330) (*3) | 2~5 | 100 | 44 | 22 | | 254<br>313<br>334<br>365 | 278<br>12<br>0<br>0 | 47 | 62 | 0.63 | 1.00010 |
| | SWM750cycles (1500h) | 101<br>004<br>200<br>211<br>204 | 353 | 2~8 | 100 | 61 | 69 | | 254<br>313<br>334<br>365 | 616<br>144<br>10<br>1 | — | — | 0.68 | 1.00011 |
| Example 2 | SWM150cycles (300h) | 101<br>004<br>200<br>211 | 328 | 2~5 | 100 | 65 | 33 | 0.52 | 254<br>313<br>334<br>365 | 78<br>18<br>1<br>0 | 45 | 331 | 0.27 | 1.00005 |
| | SWM450cycles (900h) | 101<br>004<br>200<br>211<br>204 | 364 | 2~8 | 100 | 78 | 61 | | 254<br>313<br>334<br>365 | 489<br>176<br>36<br>2 | 368 | 443 | 0.50 | 1.00007 |
| | SWM750cycles (1500h) | 101<br>004<br>200<br>211<br>204 | 369 | 2~8 | 100 | 115 | 90 | | 254<br>313<br>334<br>365 | 767<br>293<br>40<br>4 | — | — | 0.73 | 1.00013 |
| Example 3 | SWM150cycles (300h) | 101<br>–<br>200<br>– | — | 2~3 | 100 | 23 | 4 | 0.13 | 254<br>313<br>334<br>365 | —<br>—<br>—<br>— | 19 | 26 | 3.55 | 1.00144 |
| Example 4 | 43°C · 50%RH (120h) | 101<br>004<br>200<br>211 | 352 | 2~6 | 100 | 47 | 24 | 0.13 | 254<br>313<br>334<br>365 | 159<br>31<br>6<br>1 | 33 | 140 | 0.20 | 1.00006 |
| Comparative Example 1 | — | –<br>–<br>–<br>–<br>– | 386 | 20 | 0 | — | — | 0.13 (*2) | 254<br>313<br>334<br>365<br>405 | —<br>—<br>238<br>30<br>1 | 507 | 1007 | 1.78 | 1.00054 |
| Example 5 | SWM150cycles (300h) | –<br>–<br>–<br>– | 325 | 2~3 | 100 | 17 | 3 | 0.068 | 310<br>320<br>334<br>350 | 8<br>3<br>1<br>0 | 11 | 4 | 4.78 | 1.00095 |
| | SWM450cycles (900h) | 101<br>004<br>200<br>211 | 341 | 2~5 | 100 | 46 | 23 | | 310<br>320<br>334<br>350<br>365 | 12<br>6<br>3<br>1<br>1 | 17 | 6 | 8.80 | 1.00026 |
| Comparative Example 2 | — | –<br>–<br>–<br>–<br>– | 376 | 20 | 0 | — | — | 0.041 (*2) | 310<br>320<br>334<br>350<br>365 | 89<br>44<br>10<br>7<br>6 | 63 | 678 | 14.70 | 1.00015 |
| Comparative Example 3 | — | –<br>–<br>–<br>–<br><br>– | 405 | — | 0 | — | — | 0.13 (*2) | 310<br>320<br>334<br>350<br>365<br>380 | 60<br>45<br>21<br>11<br>8<br>6 | — | — | 18.70 | 1.00063 |

*1 Irradiation with artificial sunshine lamp
*2 Amount of anatase or rutile type titanium oxide
*3 Estimated value

Table 3

| | Anatase type titanium oxide | Hydrolysis condensation product of titanium alkoxide |
|---|---|---|
| Mass% (charge ratio) | 80 | 20 |
| Specific gravity | 3.9 | 2.6 |
| Volume percentage (%) | 73 | 27 |

In Table 2, when the photocatalyst films of which the main surfaces contain, as a main component, titanium oxide compounds having a crystal diameter in the range of 1 to 10 nm in Examples 1 to 4 and the photocatalyst film of which the main surface contains, as a main component, a titanium oxide compound having a crystal diameter of over 10 nm in Comparative Example 1 are compared, it is seen that the titanium oxide compounds in Examples 1 to 4 produce an effect that they exhibit optically excited super-hydrophilicity under a sunshine light source but have their organic-material-decomposing activities inhibited and have excellent transparency.

Synthesis Example 3 Synthesis of organic component

700 Grams of methyl isobutyl ketone, 337.4 g of methyl methacrylate and 42.8 g of methacryloxypropyltrimethoxysilane were added to a 2L separable flask under nitrogen atmosphere, and the mixture was temperature-increased up to 60˚C. To this mixture solution was dropwise added a solution of 3.32 g of azobisisobutyronitrile in 116.6 g of methyl isobutyl ketone, to start a polymerizing reaction, and the mixture was stirred for 30 hours to give an organic component solution (D).

Example 5 A gradient film (thickness 100 nm) of titanium alkoxide hydrolysis product containing colloidal silica and aluminum nitrate and an organic component

(1) 6.12 Grams of aluminum nitrate-nonahydrate (purity 99 %, supplied by Wako Pure Chemical Industries, Ltd.) was dissolved in 42.9 g of ethyl cellosolve, 55.2 g of the titanium alkoxide hydrolysis condensation liquid (C) prepared in Synthesis Example 1 was ten added, and the mixture was fully stirred to give a solution (G). Then, 7.3 g of the organic component solution (D) prepared in Synthesis Example 2, 235.8 g of methyl isobutyl ketone, 138.9 g of ethyl cellosolve, 104.22 g of the above solution (G) and 13.9 g of colloidal silica (trade name: SNOWTEX IPA-ST, supplied by Nissan Chemical Industries, Ltd.) were mixed in this order, and the mixture was stirred in a hot bath at 32˚C for 24 hours to prepare a gradient film coating liquid (H) of a titanium alkoxide hydrolysis product containing colloidal silica and aluminum nitrate that were mixed and an organic component. The gradient film coating liquid (H) was applied onto a 2 mm thick colorless transparent acryl plate (ACRYLITE L, supplied by Mitsubishi Rayon Co., Ltd.) to form a coating film having a wet thickness of approximately 10 μm and then a dry thickness of 100 nm with a spin coater. The gradient film coating liquid (H) has specific gravity of 0.87 and a total solid component concentration of 2.78 mass%. Since the mass ratio of the titanium alkoxide hydrolysis condensation product as $TiO_2$ to the total solid component concentration is 28.2 %, it is theoretically calculated that the titanium alkoxide hydrolysis condensation product that can generate a fine crystal is applied in an amount of 0.068 g per $m^2$.

(2) Then, the film was exposed under the carbon arc type sunshine weather meter (SWM) conditions by repeating 150 cycles (300 hours). Fig. 20 shows a transmission electron microscope photograph thereof. In Fig. 20, fine crystals (crystalline titanium oxide particles) having a diameter of 2-3 nm were observed in the amorphous titanium oxide in the film. On the other hand, no clear diffraction ring was observed in a selected area diffraction image, so that the fine crystals were not identifiable. This is presumably what is caused by a low concentration of the fine particles. In the thin film formed of a titanium alkoxide hydrolysis product which film was exposed by the same cycles, it was observed that fine particles having an equivalent crystal diameter were so formed as to be indexable as shown in Example 1. This is presumably because the aluminum nitrate used as a crystallization inhibitor was not contained. That is, it is at least suggested that the speed of fine crystal growth can be adjusted by adding aluminum nitrate. In this case, the number of fine crystal grains in the observed surface (50 nm x 50 nm = 2,500 $nm^2$) was 17. Further, the ratio of the number of crystals having a diameter in the range of 1 to 10 nm to the total crystalline titanium oxide number in the observed plane was 100 %. Further, the content of crystalline titanium oxide having a crystal diameter in the range of 1 to 10 nm in the main surface of the photocatalyst film was 3 %.

(3) Further, the hydrophilization behavior of the exposed sample caused by irradiation with ultraviolet ray was monitored using various light sources. As shown in Fig. 21, when the main wavelengths for the irradiation were 310 nm and 320 nm, the water contact angle gradually decreased, while almost no change was observed when they were 334 nm or more. The sample was measured for hydrophilization speed to show that the speeds from the short wavelength side were 0.00008, 0.00003, 0.00001 and 0.00000 (1/degree)/min.

When the wavelength at which the hydrophilization speed became 2 ($l/deg/min/10^5$) was determined on the basis of the relationship between the hydrophilization speed and the main wavelength of irradiation in the irradiation with ultraviolet ray of at 300 nm or more, it was 325 nm. Further, the hydrophilization speed was 2 ($l/deg/min/10^5$) or more in all the wavelength region of 300 to 325 nm.

Further, when the same sample was rendered hydrophobic by storing it in a dark place and then irradiated with an artificial sunshine lamp, the water contact angle was gradually decreased by the irradiation as shown Fig 22. When

measured, the hydrophilization speed was 0.00011 (1/degree)/min.
Further, the same sample was measured for a methylene blue decomposing speed using an artificial sunshine lamp, to show a ΔABS/min of 0.00004.
According to the AFM measurement, the surface roughness (Ra) and surface area (μ$m^2$) of the above sample were 4.78 nm and 900.852 μ$m^2$, and its specific surface area Sr was 1.00095. Table 2 shows these physical property values.
(4) The same test sample as that obtained in the above (1) was exposed by repeating 450 cycles (900 hours) with SWM in (2), and a transmission electron microscope photograph of the sample was taken, according to which fine crystals (crystalline titanium oxide particles) having a diameter of 2-5 nm were observed. Table 2 shows lattice planes that were indexable, the number of fine crystal particles in an observed plane (50 nm x 50 nm = 2,500 $nm^2$) and a ratio of number of crystals having a crystal diameter in the range to 1 to 10 nm to the total number of crystals in the observed plane.
Further, Table 2 shows a wavelength at which the hydrophilization speed became 2 (1/deg/min/$10^5$) determined in the same manner as above with regard to the exposed sample. Further, Figs. 22 and 23 show hydrophilization behavior of each sample when light sources and wavelengths of irradiation were changed in the same manner as in the above (3), and Table 2 shows measurement results of the hydrophilization speeds (1/degree)/h, methylene blue decomposing speeds (ΔABS/minute), surface roughness (Ra) and specific surface areas Sr.
As described above, it is clear that the crystalline titanium oxide of this invention responds on a short wavelength side as compared with general anatase type titanium oxide in Comparative Example 2 to be described later, and it is clear that the crystalline titanium oxide is a photocatalyst material that exhibits optically excited super-hydrophilicity under irradiation with sunlight without requiring any special treatment of the titanium oxide surface and that has an organic-material-decomposing activity inhibited.
(5) Fig. 24 shows the XPS depth profile result of the above sample. As shown in Fig. 24, it is seen that the sample has a component-gradient state in which $SiO_2$ is positioned in the outermost surface of the sample, $TiO_2$ is arranged below it and C derived from the organic component is arranged further below it.

Comparative Example 2 physical properties of anatase-type-titanium-oxide-containing film

(1) A coating liquid containing anatase type titanium oxide in the same amount ratio as the content (volume percentage) of the titanium oxide compound contained in the gradient coating film liquid (H) in Example 5 was prepared in the following manner. Table 4 shows a mass ratio and volume percentage of a solid component contained in the gradient coating film liquid (H). It was premised that the hydrolysis condensation product of titanium alkoxide had a specific gravity of 2.6 and that the organic component had a specific gravity of 1.19. As shown in Table 4, it was calculated that the hydrolysis condensation product of titanium alkoxide had a volume percentage of 21 %. Accordingly, a coating liquid (I) having an anatase type titanium oxide volume percentage of 21 % was prepared in the following manner.
6.211 Grams of the partial hydrolysis condensation liquid (C) of titanium alkoxide in Synthesis Example 1 was added to a mixture solution of 35.99 g of ethyl cellosolve and 40.3 g of n-propanol, and then a mixture solution of 5.447 g of pure water and 0.145 g of 60 mass% nitric acid was dropwise added thereto. Then, 1.304 g of an anatase type titanium oxide dispersion ("PC-201" supplied by Titan Kogyo, Ltd., concentration: 20.7 mass%) was dropwise added, and 0.63 g of colloidal silica (SNOWTEX IPA-ST, supplied by Nissan Chemical Industries, Ltd., concentration: 30 mass%) was finally dropwise added. The mixture was stirred at 33˚C for 30 minutes to prepare an anatase-type-titanium-oxide-containing coating liquid (I). The mass ratio and volume percentages of solid components contained in the coating liquid (I) are as shown in Table 5. The coating liquid (I) contains a hydrolysis condensation product of titanium alkoxide, while the hydrolysis condensation product of titanium alkoxide immediately after a film is formed exists in the state of being completely amorphous, and in this state, it hence does not exhibit photocatalytic activity.
The above coating liquid (I) was applied onto a 2 mm thick colorless transparent acryl plate (ACRYLITE L, supplied by Mitsubishi Rayon Co., Ltd.) to form a coating film having a wet thickness of approximately 10 μm and then a dry thickness of 100 nm with a spin coater. The gradient film coating liquid (I) has specific gravity of 0.86 and a total solid component concentration of 1 mass%. Since the mass ratio of the anatase type titanium oxide to the total solid component concentration is 30 %, it is theoretically calculated that the anatase type titanium oxide is applied in an amount of 0.041 g (per $m^2$).
(2) The sample with the film formed was once brought into a super-hydrophilicity state with a black light lamp and then rendered hydrophobic by storing it in a dark place, and then its hydrophilization behavior caused by irradiation with ultraviolet ray was monitored using various light sources.
As shown in Fig. 25, even when the main wavelength of irradiation was 365 nm, the water contact angle decreased.

When measured, the hydrophilization speeds from the short wavelength side were 0.00089, 0.00044, 0.00010, 0.00007 and 0.00006 (1/degree)/min.
Further, a wavelength at which the hydrophilization speed became 2 (l/deg/min/$10^5$) was determined in the same manner as above with regard to the sample after the irradiation with light, and is shown in Table 2.
Further, when the same sample was rendered hydrophobic by storing it in a dark place and then irradiated with an artificial sunshine lamp, the water contact angle was gradually decreased by the irradiation as shown in Fig. 26. When measured, the hydrophilization speed was 0.00063 (1/degree)/min.

Further, the same sample was measured for a methylene blue decomposing speed using an artificial sunshine lamp to show a ΔABS/min of 0.00678.
According to the AFM measurement, the surface roughness (Ra) and surface area (μ$m^2$) of the above sample were 14.7 nm and 900.134 μ$m^2$, and its specific surface area Sr was 1.00015. Table 2 shows these physical property values.

Table 4

| | Aluminum nitrate | Hydrolysis condensation product of titanium alkoxide | Organic component | Colloidal silica |
|---|---|---|---|---|
| Mass% (charge amount) | 25 | 28.2 | 16.8 | 30 |
| Specific gravity | 1.872 | 2.6 | 1.19 | 2.1 |
| Volume percentage (%) | 25 | 21 | 27 | 27 |

Table 5

| | Anatase type titanium oxide | Hydrolysis condensation product of titanium alkoxide | Colloidal silica |
|---|---|---|---|
| Mass% (charge amount) | 30 | 49 | 21 |
| Specific gravity | 3.9 | 2.6 | 2.1 |
| Volume percentage (%) | 21 | 52 | 27 |

Comparative Example 3 Preparation Example of rutile-type-titanium-oxide-containing film

(1) 16.9 Grams of the partial hydrolysis condensation product (C) of titanium alkoxide in Synthesis Example 1 was added to a mixture solution of 167.4 g of ethyl cellosolve and 179.0 g of n-propanol, and then a mixture solution of 4.55 g of pure water and 0.17 g of 60 mass% nitric acid was dropwise added thereto. Thereafter, 32.0 g of a rutile type titanium oxide dispersion ( "PTIPA-15WT%-GO2" supplied by C. I. Kasei Co., Ltd.) was dropwise added, and the mixture was stirred at 30˚C for 1.5 hours to prepare a rutile-type-titanium-oxide-containing coating solution (N). Table 6 shows the mass ratio and volume percentage of solid components contained in the coating liquid (N). It was premised that the hydrolysis condensation product of titanium alkoxide had a specific gravity of 2.6 and that the rutile type titanium oxide had a specific gravity of 4.2.
The coating liquid (N) was applied onto a 3 mm thick quartz glass fully degreased and cleaned with acetone and methanol, and the it was applied with a spin coater such that it had a dry thickness of 45 nm, to give a rutile-type-titanium-oxide-containing film. In this case, it is theoretically calculated that the rutile type titanium oxide is applied in an amount of 0.13 g per $m^2$.
(2) The thus-formed film was once brought into a super-hydrophilicity state with a black light lamp, and then rendered hydrophobic by storing it in a dark place, and then its hydrophilization behavior caused by irradiation with ultraviolet ray was monitored using various light sources. As shown in Fig. 27, even when the main wavelengths of irradiation were 310 nm, 320 nm, 334 nm, 350 nm, 365 nm and 380 nm, the water contact angle gradually decreased. The film was measured for hydrophilization speed to show that the speeds from the short wavelength side were 0.00060, 0.00045, 0.00021, 0.00011, 0.00008 and 0.00006 (1/degree)/min.

When the wavelength at which the hydrophilization speed became 2 (l/deg/min/$10^5$) was determined on the basis of the

relationship between the hydrophilization speed and the main wavelength of irradiation in the irradiation with ultraviolet ray at 300 nm or more, it was 405 nm.
According to the AFM measurement, the surface roughness (Ra) and surface area ($\mu m^2$) of the above sample were 18.7 nm and 900.57 $\mu m^2$, and its specific surface area Sr was 1.00063. Table 2 shows these physical property values.

Table 6

| | Rutile type titanium oxide | Hydrolysis condensation Product of titanium alkoxide |
|---|---|---|
| Mass% (charge amount) | 80 | 20 |
| Specific gravity | 4.2 | 2.6 |
| Volume percentage (%) | 71 | 29 |

Example 6 Preparation Example of photocatalyst film containing titanium oxide nano-tubes

1 Gram of anatase-rutile mixed phase type titanium oxide (P-25, supplied by NIPPON AEROSIL CO., LTD.) was added to a Teflon vessel containing a 10M NaOH (108 g ≑ 80 mL) aqueous solution, and the mixture was stirred with a stirrer for 30 minutes. Then, the mixture was transferred into an autoclave, and the autoclave was hermetically closed and placed in an oven at 120°C, followed by heating at 40°C. After the heating, the content inside was taken out after cooled to room temperature and it was subjected to centrifugal separation to remove supernatant. The resultant white precipitate was neutralized with a 0.1M $HNO_3$ aqueous solution and then washed with distilled water, and a 1M $HNO_3$ aqueous solution was added to increase a total mixture amount up to 50 mL. The mixture treated at room temperature for 15 hours to give a slurry containing a titanium dioxide reaction.
A predetermined amount of a sample was collected from a slurry obtained in the same manner as in the above method and observed through a transmission electron microscope (H-9000UHR, supplied by Hitachi, Limited), to show the formation of titanium oxide nano-tubes having a tube thickness of 3 nm, a tube diameter of 10 nm, a tube length of 1 $\mu$m or more (larger than a viewing field and hence not identifiable).

(2) The slurry obtained in the above (1) was gradually added to 50 mL of a binder aqueous solution (concentration 2 %) obtained by mixing a water-soluble acryl silicone resin (WS-910, supplied by DIC Corporation) as a binder component with its curing agent (WS-950, supplied by DIC Corporation), and the mixture was fully stirred to give a coating liquid.

The thus-obtained coating liquid was spin-coated on a 2 mm thick colorless transparent acryl plate (ACRYLITE L, supplied by Mitsubishi Rayon Co., Ltd.) at 500 rpm for 2.5 minutes, and the formed coating was dried at 70°C for 10 hours to form a thin film having a thickness of 500 nm.
The thus-formed thin film was surface-treated by corona discharge (1,000 kj/$m^2$) to modify the acryl silicone surface partly. The thus-obtained thin film was then stored in a clean dark place to give a functional thin film. The resultant thin film had a total light transmittance of 94 %.
The above thin film was irradiated with light under an artificial sunshine lamp (3 mW/$cm^2$) and measured for a change in contact angle with time by means of a contact angle meter (G-1-1000, supplied by ERMA INC.). Fig. 28 shows the results. As shown in Fig. 28, it showed an initial WCA (water contact angle) of 30°, while the water contact angle decreased to 20° in 30 hours and 10° in 66 hours, and hydrophilization was observed.

Industrial Utility

The photocatalyst film of this invention exhibits super-hydrophilicity as a photocatalyst medium under irradiation with sunlight and has the property that its decomposing activity is inhibited. When it is supposed to use the photocatalyst film of this invention in outdoor environments, therefore, the photocatalyst film that is formed directly on an organic substrates without providing an activity-blocking layer, for the purpose, for example, of an anti-fogging property, a drip-proof property, an antifouling property, a frost-preventing property or a snow-sliding property is suitable, the substrates including substrates formed, for example, of an acrylic resin such as polymethyl methacrylate, etc., a styrene resin such as polystyrene, an ABS resin, etc., an olefin resin such as polyethylene, polypropylene, etc., a polyester resin such as polyethylene terephthalate, polyethylene naphthalate, etc., a polyamide resin such as 6-nylon, 6,6-nylon, etc., a polyvinyl chloride resin, a polycarbonate resin, a polyphenylene sulfide resin, a polyphenylene ether resin, a polyimide resin, a cellulose resin such as cellulose acetate, etc., and the like.
In this invention, further, the organic substrate also includes substrates formed of materials other than an

organic material, such as substrates formed of a metal material, a glass or ceramic material and other inorganic or metal material, each substrate having an organic coating film on the surface thereof.

Naturally, the photocatalyst film of this invention can be formed on substrates formed of materials other than the organic material, such as a metal material, a glass or ceramic material and other various inorganic or metal materials.

## Claims

1. A photocatalyst film of which at least one main surface contains photo-semiconductor crystallization product, said main surface being a surface that becomes hydrophilic by irradiation with light,
wherein the hydrophilization speed thereof when it is irradiated with light having a half-value width of 15 nm or less after kept in a dark place is less than 2 (l/deg/min/$10^5$) in an irradiated-light wavelength region of 370 nm or more and is 2 (l/deg/min/$10^5$) or more at least partly in an irradiated-light wavelength region of 300 to 360 nm

2. A photocatalyst film of which at least one main surface contains, as a photo-semiconductor crystallization product, photo-semiconductor particles having a crystal diameter in the range of 1 to 10 nm.

3. The photocatalyst film as recited in claim 1 or 2,
wherein said photo-semiconductor crystallization product contains crystalline titanium oxide.

4. The photocatalyst film as recited in claim 3, wherein the content of the crystalline titanium oxide having a crystal diameter in the range of 1 to 10 nm in the total crystalline titanium oxide is 90 % or more.

5. The photocatalyst film as recited in claim 3 or 4,
wherein the content of the crystalline titanium oxide having a crystal diameter in the range of 1 to 10 nm in the total crystalline titanium oxide is 100 %.

6. The photocatalyst film as recited in any one of claims 3 to 5, wherein the content of the crystalline titanium oxide having a crystal diameter in the range of 1 to 10 nm in the at least one main surface is 3 % or more.

7. The photocatalyst film as recited in any one of claims 3 to 5, wherein the content of the crystalline titanium oxide having a crystal diameter in the range of 1 to 10 nm in the at least one main surface is 5 % or more.

8. The photocatalyst film as recited in any one of claims 3 to 7, which has a portion where at least five crystal grains exist when its cross section in the range of 50 nm x 50 nm is observed through a transmission electron microscope.

9. The photocatalyst film as recited in any one of claims 3 to 8, wherein the at least one main surface contains crystalline titanium oxide and amorphous titanium oxide which exist together.

10. The photocatalyst film as recited in any one of claims 3 to 9, wherein said crystalline titanium oxide is dispersed in the amorphous titanium oxide.

11. The photocatalyst film as recited in any one of claims 3 to 10, which has a thickness of 1 $\mu$m or less.

12. The photocatalyst film as recited in any one of claims 1 to 11, wherein said main surface has a contact angle of less than 20 degrees to water when the photocatalyst film is irradiated with sunlight.

13. The photocatalyst film as recited in any one of claims 1 to 12, wherein a decomposing speed of methylene blue under the irradiation with artificial sunshine of 3 mW/$cm^2$ is 0.1 or less in terms of an absorbance-decreasing speed $\Delta$ABS/min at a maximum absorption wavelength of the methylene blue applied thereon.

14. The photocatalyst film as recited in any one of claims 1 to 13, wherein said photo-semiconductor crystallization product is present in a hydrolysis condensation product of titanium alkoxide, and said titanium alkoxide has the form of a composite in which the titanium alkoxide forms a hydrolysis condensate with an organic polymer compound and the content thereof is continuously changed in the depth direction from a surface.

15. The photocatalyst film as recited in any one of claims 1 to 24, which further contains fine particles of a metal compound other than the photo-semiconductor crystallization product.

**16.** The photocatalyst film as recited in claim 15, wherein the fine particles of a metal compound other than the photo-semiconductor crystallization product are silica fine particles.

**17.** The photocatalyst film as recited in any one of claims 1 to 16, which further contains at least one metal compound selected from an inorganic metal salt, an organic metal salt and an alkoxide of metal other than titanium and silicon.

**18.** The photocatalyst film as recited in claim 17, wherein the metal compound is aluminum nitrate.

**19.** A process for producing the photocatalyst film recited in any one of claims 3 to 18, which comprises heat-treating an amorphous titanium oxide film at a temperatures of 100˚C or lower in the presence of water.

**20.** The process as recited in claim 19, wherein said amorphous titanium oxide film is formed by applying only once a coating agent containing a composite that is a hydrolysis condensation product of titanium alkoxide and an organic polymer compound, whereby the content of the hydrolysis condensation product of titanium alkoxide is continuously changed in the depth direction from a surface.

**21.** A photocatalyst film of which at least one main surface contains, as a photo-semiconductor crystallization product, photo-semiconductor nano-tubes having a tube thickness in the range of 1 to 10 nm.

**22.** The photocatalyst film as recited in claims 1 or 21,
wherein said photo-semiconductor crystallization product contains crystalline titanium oxide nano-tubes.

**23.** The photocatalyst film as recited in claim 21 or 22, which further contains a binder component.

**24.** An article having the photocatalyst film recited in any one of claims 1 to 18 and 21 to 23 or the photocatalyst film obtained by the process recited in any one of claims 19 and 20 on a surface of a substrate.

**25.** The article as recited in claim 24, wherein said substrate is an organic substrate.

**26.** The article as recited in claim 24 or 25, which further has an functional film having a thickness of 500 nm or less on a surface thereof.

**27.** The article as recited in claim 26, wherein said functional film contains silica.

**28.** A method of hydrophilization, which comprises using the article recited in any one of claims 24 to 27 under irradiation with sunlight.

FIG. 1

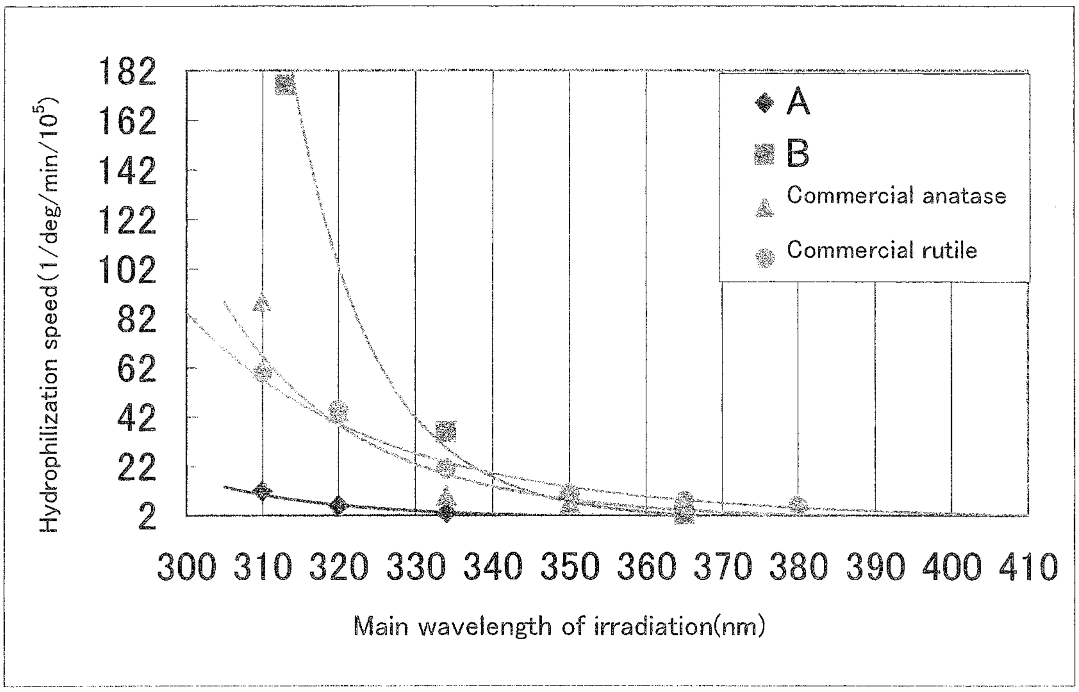
182
162
142
122
102
82
62
42
22
2
300 310 320 330 340 350 360 370 380 390 400 410
Hydrophilization speed (1/deg/min/10^5)
Main wavelength of irradiation(nm)
A
B
Commercial anatase
Commercial rutile

FIG. 2

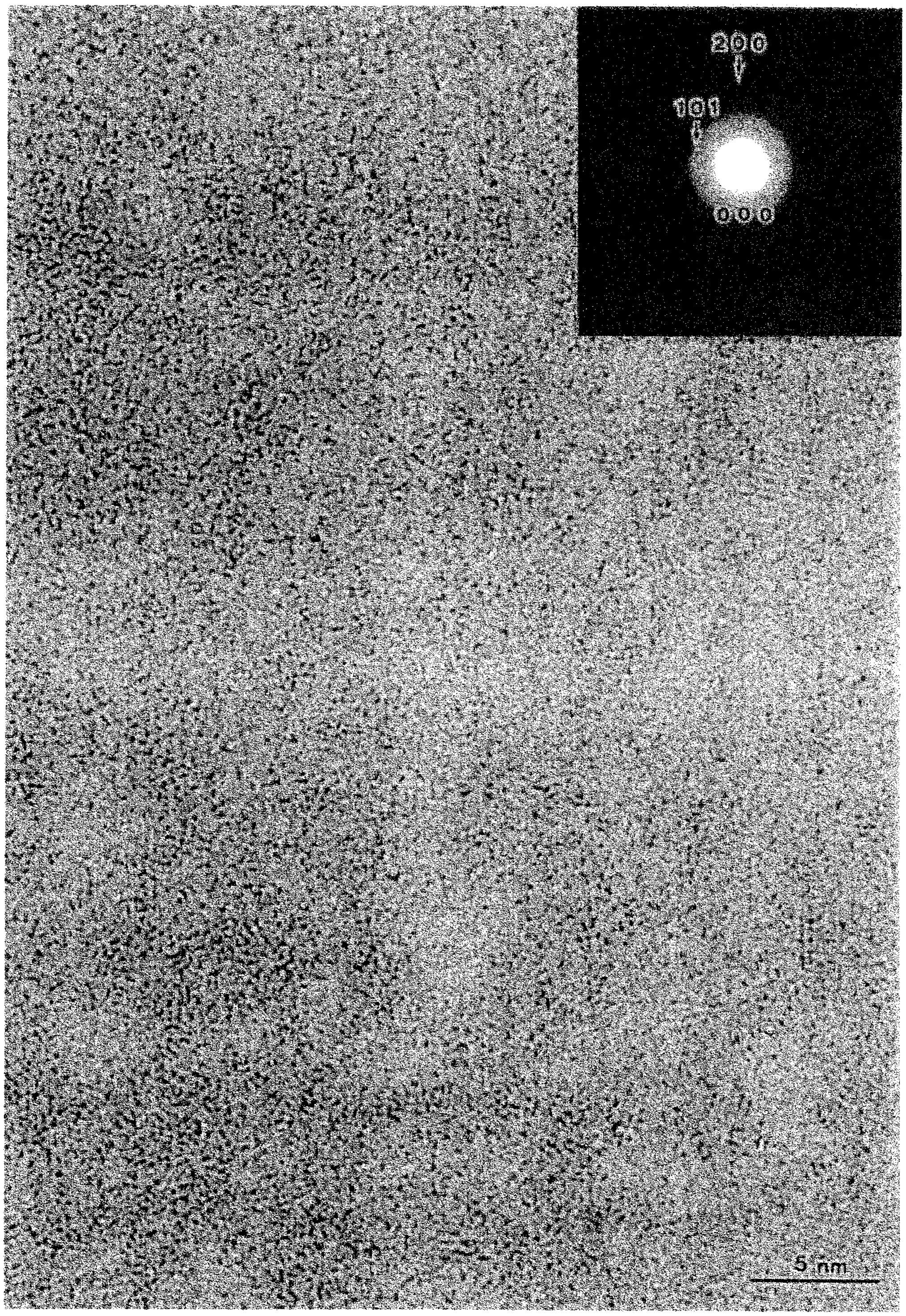

FIG. 3

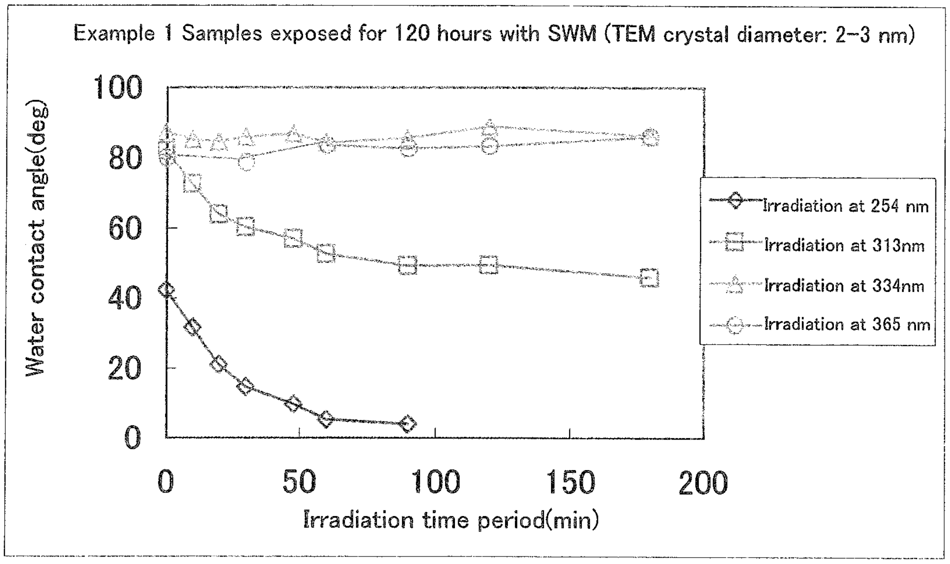
Example 1 Samples exposed for 120 hours with SWM (TEM crystal diameter: 2-3 nm)
Water contact angle(deg)
100
80
60
40
20
0
0
50
100
150
200
Irradiation time period(min)
Irradiation at 254 nm
Irradiation at 313nm
Irradiation at 334nm
Irradiation at 365 nm

FIG. 4

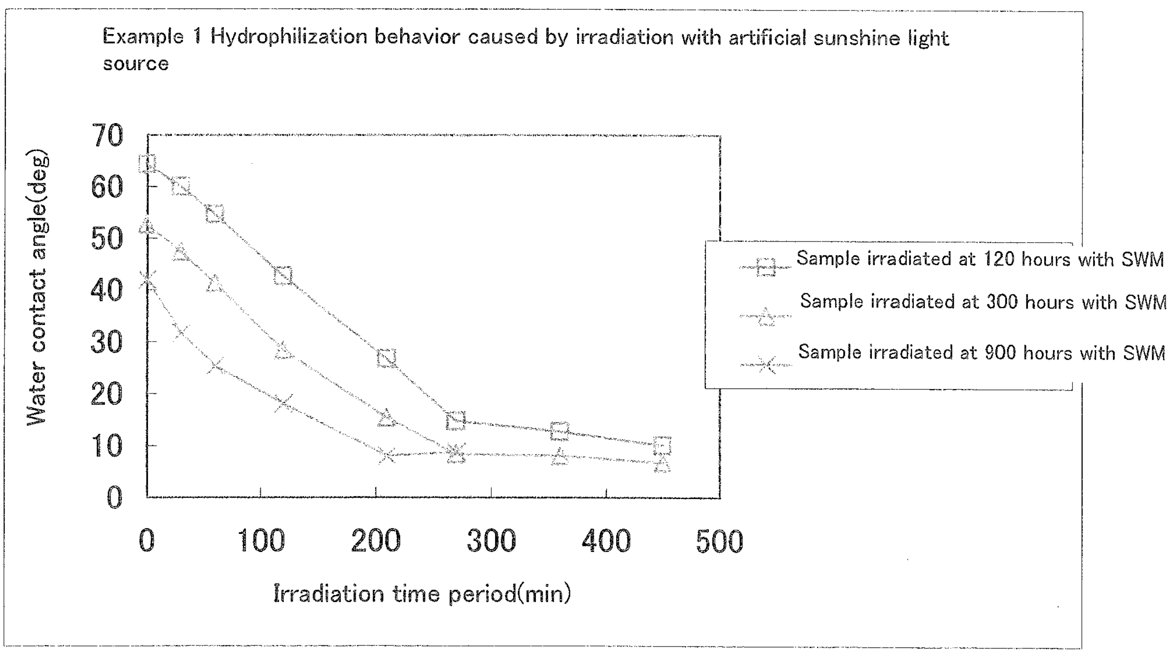
Example 1 Hydrophilization behavior caused by irradiation with artificial sunshine light source
Water contact angle(deg)
70
60
50
40
30
20
10
0
0
100
200
300
400
500
Irradiation time period(min)
Sample irradiated at 120 hours with SWM
Sample irradiated at 300 hours with SWM
Sample irradiated at 900 hours with SWM

FIG. 5

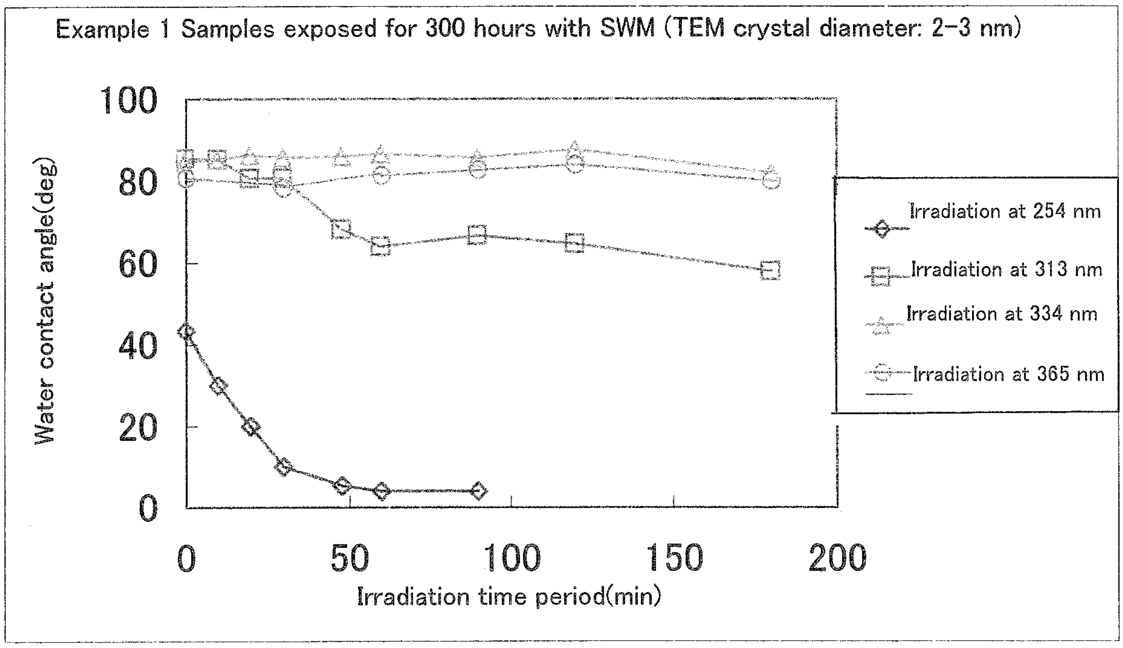
Example 1 Samples exposed for 300 hours with SWM (TEM crystal diameter: 2-3 nm)
Water contact angle(deg)
100
80
60
40
20
0
0
50
100
150
200
Irradiation time period(min)
Irradiation at 254 nm
Irradiation at 313 nm
Irradiation at 334 nm
Irradiation at 365 nm

FIG. 6

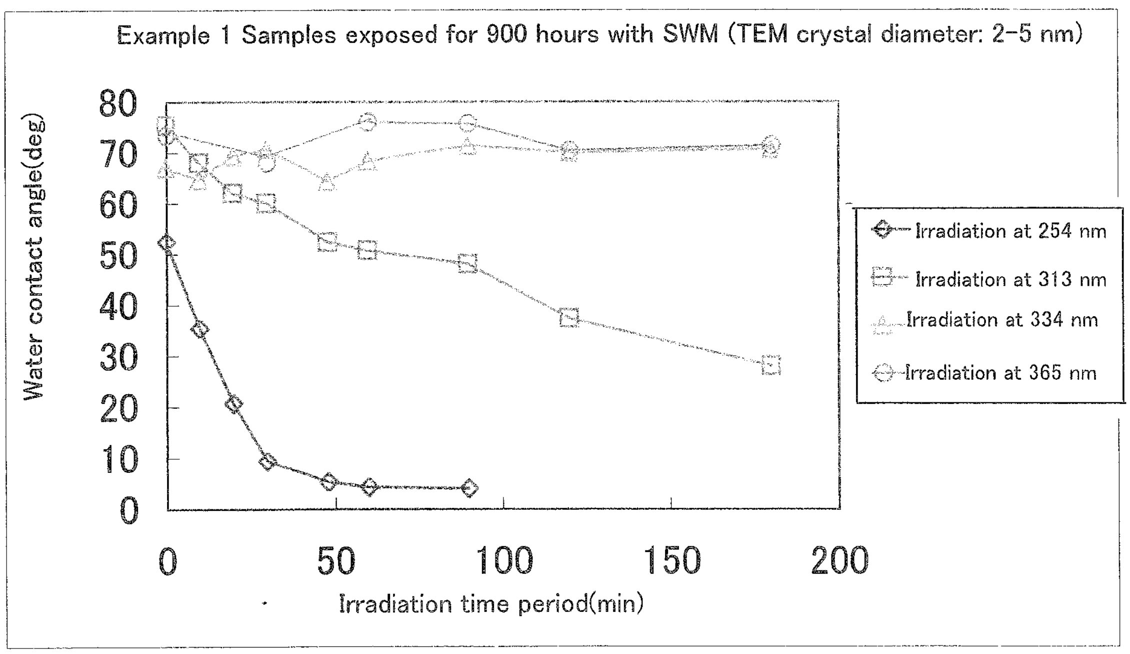
Example 1 Samples exposed for 900 hours with SWM (TEM crystal diameter: 2-5 nm)
Water contact angle(deg)
80
70
60
50
40
30
20
10
0
0
50
100
150
200
Irradiation time period(min)
Irradiation at 254 nm
Irradiation at 313 nm
Irradiation at 334 nm
Irradiation at 365 nm

FIG. 7

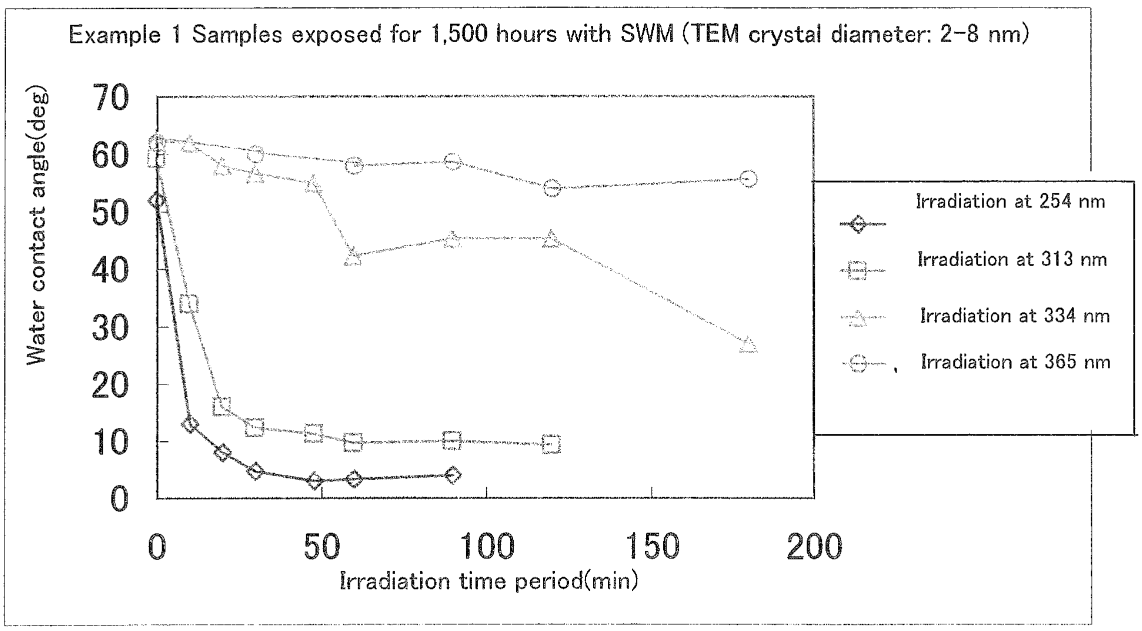
Example 1 Samples exposed for 1,500 hours with SWM (TEM crystal diameter: 2-8 nm)
Water contact angle(deg)
70
60
50
40
30
20
10
0
0
50
100
150
200
Irradiation time period(min)
Irradiation at 254 nm
Irradiation at 313 nm
Irradiation at 334 nm
Irradiation at 365 nm

FIG. 8

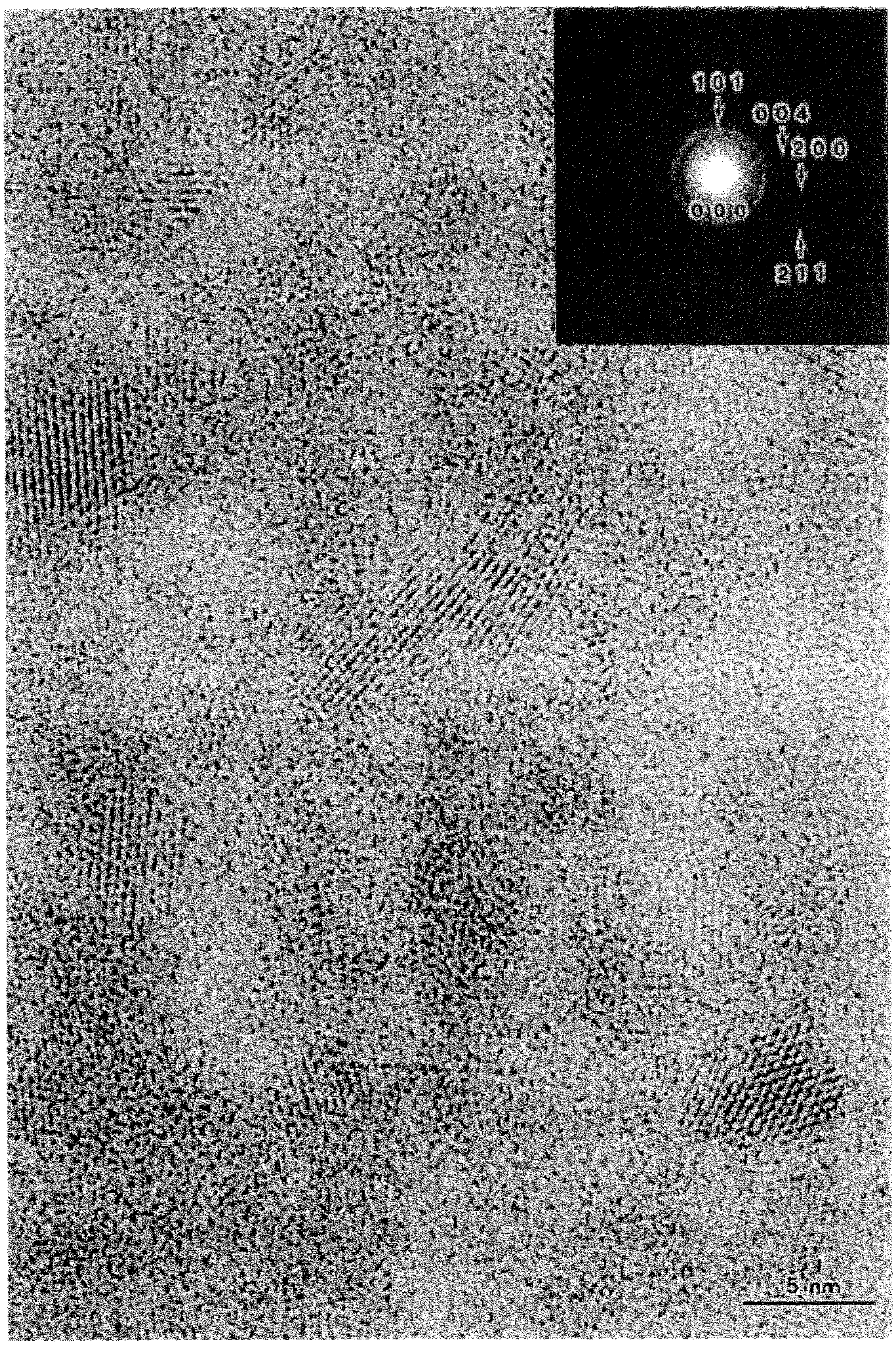

FIG. 9

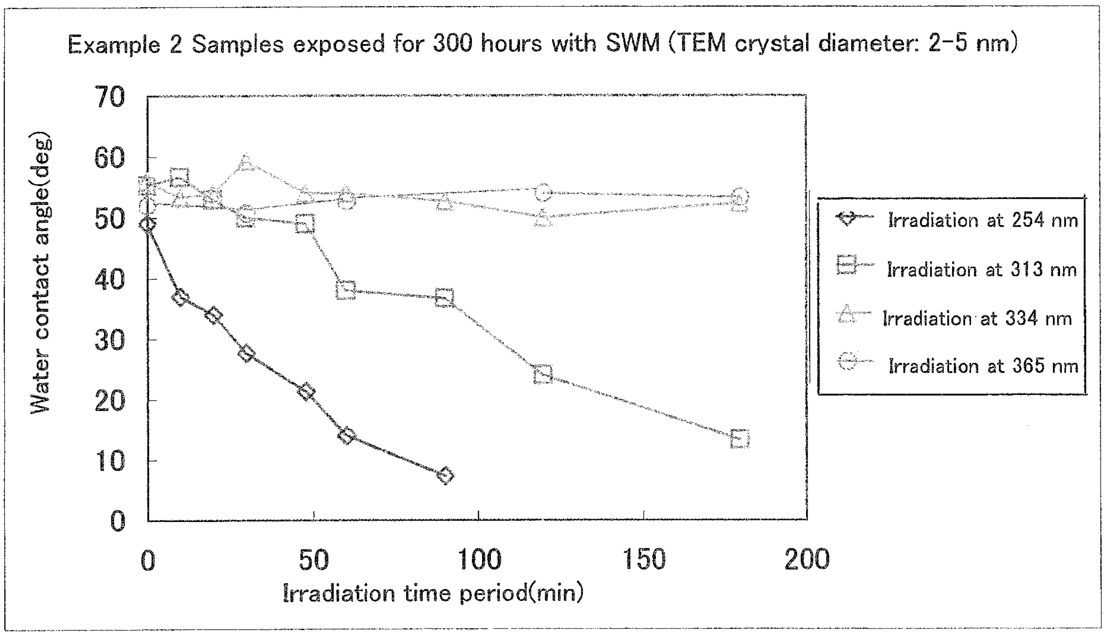
Example 2 Samples exposed for 300 hours with SWM (TEM crystal diameter: 2-5 nm)
Water contact angle(deg)
70
60
50
40
30
20
10
0
0
50
100
150
200
Irradiation time period(min)
Irradiation at 254 nm
Irradiation at 313 nm
Irradiation at 334 nm
Irradiation at 365 nm

FIG. 1 0

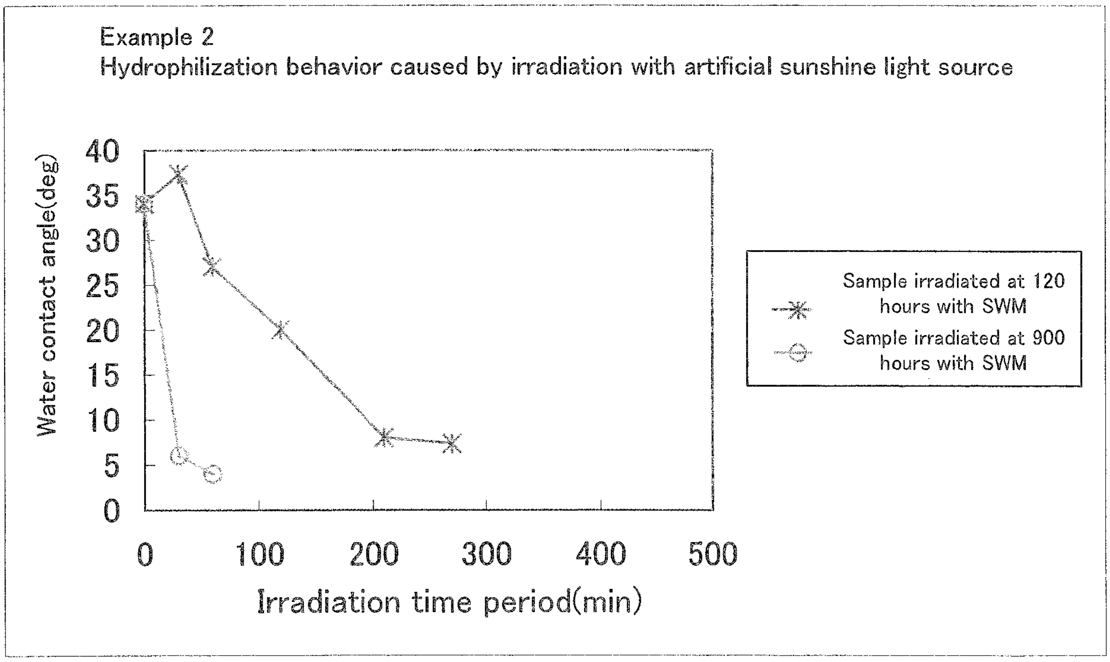
Example 2
Hydrophilization behavior caused by irradiation with artificial sunshine light source
Water contact angle(deg)
40
35
30
25
20
15
10
5
0
0
100
200
300
400
500
Irradiation time period(min)
Sample irradiated at 120 hours with SWM
Sample irradiated at 900 hours with SWM

FIG. 11

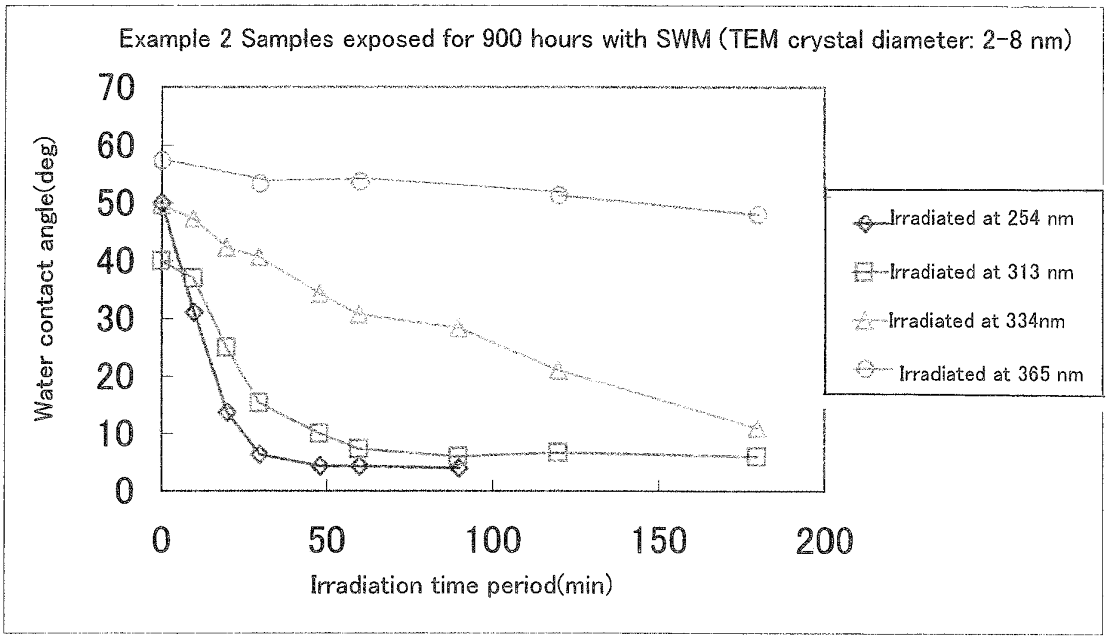
Example 2 Samples exposed for 900 hours with SWM (TEM crystal diameter: 2-8 nm)
70
60
50
40
30
20
10
0
Water contact angle(deg)
0
50
100
150
200
Irradiation time period(min)
Irradiated at 254 nm
Irradiated at 313 nm
Irradiated at 334nm
Irradiated at 365 nm

FIG. 12

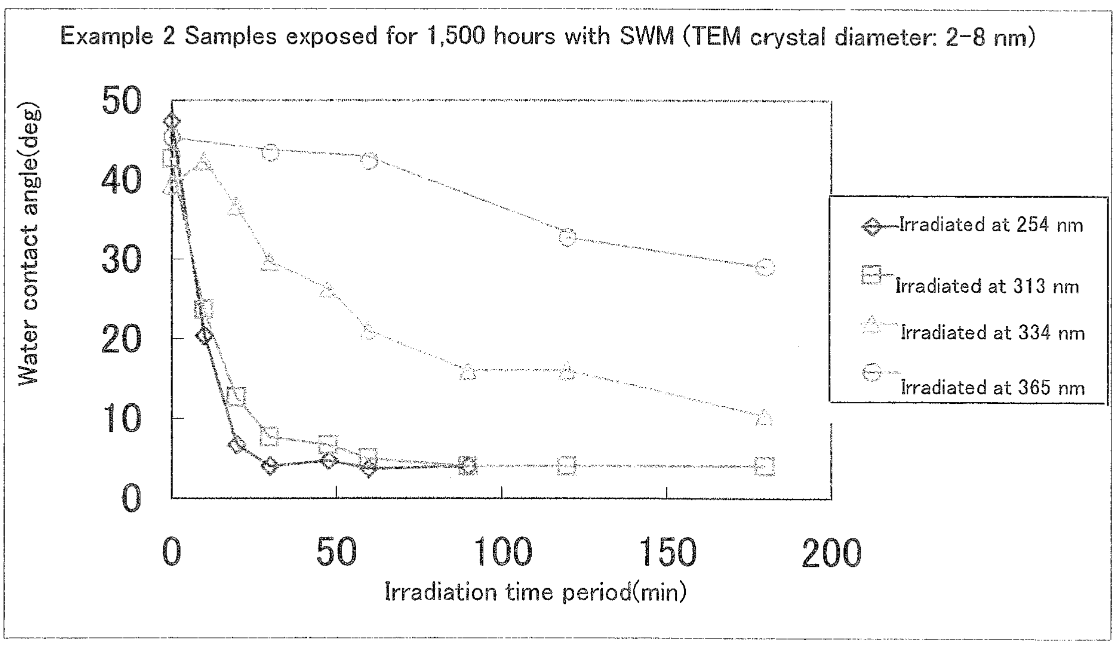
Example 2 Samples exposed for 1,500 hours with SWM (TEM crystal diameter: 2-8 nm)
50
40
30
20
10
0
Water contact angle(deg)
0
50
100
150
200
Irradiation time period(min)
Irradiated at 254 nm
Irradiated at 313 nm
Irradiated at 334 nm
Irradiated at 365 nm

FIG. 1 3

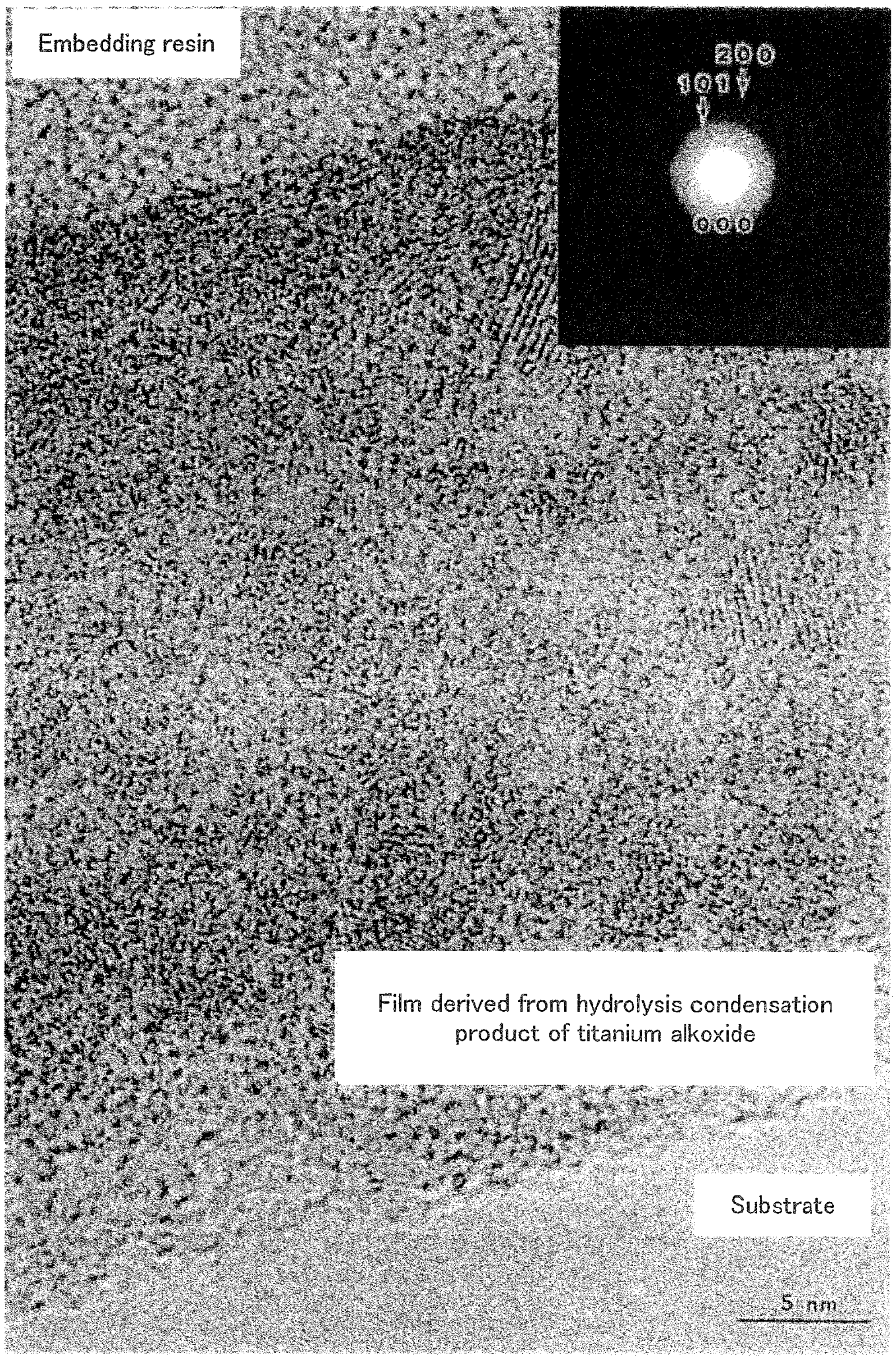
Embedding resin
200
101
000
Film derived from hydrolysis condensation product of titanium alkoxide
Substrate
5 nm

FIG. 1 4

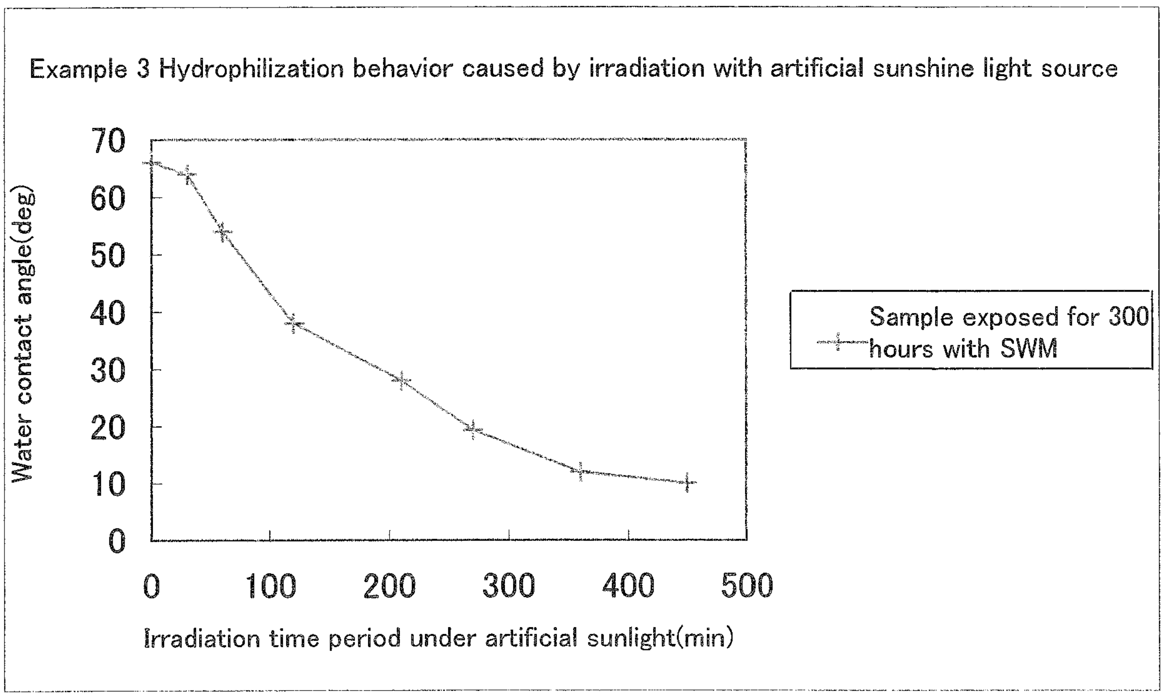
Example 3 Hydrophilization behavior caused by irradiation with artificial sunshine light source
Water contact angle(deg)
70
60
50
40
30
20
10
0
0
100
200
300
400
500
Irradiation time period under artificial sunlight(min)
Sample exposed for 300 hours with SWM

FIG. 1 5

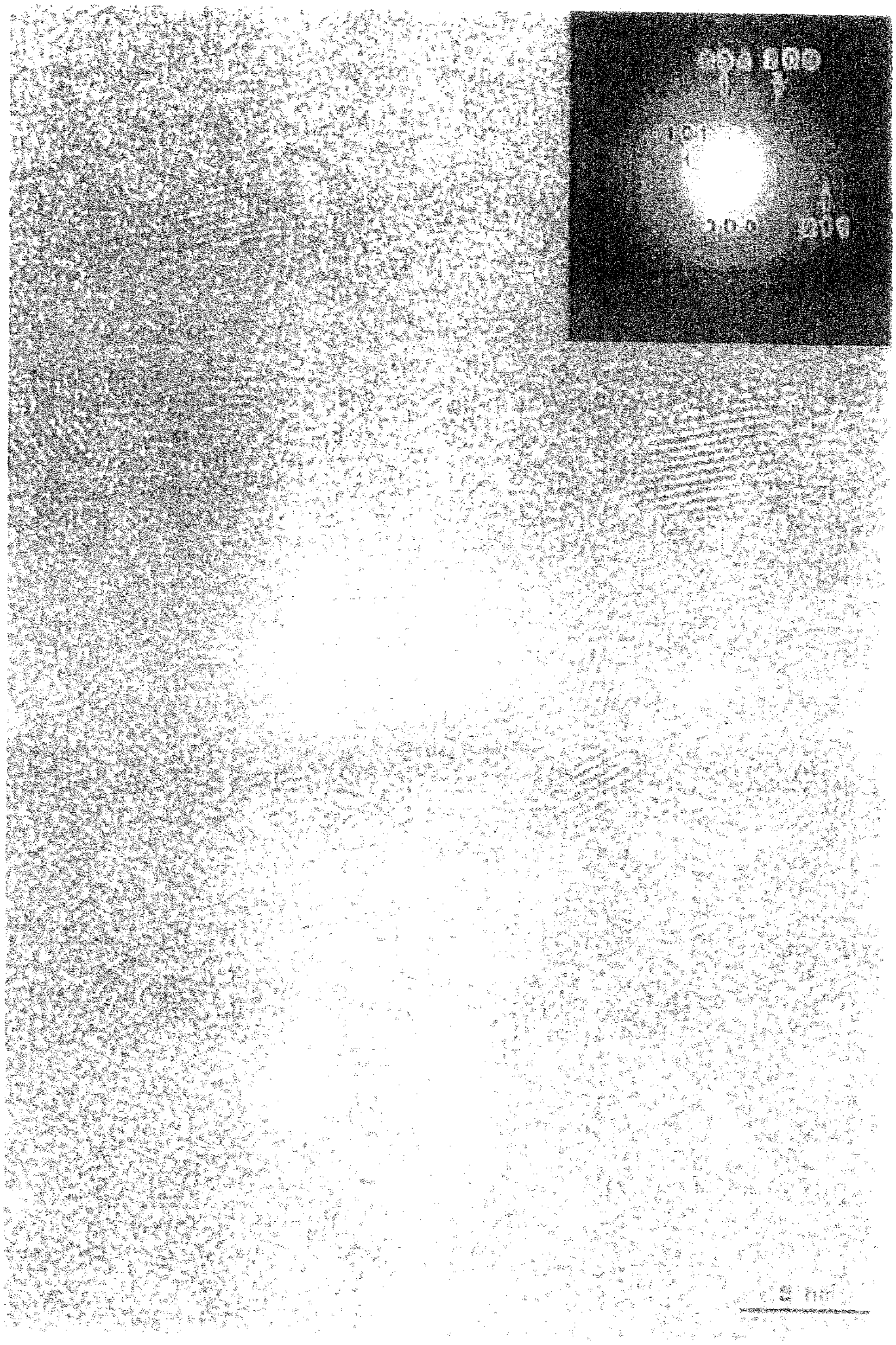

FIG. 16

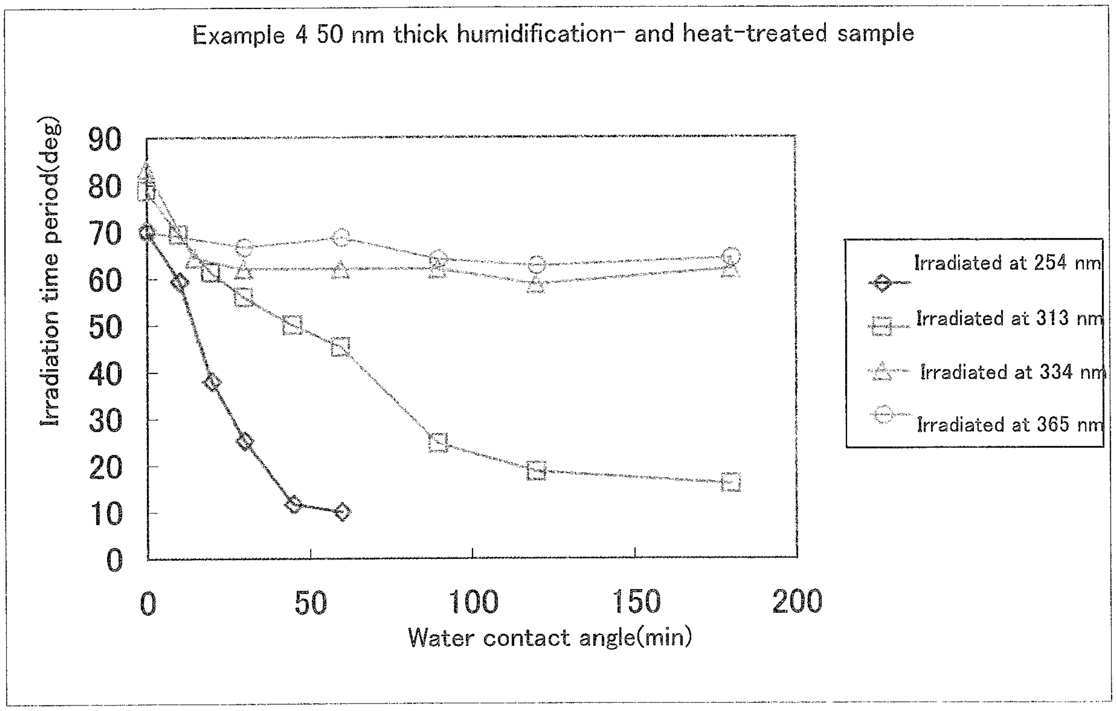
Example 4 50 nm thick humidification- and heat-treated sample
Irradiation time period(deg)
90
80
70
60
50
40
30
20
10
0
0
50
100
150
200
Water contact angle(min)
Irradiated at 254 nm
Irradiated at 313 nm
Irradiated at 334 nm
Irradiated at 365 nm

FIG. 17

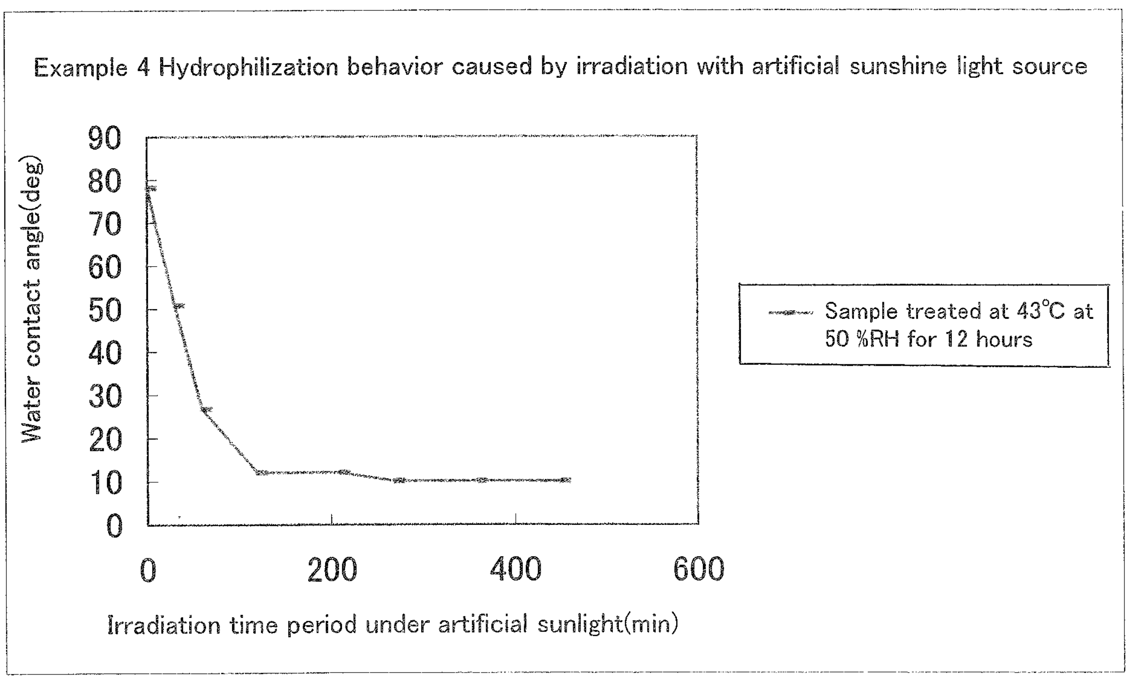
Example 4 Hydrophilization behavior caused by irradiation with artificial sunshine light source
Water contact angle(deg)
90
80
70
60
50
40
30
20
10
0
0
200
400
600
Irradiation time period under artificial sunlight(min)
Sample treated at 43°C at 50 %RH for 12 hours

FIG. 1 8

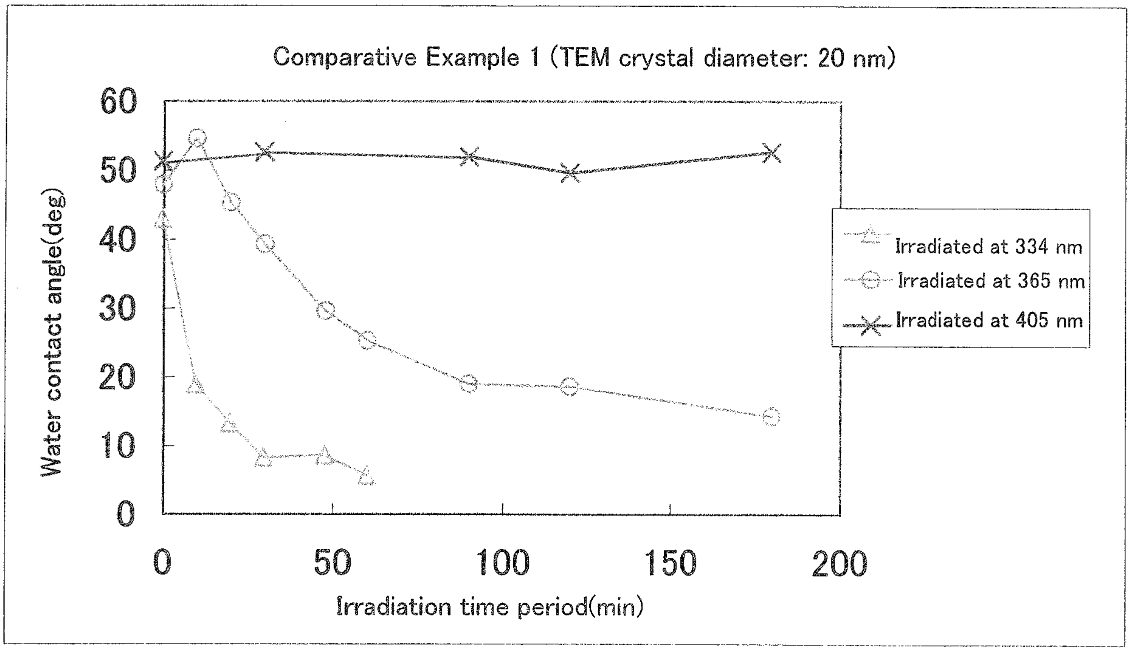
Comparative Example 1 (TEM crystal diameter: 20 nm)
Water contact angle(deg)
60
50
40
30
20
10
0
0
50
100
150
200
Irradiation time period(min)
Irradiated at 334 nm
Irradiated at 365 nm
Irradiated at 405 nm

FIG. 1 9

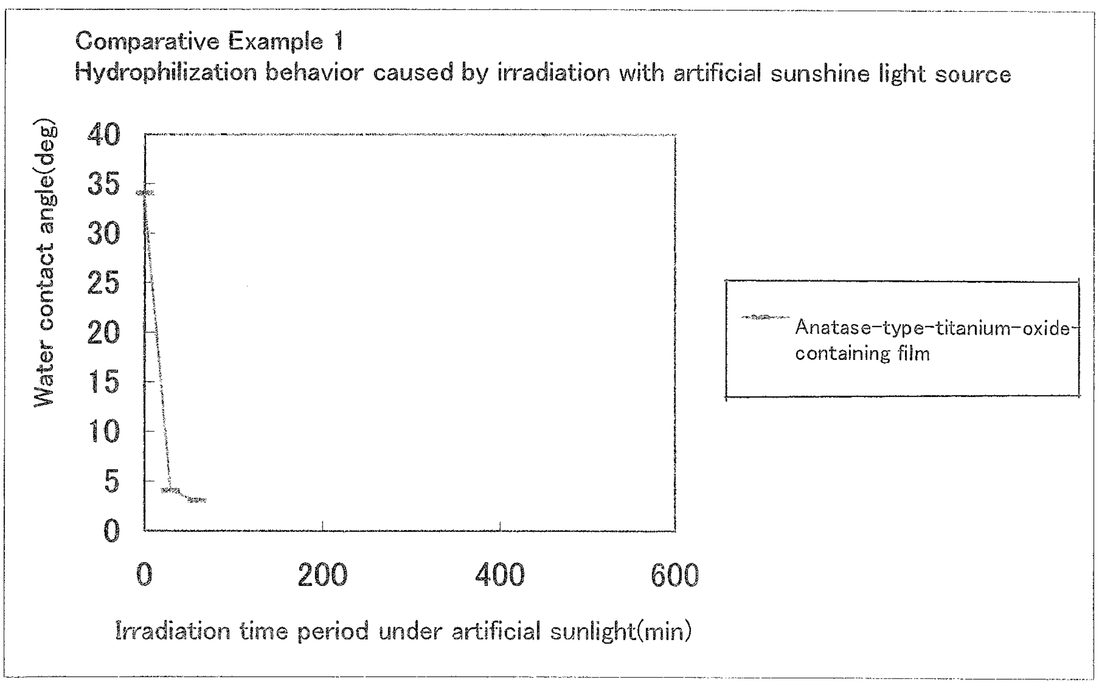
Comparative Example 1
Hydrophilization behavior caused by irradiation with artificial sunshine light source
Water contact angle(deg)
40
35
30
25
20
15
10
5
0
0
200
400
600
Irradiation time period under artificial sunlight(min)
Anatase-type-titanium-oxide-containing film

FIG. 2 0

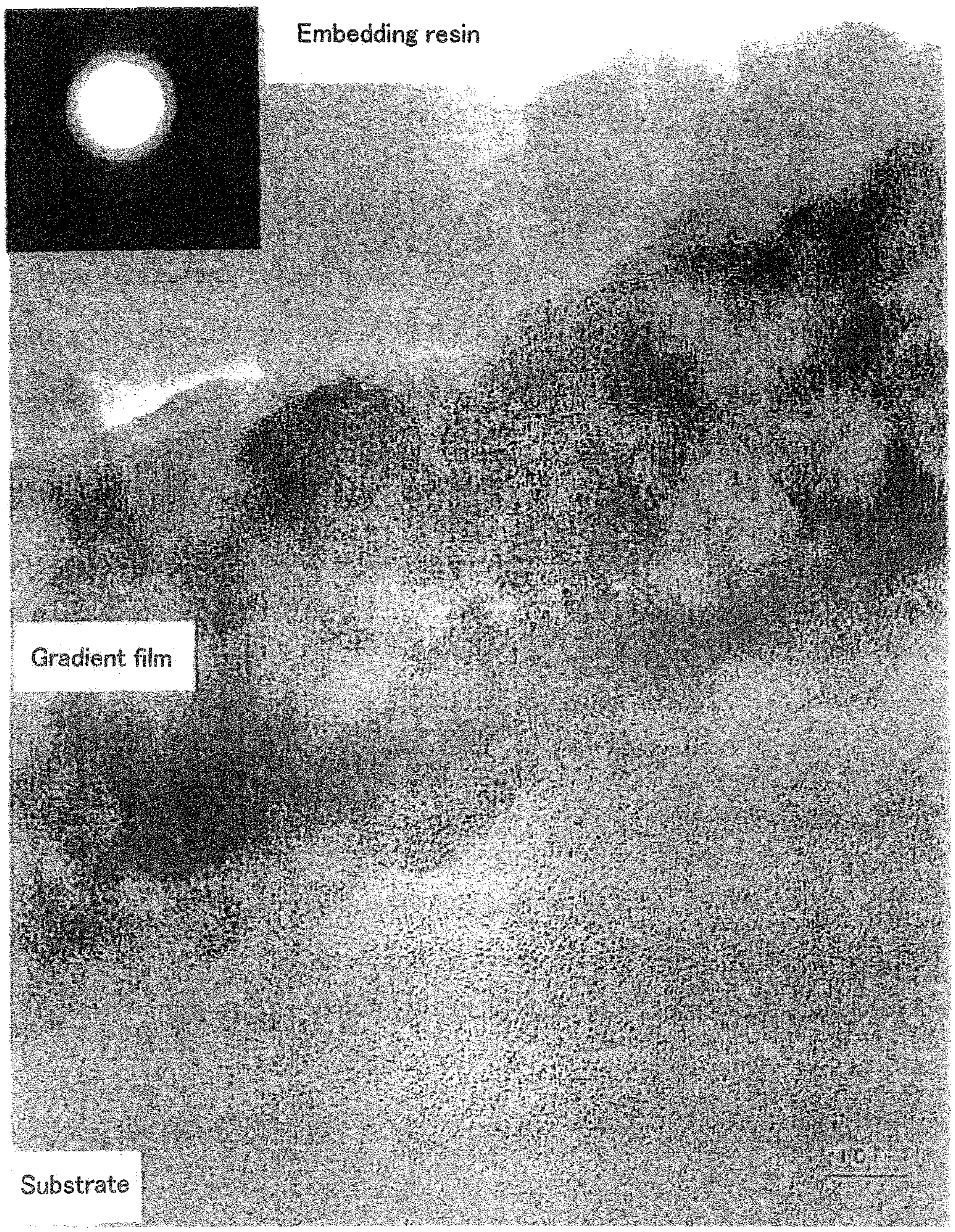

FIG. 2 1

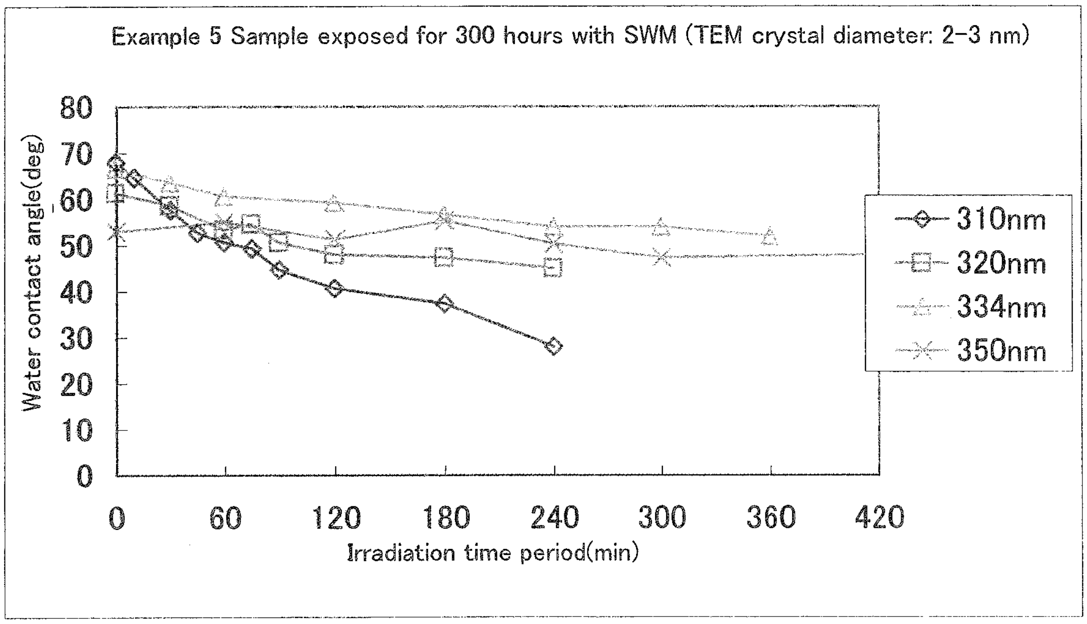
Example 5 Sample exposed for 300 hours with SWM (TEM crystal diameter: 2-3 nm)
Water contact angle(deg)
80
70
60
50
40
30
20
10
0
0
60
120
180
240
300
360
420
Irradiation time period(min)
310nm
320nm
334nm
350nm

FIG. 2 2

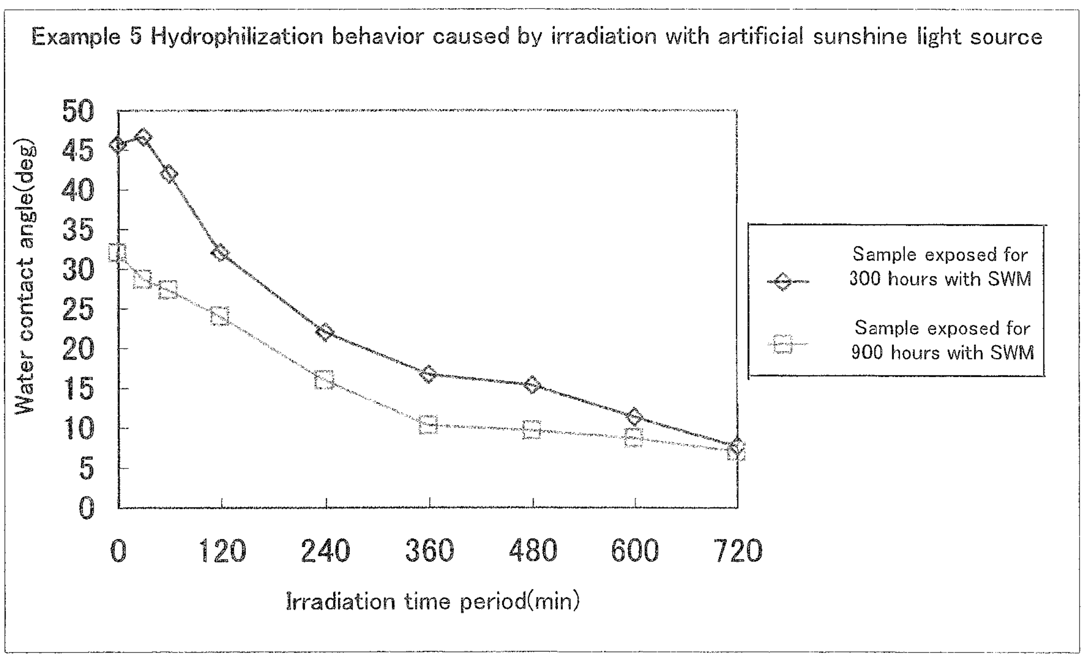
Example 5 Hydrophilization behavior caused by irradiation with artificial sunshine light source
Water contact angle(deg)
50
45
40
35
30
25
20
15
10
5
0
0
120
240
360
480
600
720
Irradiation time period(min)
Sample exposed for 300 hours with SWM
Sample exposed for 900 hours with SWM

FIG. 2 3

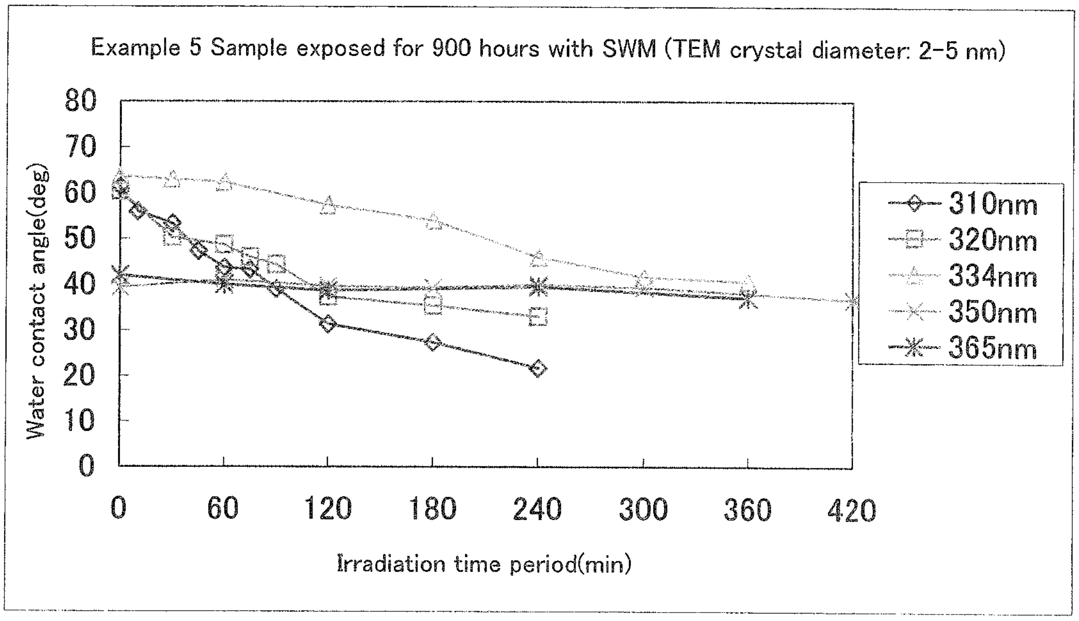
Example 5 Sample exposed for 900 hours with SWM (TEM crystal diameter: 2-5 nm)
Water contact angle(deg)
80
70
60
50
40
30
20
10
0
0
60
120
180
240
300
360
420
Irradiation time period(min)
310nm
320nm
334nm
350nm
365nm

FIG. 2 4

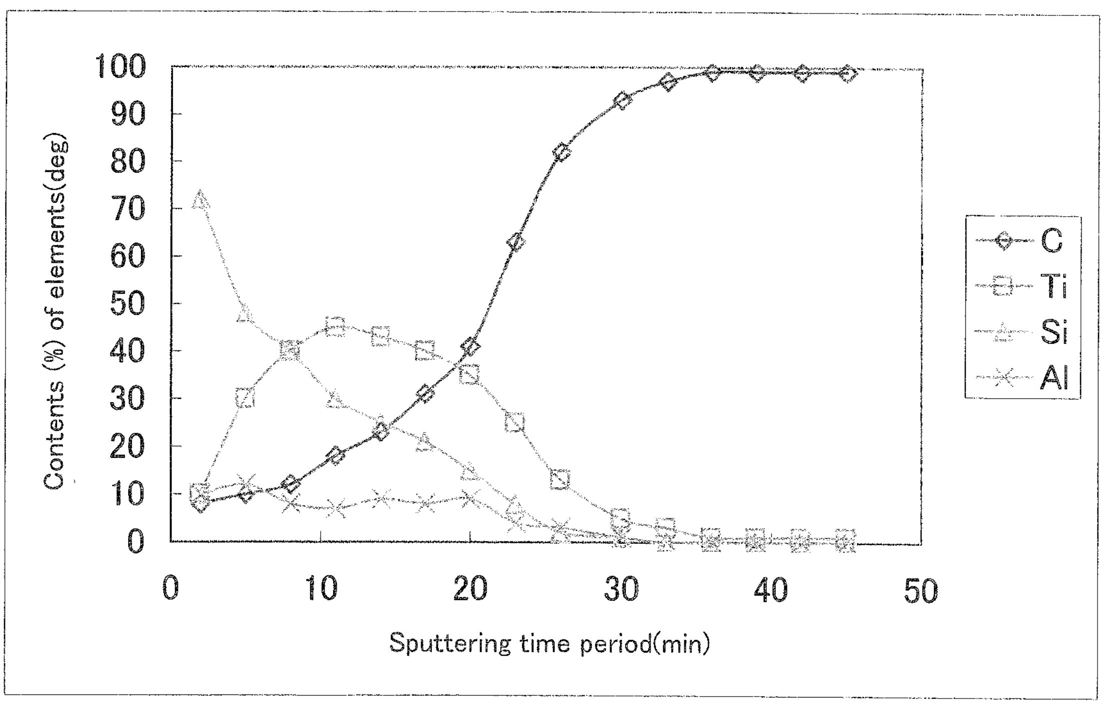
Contents (%) of elements(deg)
100
90
80
70
60
50
40
30
20
10
0
0
10
20
30
40
50
Sputtering time period(min)
C
Ti
Si
Al

FIG. 2 5

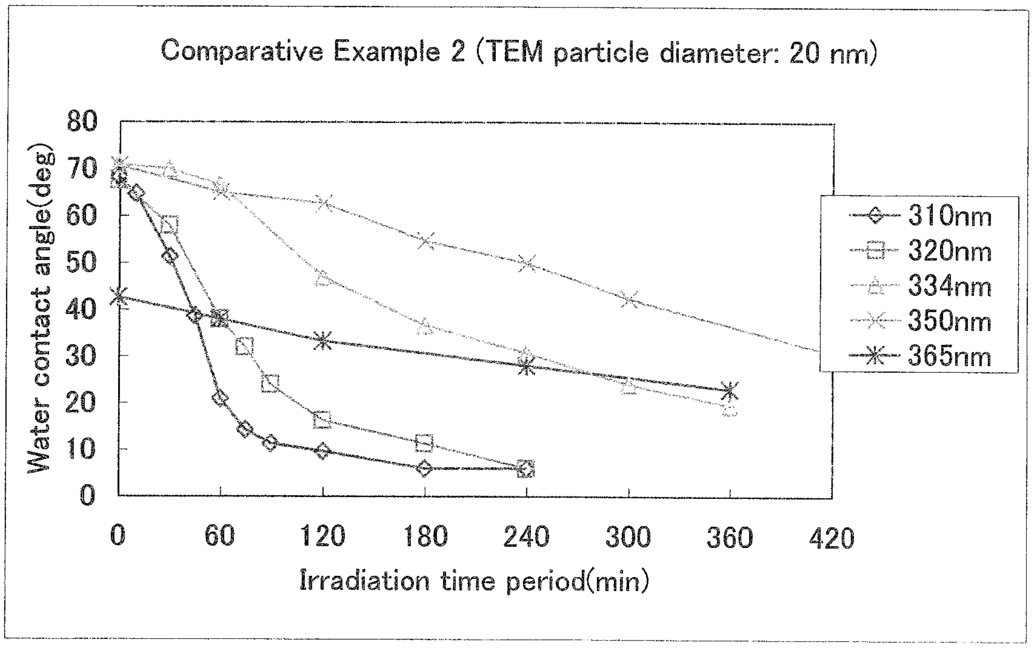
Comparative Example 2 (TEM particle diameter: 20 nm)
Water contact angle(deg)
80
70
60
50
40
30
20
10
0
0
60
120
180
240
300
360
420
Irradiation time period(min)
310nm
320nm
334nm
350nm
365nm

FIG. 2 6

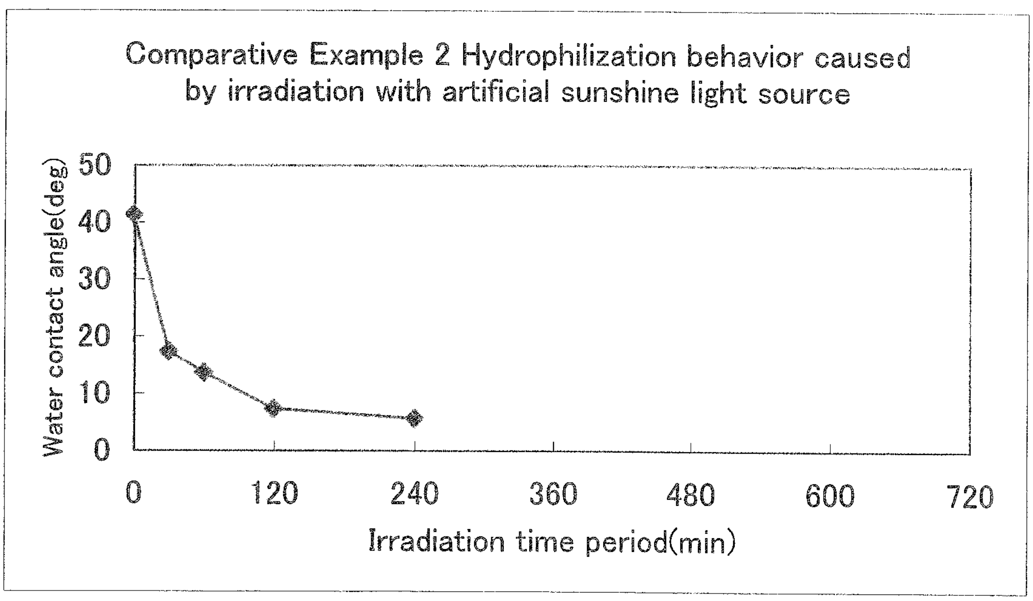
Comparative Example 2 Hydrophilization behavior caused by irradiation with artificial sunshine light source
Water contact angle(deg)
50
40
30
20
10
0
0
120
240
360
480
600
720
Irradiation time period(min)

FIG. 2 7

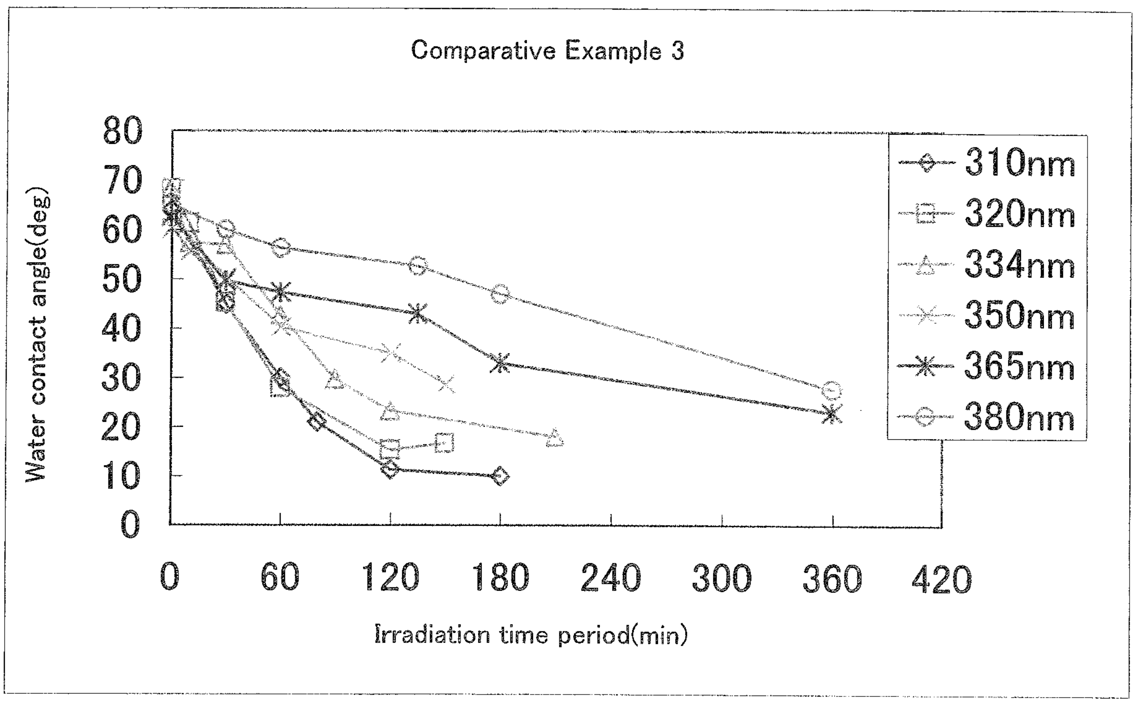
Comparative Example 3
Water contact angle(deg)
80
70
60
50
40
30
20
10
0
0
60
120
180
240
300
360
420
Irradiation time period(min)
310nm
320nm
334nm
350nm
365nm
380nm

FIG. 2 8

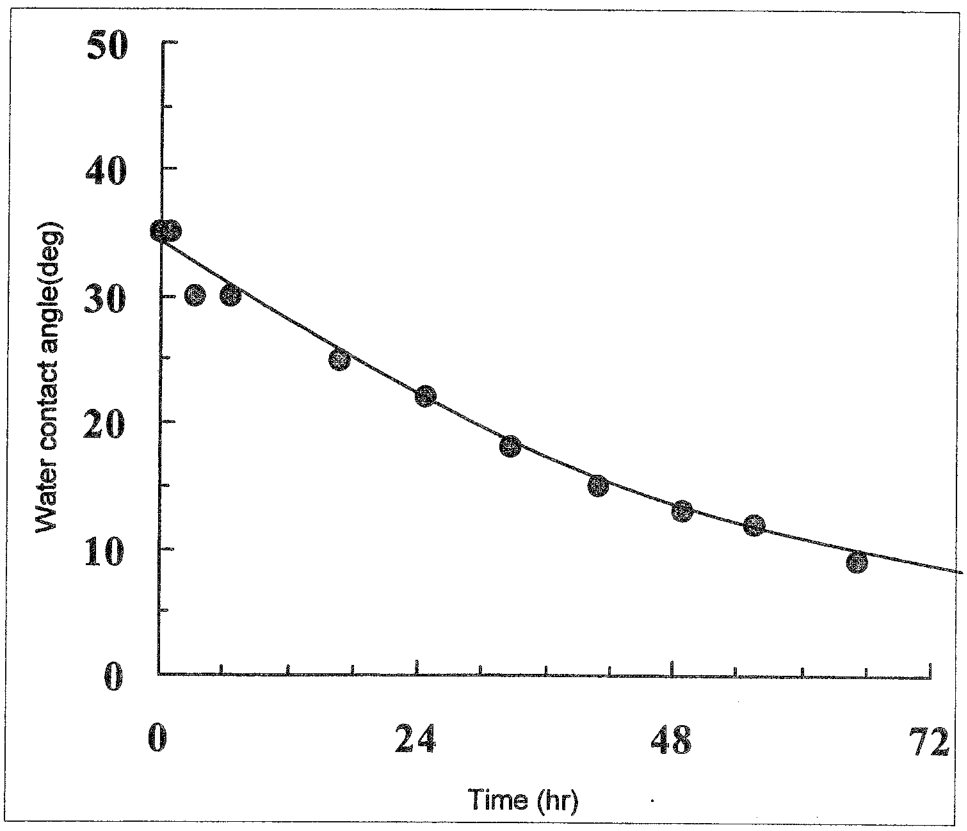

**INTERNATIONAL SEARCH REPORT**

International application No.
PCT/JP2008/069174

A. CLASSIFICATION OF SUBJECT MATTER
*B01J35/02*(2006.01)i, *B01J21/06*(2006.01)i, *B01J37/10*(2006.01)i

According to International Patent Classification (IPC) or to both national classification and IPC

B. FIELDS SEARCHED

Minimum documentation searched (classification system followed by classification symbols)
B01J21/00-38/74

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br><br>Y | JP 2004-91263 A (Nihon University), 25 March, 2004 (25.03.04), Claims 1, 2, 4; Par. Nos. [0020], [0021], [0045], [0046] (Family: none) | 1,3-13, 15-17,19, 24-28<br>14,18,20,22, 23 |
| X<br><br><br>Y | JP 2003-261330 A (Hitachi Chemical Co., Ltd.), 16 September, 2003 (16.09.03), Claims 1, 21; Par. Nos. [0023], [0024] (Family: none) | 1,3-13, 15-17,19, 24-28<br>14,18,20,22, 23 |
| X<br><br><br>Y | JP 2001-262007 A (Mitsubishi Gas Chemical Co., Inc.), 26 September, 2001 (26.09.01), Claims 1, 10; Par. Nos. [0026], [0035] (Family: none) | 1,3-13, 15-17,19, 24-28<br>14,18,20,22, 23 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 26 December, 2008 (26.12.08) | 20 January, 2009 (20.01.09) |
| Name and mailing address of the ISA/<br>Japanese Patent Office<br><br>Facsimile No. | Authorized officer<br><br><br>Telephone No. |

Form PCT/ISA/210 (second sheet) (April 2007)

**INTERNATIONAL SEARCH REPORT**

International application No.
PCT/JP2008/069174

C (Continuation). DOCUMENTS CONSIDERED TO BE RELEVANT

| Category* | Citation of document, with indication, where appropriate, of the relevant passages | Relevant to claim No. |
|---|---|---|
| X<br><br><br>Y | JP 2001-219496 A (Toto Ltd.),<br>14 August, 2001 (14.08.01),<br>Claims 1, 2, 7 to 9; Par. No. [0021]<br>(Family: none) | 1,3-13,<br>15-17,19,<br>24-28<br>14,18,20,22,<br>23 |
| X<br><br><br>Y | JP 2000-129176 A (JSR Corp.),<br>09 May, 2000 (09.05.00),<br>Claim 1; Par. Nos. [0018], [0061]<br>(Family: none) | 1,3-13,<br>15-17,19,<br>24-28<br>14,18,20,22,<br>23 |
| X<br><br><br>Y | WO 1998/003607 A1 (Toto Ltd.),<br>29 January, 1998 (29.01.98),<br>Claim 1; page 6, lines 23 to 24; page 7,<br>line 25 to page 8, line 2; page 10, lines 6 to<br>19; page 21, lines 6 to 11<br>& US 6165256 A & EP 913447 A1 | 1,3-13,<br>15-17, 19,<br>24-28<br>14,18,20,22,<br>23 |
| Y | JP 2007-1088 A (Ube-Nitto Kasei Co., Ltd.),<br>11 January, 2007 (11.01.07),<br>Claims 1, 4 to 7, 9 to 11<br>& WO 2006/137173 A1 | 14,18,20 |
| Y | JP 10-152323 A (Chubu Electric Power Co.,<br>Inc.),<br>09 June, 1998 (09.06.98),<br>Claim 1; Par. Nos. [0028], [0029]<br>& US 6027775 A & US 6537517 B1<br>& EP 832847 A1 | 22,23 |

Form PCT/ISA/210 (continuation of second sheet) (April 2007)

**INTERNATIONAL SEARCH REPORT**

International application No.
PCT/JP2008/069174

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

Claim 1 (and claims 3-20 and 22-28) relates to a photocatalytic film having the rate of hydrophilization recited in claim 1. Claim 2 relates to a photocatalytic film having the particle recited in claim 2. Claim 21 relates to a photocatalytic film having the nanotube recited in claim 21.

These inventions cannot be regarded as one invention, or as a group of inventions so linked as to form a single general inventive concept.

(A photocatalytic film itself is obviously known, and therefore claims 1-28 cannot be regarded as having the same or corresponding special technical feature(s) in the meaning within PCT Rule 13.2, second sentence.)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:
1, 3-20, 22-28

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9629375 A
- JP 2000345320 A
- JP 2002097013 A
- JP 2005131640 A
- JP 3484470 B
- JP 10152323 A
- JP 2001270022 A